# EUROPEAN PATENT APPLICATION

(11) **EP 4 510 279 A1**
(43) Date of publication of application: **19.02.2025**
(21) Application number: 22939209.7
(22) Date of filing: 29.04.2022
(51) Int. Cl.: H01M 10/0567

(54) **SECONDARY BATTERY AND BATTERY MODULE COMPRISING SAME, BATTERY PACK, AND ELECTRICAL DEVICE**

(71) Applicant: Contemporary Amperex Technology (Hong Kong) Limited, Central, Central And Western District (HK)
(72) Inventor: ZHANG, Limei, Ningde, Fujian 352100 (CN); CHEN, Peipei, Ningde, Fujian 352100 (CN); ZOU, Hailin, Ningde, Fujian 352100 (CN); LIU, Jiao, Ningde, Fujian 352100 (CN)
(74) Representative: Gong, Jinping
(86) International application number: PCT/CN2022/090270
(87) International publication number: WO 2023/206360

(57) **Abstract**

This application provides a secondary battery, and providing a battery module, a battery pack, and a powder device comprising the same. The secondary battery includes a positive electrode plate and a non-aqueous electrolytic solution, in which the positive electrode plate includes a positive electrode active material having a core-shell structure, said positive electrode active material includes an inner core and a shell covering the core, said core has a chemical formula of Li₁₊ₓMn_{1-y}A_{y}P_{1-z}R_{z}O₄, said shell includes a first coating layer covering said core, a second coating layer covering said first coating layer, and a third coating layer covering said second coating layer, said non-aqueous electrolytic solution includes a first additive selected from one or more of the compounds shown in formulae 1-A to 1-D. The secondary battery of the present application can have a relatively high energy density, and also a good rate performance, cycling performance, storage performance and safety performance. 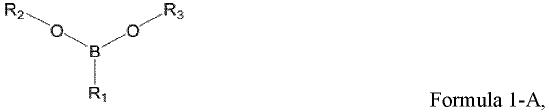 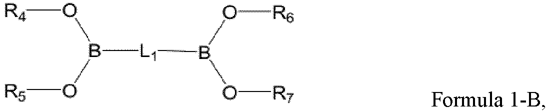 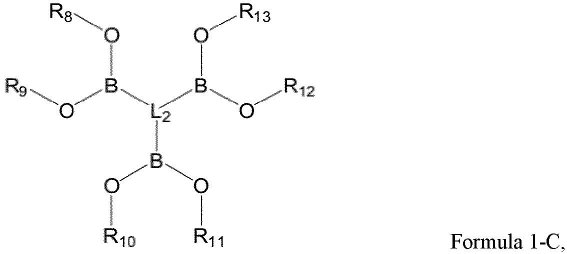 and

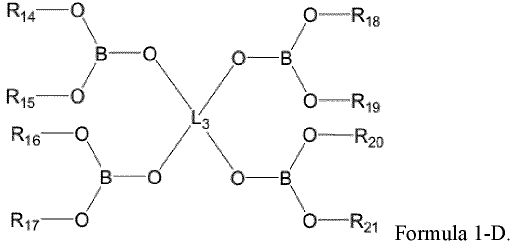

## Description

### TECHNICAL FIELD

The present application belongs to the technical field of battery, in particular to a secondary battery and a battery module, a battery pack and an electrical device comprising the same.

### BACKGROUND

In recent years, secondary batteries have been widely used in energy storage power systems such as hydro, thermal, wind and solar power plants, as well as electric tools, electric bicycles, electric motorcycles, electric vehicles, military equipment, aerospace and many other fields. With the application and promotion of secondary batteries, their safety performances are receiving more and more attention. Lithium manganese phosphate has become one of the most popular positive electrode active materials due to its high capacity, good safety performance and abundant raw material sources, however, lithium manganese phosphate is prone to manganese ion leaching out during charging, resulting in rapid capacity decay, thereby constraining its commercialization.

### SUMMARY

An object according to the present application is to provide a secondary battery and a battery module, a battery pack and an electrical device containing the same, aiming to enable the secondary battery to have a relatively high energy density, and a good rate performance, cycling performance, storage performance and safety performance.

A first aspect according to the present application provides a secondary battery, comprising a positive electrode plate and a non-aqueous electrolytic solution, wherein
the positive electrode plate comprises a positive electrode active material having a core-shell structure, said positive electrode active material comprising a core and a shell covering the core, wherein
   said core has a chemical formula of Li₁₊ₓMn_{1-y}A_{y}P_{1-z}R_{z}O₄, in which
      x is any value in the range of from -0.100 to 0.100,
      y is any value in the range of from 0.001 to 0.500,
      z is any value in the range of from 0.001 to 0.100,
      A is one or more element(s) selected from the group consisting of Zn, Al, Na, K, Mg, Mo, W, Ti, V, Zr, Fe, Ni, Co, Ga, Sn, Sb, Nb, and Ge, and optionally is one or more element(s) selected from the group consisting of Fe, Ti, V, Ni, Co, and Mg,
      R is one or more element(s) selected from the group consisting of B, Si, N, and S, and optionally is one or more element(s) selected from the group consisting of B, Si, N and S, and
      x, y and z satisfy the condition that the core as a whole is electrically neutral;
   said shell comprises a first coating layer covering said core, a second coating layer covering
said first coating layer, and a third coating layer covering said second coating layer, wherein
   said first coating layer comprises a crystalline pyrophosphate LiₐMP₂O₇ and/or M_{b}(P₂O₇)_{c}, in which
      0 ≤ a ≤ 2, 1 ≤ b ≤ 4, 1 ≤ c ≤ 6, and a, b and c satisfy the condition that the crystalline pyrophosphate LiₐMP₂O₇ or M_{b}(P₂O₇)_{c} is electrically neutral,
      M, at each occurrence in said crystalline pyrophosphate LiₐMP₂O₇ and M_{b}(P₂O₇)_{c}, each independently is one or more element(s) selected from the group consisting of Fe, Ni, Mg, Co, Cu, Zn, Ti, Ag, Zr, Nb and Al,
   said second coating layer comprises crystalline phosphate XPO₄, in which X is one or more element(s) selected from the group consisting of Li, Fe, Ni, Mg, Co, Cu, Zn, Ti, Ag, Zr, Nb and Al; and
   said third coating layer is carbon; and
said non-aqueous electrolytic solution comprises a first additive including one or more of the compounds shown in formulae 1-A to 1-D, 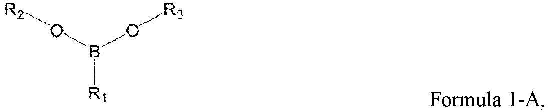 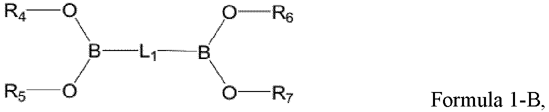 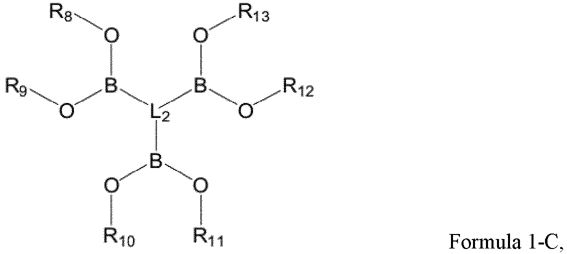 and 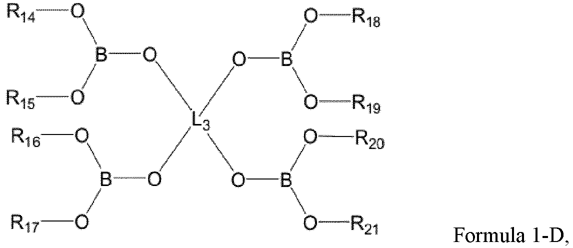 in which
   R₁ represents a hydrogen atom or at least one selected from the group consisting of hydroxyl, C1-C18 monovalent alkyl, C1-C18 monovalent alkoxy, C2-C18 monovalent alkoxy alkyl, C3-C18 monovalent cycloalkyl, C2-C18 monovalent heterocyclic alkyl, C6-C18 monovalent aryl, C7-C18 monovalent aryl alkyl, C7-C18 monovalent alkylaryl, C6-C18 monovalent aryloxy, C7-C18 monovalent aryloxy alkyl, C12-C18 monovalent aryl ether group, C2-C18 monovalent heteroaryl, C3-C18 monovalent heteroaryl alkyl, C3-C18 monovalent alkyl heteroaryl, and C1-C18 monovalent silyl;
   R₂ to R₂₁ each independently represent a hydrogen atom or at least one selected from the group consisting of C1-C18 monovalent alkyl, C2-C18 monovalent alkoxyalkyl, C3-C18 monovalent cycloalkyl, C2-C18 monovalent oxocycloalkyl, C6-C18 monovalent aryl, C7-C18 monovalent aryl alkyl, C7-C18 monovalent alkylaryl, C7-C18 monovalent aryloxyalkyl, C12-C18 monovalent aryl ether group, C2-C18 monovalent heteroaryl, C3-C18 monovalent heteroaryl alkyl, C3-C18 monovalent alkyl heteroaryl, and C1-C18 monovalent silyl, and when R₂ and R₃ both are hydrogen atoms, R₁ is not hydroxyl;
   optionally, R₂ and R₃ can further bond with each other to form a ring structure, R₄ and R₅ can further bond with each other to form a ring structure, R₆ and R₇ can further bond with each other to form a ring structure, R₈ and R₉ can further bond with each other to form a ring structure, R₁₀ and R₁₁ can further bond with each other to form a ring structure, R₁₂ and R₁₃ can further bond with each other to form a ring structure, R₁₄ and R₁₅ can further bond with each other to form a ring structure, R₁₆ and R₁₇ can further bond with each other to form a ring structure, R₁₈ and R₁₉ can further bond with each other to form a ring structure, and R₂₀ and R₂₁ can further bond with each other to form a ring structure;
   L₁ represents an oxygen atom or at least one selected from the group consisting of C1-C18 divalent alkyl, C1-C18 oxodialkyl, C6-C18 divalent cycloalkyl, C6-C18 divalent oxo cycloalkyl, C6-C18 divalent aryl, C7-C18 divalent arylalkyl, C7-C18 divalent alkyl aryl, C6-C18 divalent aryloxy, C7-C18 divalent aryloxyalkyl, C12-C18 divalent aryl ether group, C2-C18 divalent heteroaryl, C3-C18 divalent heteroaryl alkyl, and C3-C18 divalent alkyl heteroaryl;
   L₂ represents at least one selected from the group consisting of C1-C18 trivalent alkyl, C1-C18 oxo trivalent alkyl, C6-C18 trivalent cycloalkyl, C6-C18 trivalent oxocycloalkyl, C6-C18 trivalent aryl, C7-C18 trivalent arylalkyl, C7-C18 trivalent alkylaryl, C6-C18 trivalent aryloxy, C7-C18 trivalent aryloxyalkyl, C12-C18 trivalent aryl ether group, C3-C18 trivalent heteroaryl, C3-C18 trivalent heteroaryl alkyl, and C3-C18 trivalent alkyl heteroaryl; and
   L₃ represents at least one selected from the group consisting of C1-C18 tetravalent alkyl, C1-C18 oxo tetravalent alkyl, C6-C18 tetravalent cycloalkyl, C6-C18 tetravalent oxo cycloalkyl, C6-C18 tetravalent aryl, C7-C18 tetravalent arylalkyl, C7-C18 tetravalent alkylaryl, C7-C18 tetravalent aryloxyalkyl, C12-C18 tetravalent aryl ether group, C4-C18 tetravalent heteroaryl, C4-C18 tetravalent heteroaryl, and C4-C18 tetravalent alkyl heteroaryl.

After conducting extensive research, the inventors have found that by modifying lithium manganese phosphate by means of doping and coating layer lithium manganese phosphate with multiple layers, a new type of positive electrode active material with a core-shell structure can be obtained. The positive electrode active material can achieve reductions in leaching out of manganese ion and in lattice change rate, thereby improving the rate performance, cycling performance, and storage performance of secondary battery safety performance and also improving capacity exertion of secondary batteries. When the non-aqueous electrolytic solution contains the first additive represented by Formula 1-A to Formula 1-D, it can form a dense and stable interface film on the surface of the positive active material during the secondary battery charging process, reduce the dissolution of the first and second coating layer s, reduce the leaching-out of manganese ions, reduce the catalytic oxidation of the third coating layer under high voltage, and reduce the consumption of non-aqueous electrolytic solution and active lithium ions. Therefore, the secondary battery of this application can simultaneously possess high energy density, good rate performance, cycling performance, storage performance, and safety performance.

In any embodiment according to the present application, R₂ and R₃ bond with each other to form a ring structure.

In any embodiment according to the present application, at least one of R₁ to R₃ represents C3-C18 monovalent cycloalkyl, C2-C18 monovalent oxocycloalkyl, C6-C18 monovalent aryl, C7-C18 monovalent arylalkyl, C7-C18 monovalent alkylaryl, C7-C18 monovalent aryloxyalkyl, C12-C18 monovalent aryl ether group, C2-C18 monovalent heteroaryl, C3-C18 monovalent heteroarylalkyl, or C3-C18 monovalent alkyl heteroaryl; and optionally, R₁ to R3 each independently represent C6-C18 monovalent aryl, C7-C18 monovalent arylalkyl, C7-C18 monovalent alkylaryl, C7-C18 monovalent aryloxyalkyl, C12-C18 monovalent aryl ether group, C2-C18 monovalent heteroaryl group, C3-C18 monovalent heteroaryl group, or C3-C18 monovalent alkyl heteroaryl group.

When R₁ to R₃ represent the above substituents, it is helpful to form an interface film containing cross-linked macromolecular polymer on the surface of the positive active material, further reduce the dissolution of the first and second coating layer s, further reduce the catalytic oxidation of the third coating layer, reduce the dissolution of manganese ions and the consumption of non-aqueous electrolytic solution and active lithium ions, so as to further enhance the improvement effect on the cycling performance and storage performance of the secondary battery.

In any embodiment according to the present application, R₄ and R₅, and R₆ and R₇, at least one pair of them, bond with each other to form a ring structure.

In any embodiment according to the present application, L₁ represents an oxygen atom, and R₄ to R₇ each independently represent C6-C18 monovalent aryl, C7-C18 monovalent arylalkyl, C7-C18 monovalent alkylaryl, C7-C18 monovalent aryloxyalkyl, C12-C18 monovalent aryl ether group, C2-C18 monovalent heteroaryl, C3-C18 monovalent heteroarylalkyl, or C3-C18 monovalent alkyl heteroaryl.

In any embodiment according to the present application, R₈ and R₉, R₁₀ and R₁₁, and R₁₂ and R₁₃, at least one pair of them, bond to form a ring structure.

In any embodiment according to the present application, L₂ represents C6-C18 trivalent aryl, C7-C18 trivalent arylalkyl, C7-C18 trivalent alkylaryl, C6-C18 trivalent aryloxy, C7-C18 trivalent aryloxyalkyl, C12-C18 trivalent aryl ether group, C3-C18 trivalent heteroaryl group, C3-C18 trivalent heteroaryl alkyl, or C3-C18 trivalent alkyl heteroaryl.

In any embodiment according to the present application, R₁₄ and R₁₅, R₁₆ and R₁₇, R₁₈ and R₁₉, R₂₀ and R₂₁, at least on pair of them, bond to form a ring structure.

In any embodiment according to the present application, L₃ represents C6-C18 tetravalent aryl, C7-C18 tetravalent arylalkyl, C7-C18 tetravalent alkylaryl, C7-C18 tetravalent aryloxyalkyl, C12-C18 tetravalent aryl ether group, C4-C18 tetravalent heteroaryl group, C4-C18 tetravalent heteroaryl, or C4-C18 tetravalent alkyl heteroaryl.

In any embodiment according to the present application, the first additive comprises at least one of the following compounds:

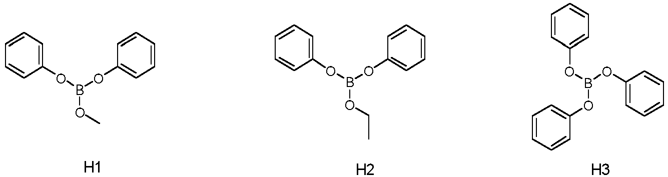

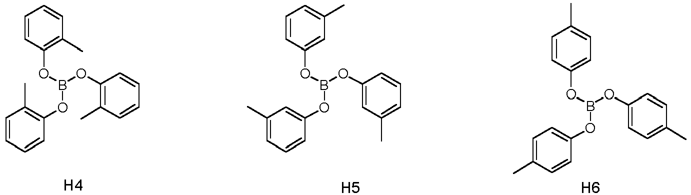

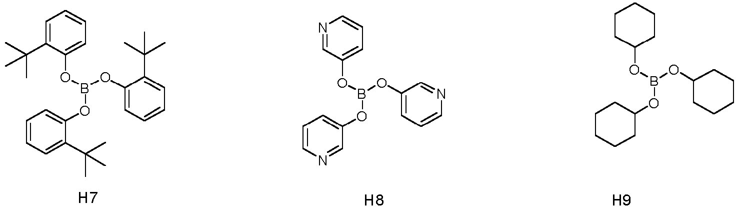

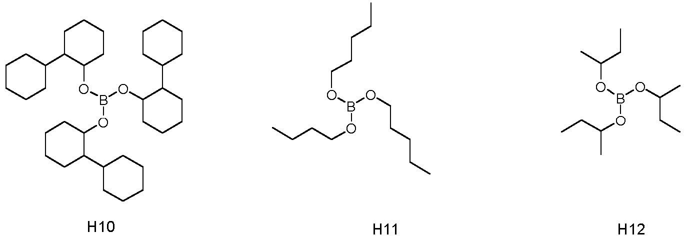

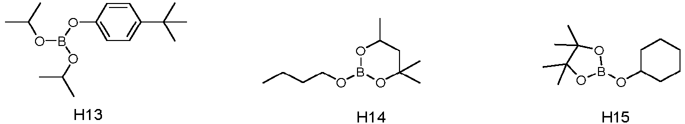

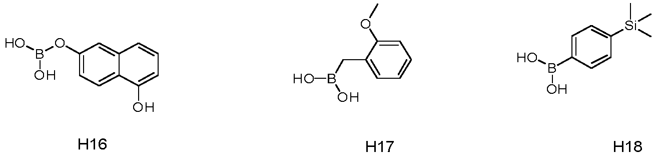

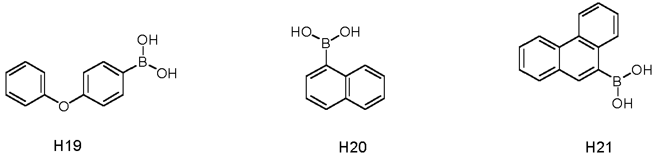

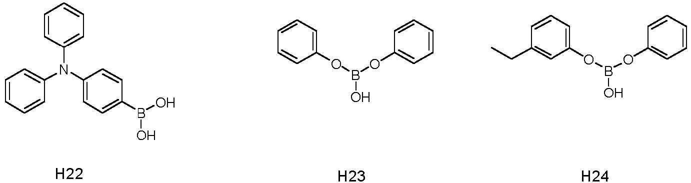

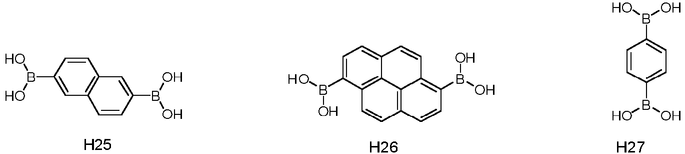

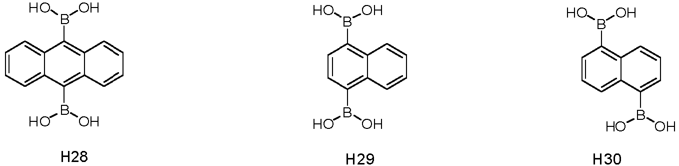

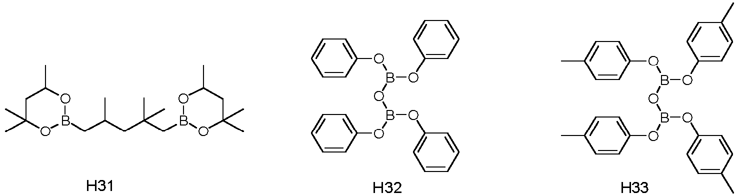

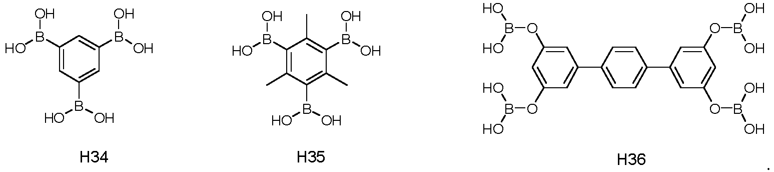

The inventors have found in the research process that taking at least one of the above compounds H1 to H36 as the first additive can form a more compact and stable interface film on the surface of the positive active material, which helps to further reduce the dissolution of the first and second coating layer s, further reduce the catalytic oxidation of the third coating layer, and further reduce the dissolution of manganese ions and the consumption of non-aqueous electrolytic solution and active lithium ions; this can further enhance the improvement effect on the cycling performance and storage performance of secondary batteries.

Optionally, the first additive comprises at least one selected from the group consisting of H1 to H10, H13 to H15, H31 to H33, and more optionally, the first additive comprises at least one selected from the group consisting of H1 to H8 and H32 to H33. These first additives help to form an interface film containing cross-linked macromolecular polymer on the surface of the positive active material, further reduce the dissolution of the first and second coating layer s, further reduce the catalytic oxidation of the third coating layer, thus further reducing the dissolution of manganese ions and the consumption of a non-aqueous electrolytic solution and active lithium ions, which can further enhance the improvement of the secondary battery cycling performance and storage performance.

In any embodiment according to the present application, the non-aqueous electrolytic solution further comprises a second additive comprising one or more selected from the group consisting of sulfonic acid lactones, cyclic sulfate, lithium difluorophosphate, lithium difluorooxalate phosphate, and lithium difluorooxalate borate. When the non-aqueous electrolytic solution comprises both the first and second additives, it helps to significantly improve the cycling and storage performance of the secondary battery, while also enhancing the capacity exertion and rate performance of the secondary battery.

In any embodiment according to the present application, the sulfonic acid lactones comprise at least one of the compounds as represented by Formula 2-A, 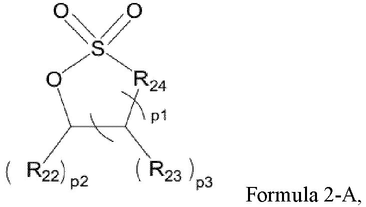 in which
p1 represents 1, 2, or 3, p2 represents 1 or 2, and p3 represents 1 or 2;
R₂₂, at each occurrence, independently represents a hydrogen atom, halogen atom, carboxylic ester group, sulfonic ester group, C1-C6 monovalent alkyl, C1-C6 monovalent haloalkyl, C1-C6 monovalent alkoxy, C1-C6 monovalent haloalkoxy, C2-C6 monovalent alkenyl, or a chain structure or a ring structure formed from more than one of the aforementioned groups linked together with single bonds, and when R₂₂ represents the ring structure, it is bonded to the ring of Formula 2-A via a single bond or shares a carbon atom with the ring of Formula 2-A to form a spiral-ring compound;
R₂₃, at each occurrence, independently represents a hydrogen atom, halogen atom, carboxylic ester group, sulfonic ester group, C1-C6 monovalent alkyl, C1-C6 monovalent haloalkyl, C1-C6 monovalent alkoxy, C1-C6 monovalent haloalkoxy, C2-C6 monovalent alkenyl, or a chain structure or a ring structure formed from more than one of the aforementioned groups linked together with single bonds, and when R₂₃ represents the ring structure, it is bonded to the ring of Formula 2-A via a single bond or shares a carbon atom with the ring of Formula 2-A to form a spiral-ring compound;
R₂₄ represents carbonyl or C(Y¹)₂, wherein Y₁ at each occurrence independently represents a hydrogen atom, halogen atom, carboxylic ester group, sulfonic ester group, C1-C6 monovalent alkyl group, C1-C6 monovalent haloalkyl group, C1-C6 monovalent alkoxy group, C1-C6 monovalent haloalkoxy group, C2-C6 monovalent alkenyl group, C6-C12 monovalent aryl group, or a combination thereof; and
optionally, R₂₂ and R₂₃ can further bond with each other to form a ring structure.

Optionally, the sulfonic acid lactone comprises at least one of the following compounds:

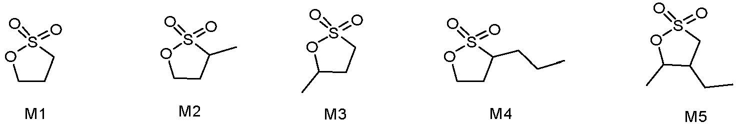

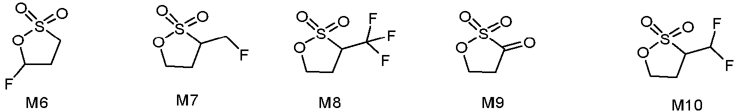

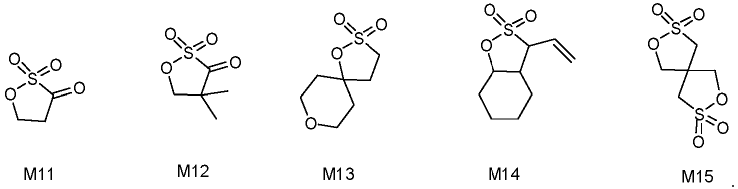

In any embodiment according to the present application, the cyclic sulfate comprises at least one of the compounds represented by Formula 2-B, 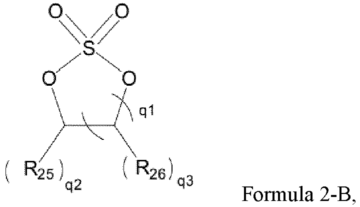 in which
q1 represents 1, 2, or 3, q2 represents 1 or 2, q3 represents 1 or 2.
R₂₅, at each occurrence, independently represents a hydrogen atom, halogen atom, carbonyl oxygen atom, carboxylate ester group, sulfate ester group, C1-C6 monovalent alkyl, C1-C6 monovalent haloalkyl, C1-C6 monovalent alkoxy, C1-C6 monovalent haloalkoxy, and C2-C6 monovalent alkenyl, or a chain structure or a ring structure formed from more than one of the aforementioned groups linked together with single bonds, and when R₂₅ represents the ring structure, it is bonded to the multi-ring of Formula 2-B via a single bond or shares a carbon atom with the multi-ring of Formula 2-B to form a spiral-ring compounds;
R₂₆, at each occurrence, independently represents a hydrogen atom, halogen atom, carboxylic ester group, sulfate group, C1-C6 monovalent alkyl group, C1-C6 monovalent haloalkyl, C1-C6 monovalent alkoxy, C1-C6 monovalent haloalkoxy, and C2-C6 monovalent alkenyl, or a chain structure or a ring structure formed from more than one of the aforementioned groups linked together with single bonds, and when R₂₆ represents the ring structure, it is bonded to the multi-ring of Formula 2-B via a single bond or shares a carbon atom with the multi-ring of Formula 2-B to form a spiral-ring compounds;
optionally, R₂₅ and R₂₆ can further bond with each other to form a ring structure.

Optionally, the cyclic sulfate comprises at least one of the following compounds:

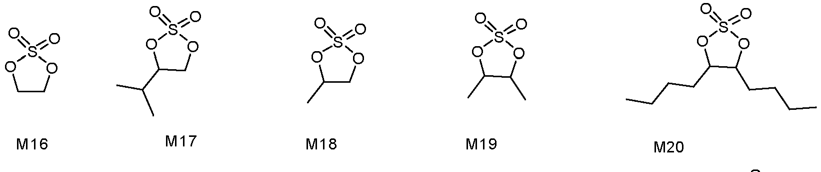

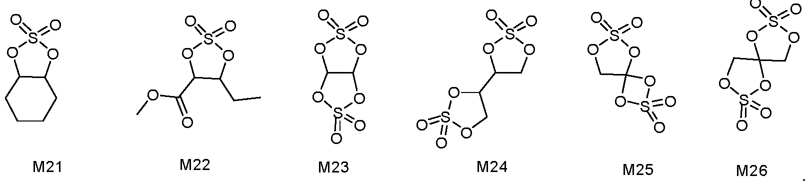

In any embodiment according to the present application, the first additive has an amount of W1 % by weight of from 0.01 to 20, optionally from 0.1 to 10, and more optionally from 0.3 to 5, based on the total weight of the non-aqueous electrolytic solution. This can reduce the dissolution of the first and second coating layer s, reduce the catalytic oxidation effect of the third coating layer, and not deteriorate the positive electrode interface impedance, thereby significantly improving the cycling and storage performance of the secondary battery, without affecting the capacity exertion and rate performance of the secondary battery.

In any embodiment according to the present application, the second additive an amount of W2 % by weight of from 0.01 to 20, optionally from 0.1 to 10, and more optionally from 0.3 to 5, based on the total weight of the non-aqueous electrolytic solution. This can effectively improve the capacity exertion and rate performance of secondary batteries.

In any embodiment according to the present application, W1/W2 is from 0.01 to 20, and optionally from 0.01 to 10. This can further enhance the improvement effect on the cycling performance and storage performance of the secondary battery, while enhancing the capacity exertion and rate performance of the secondary battery.

In any embodiment according to the present application, the first coating layer has a coating layer amount of C1 % by weight of from greater than 0 to less than or equal to 6, optionally from greater than 0 to less than or equal to 5.5, and more optionally from greater than 0 to less than or equal to 2, based on the weight of the core.

In any embodiment according to the present application, the second coating layer has a coating layer amount of C2 % by weight of from greater than 0 to less than or equal to 6, optionally from greater than 0 to less than or equal to 5.5, and more optionally from 2 to 4, based on the weight of the core.

In any embodiment according to the present application, the third coating layer has a coating layer amount of C3 % by weight of from greater than 0 to less than or equal to 6, optionally from greater than 0 to less than or equal to 5.5, and more optionally from greater than 0 to less than or equal to 2, based on the weight of the core.

The coating amounts of the three-layer coating layer fall preferably within the above ranges, which can fully cover the core and further improve the dynamic performance, cycling performance, storage performance, and safety performance of the secondary battery without sacrificing the capacity of the positive electrode active material.

In any embodiment according to the present application, (W1+W2)/(C1+C2+C3) is from 0.001 to 2, and optionally from 0.01 to 1. This can significantly enhance the improvement effect on the cycling performance and storage performance of the secondary battery, while enhancing the capacity exertion and rate performance of the secondary battery.

In any embodiment according to the present application, the non-aqueous electrolytic solution further comprises a third additive comprising one or more selected from the group consisting of cyclic carbonate compounds having unsaturated bond(s), halogenated cyclic carbonate compounds, nitrile compounds, phosphoronitrile compounds, aromatic and halogenated aromatic compounds, isocyanate compounds, anhydride compounds, phosphite compounds, phosphate ester compounds, sulfite compounds or dimethyl disulfonate compounds. The third additive helps to form a more compact and stable interface film on the surface of the positive and/or negative active materials, thus helping to further improve at least one of the cycling performance, storage performance and magnification performance of the secondary battery.

In any embodiment according to the present application, the first coating layer has a thickness of from 1 nm to 10 nm. Under the circumstance, it is possible to avoid adverse effects on the dynamic performance of the material that may occur when it is too thick, and to avoid the problem of not effectively obstructing the migration of transition metal ions when it is too thin.

In any embodiment according to the present application, the second coating layer has a thickness of from 2 nm to 15 nm. Under the circumstance, the surface structure of the second coating layer is stable and has minimal side reactions with the electrolyte, thus effectively reducing interface side reactions and improving the high-temperature cycling performance and high-temperature storage performance of the secondary battery.

In any embodiment according to the present application, the third coating layer has a thickness of from 2 nm to 25 nm. Under the circumstance, the conductivity of the positive electrode active material can be improved and the compaction density of the positive electrode plate prepared using the positive electrode active material can be increased.

In any embodiment according to the present application, in the core, y and 1-y has a ratio of from 1:10 to 1:1, and optionally from 1:4 to 1:1. Under the circumstance, the cycling performance and rate performance of the secondary battery are further improved.

In any embodiment according to the present application, in the core, z and 1-z has a ratio of from 1:9 to 1:999, and optionally from 1:499 to 1:249. Under the circumstance, the cycling performance and rate performance of the secondary battery are further improved.

In any embodiment according to the present application, in the first coating layer, the crystalline pyrophosphate has a crystal plane spacing of from 0.293 nm to 0.470 nm, and has a crystal orientation (111) angle of from 18.00° to 32.00°.

In any embodiment according to the present application, in the core, in the second coating layer, the crystalline phosphate has a crystal plane spacing of from 0.244 nm to 0.425 nm, and has a crystal orientation (111) angle of from 20.00° to 37.00°.

The crystalline pyrophosphates and crystalline phosphates having crystal plane spacing and angle that fall within the range as mentioned above can more effectively suppress the lattice change rate and manganese ion dissolution of lithium manganese phosphate during lithiation and delithiation, so as to improve the high-temperature cycling performance and high-temperature storage performance of secondary batteries.

In any embodiment according to the present application, the carbon of the third coating layer is a mixture of SP2 carbon and SP3 carbon, optionally, the molar ratio of the SP2 carbon to SP3 carbon is any value in the range of from 0.1 to 10, optionally any value in the range of from 2.0 to 3.0. The present application improves the comprehensive performance of the secondary battery by limiting the molar ratio of the SP2 carbon to the SP3 carbon to the above range.

In any embodiment according to the present application, manganese is present a content of from 10 wt% to 35 wt%, optionally in the range of 15 wt% to 30 wt%, and more optionally in the range of 17 wt% to 20 wt%, based on the weight of the positive electrode active material. Thus, it is possible to effectively avoid problems such as poor structural stability of the positive electrode active material and density decline that may be caused if the manganese's content is too large, so as to improve the performance of the secondary battery in terms of cycling, storage, and compaction density, etc. In addition, it is also possible to avoid problems such as low voltage plateau that may be caused if the manganese's content is too small, so as to improve the energy density of the secondary battery.

In any embodiment according to the present application, phosphorus is present in a content of from 12 wt% to 25 wt%, optionally in the range of from 15 wt% to 20 wt%, based on the weight of the positive electrode active material. Thus, the following can be effectively avoided: if the content of the elemental phosphorus is too high, it may cause the covalency of P-O to be too strong and affect the conductivity of the small polarizers, thereby affecting the electrical conductivity of the positive electrode active material; if the content of the elemental phosphorus is too small, it may make the lattice structure of the pyrophosphate in the core, in the first coating layer, and/or in the second coating layer less stable, thereby affecting the positive electrode active material's overall stability.

In any embodiment according to the present application, the weight ratio of manganese to phosphorus is in the range of from 0.90 to 1.25, optionally in the range of from 0.95 to 1.20, based on the weight of the positive electrode active material. Thus, the following can be effectively avoided: if the weight ratio is too large, it may lead to an increase in the leaching out of manganese ions, which affects the stability of the positive electrode active material, the cycling performance and the storage performance of the secondary battery; if the weight ratio is too small, it may cause a decrease in the discharge voltage plateau, which results in a decrease in the energy density of the secondary battery.

In any embodiment according to the present application, before and after complete intercalation/deintercalation of lithium the positive electrode active material has a lattice change rate of 4% or less, optionally 3.8% or less, more optionally from 2.0% to 3.8%. Thus, the positive electrode active material can improve the capacity exertion and rate performance of the secondary battery.

In any embodiment according to the present application, the positive electrode active material has a Li/Mn anti-site defect concentration of 4% or less, optionally 2.2% or less, more optionally from 1.5% to 2.2%. By having the Li/Mn anti-site defect concentration within the above range, it is possible to avoid Mn²⁺ from hindering Li+ transmission, and at the same time enhance the capacity exertion and rate performance of the positive electrode active material.

In any embodiment according to the present application, the positive electrode active material has a compaction density of 2.2 g/cm³ or more, optionally between 2.2 g/cm³ and 2.8 g/cm³, at 3T. Thus, it is beneficial to improving the volumetric energy density of the secondary battery.

In any embodiment according to the present application, the positive electrode active material has a surface oxygen valence of -1.90 or less, optionally from -1.90 to -1.98. Thereby, by limiting the surface oxygen valence of the positive electrode active material to the above range as described above, it is possible to alleviate the interfacial side reaction of the positive electrode active material and the electrolyte, thereby improving the cycling performance and high-temperature storage performance of the secondary battery.

In any embodiment according to the present application, the positive electrode active material has a specific surface area of B in m²/g, with B being in the range of from 7 to 18, optionally from 10 to 15. As a result, it is allowed to ensure that the positive electrode plate has a high lithium ion conductivity, while the secondary battery has good rate performance, cycling performance and storage performance.

A second aspect according to the present application provides a battery module, comprising the secondary battery according to the first aspect according to the present application.

A third aspect according to the present application provides a battery pack, comprising the battery module according to the second aspect according to the present application.

A fourth aspect according to the present application provides an electrical device comprising at least one of the secondary battery of the first aspect according to the present application, the battery module of the second aspect according to the present application or the battery pack of the third aspect according to the present application.

The battery module, battery pack and electrical device include the secondary battery according to the present application, and thus have at least the same advantages as said secondary battery.

### DESCRIPTION OF THE DRAWINGS

In order to explain the technical solutions of the embodiments according to the present application more clearly, the following will briefly introduce the drawings that need to be used in the embodiments according to the present application. Apparently, the drawings described below are only some embodiments according to the present application. A person skilled in the art can obtain other drawings based on the accompanying drawings without creative work.
FIG. 1 is a schematic diagram of a secondary battery according to an embodiment according to the present application.
FIG. 2 is an exploded view of a secondary battery according to the embodiment according to the present application as shown in FIG. 1.
FIG. 3 is a schematic diagram of a battery module according to an embodiment according to the present application.
FIG. 4 is a schematic diagram of a battery pack according to an embodiment according to the present application.
FIG. 5 is an exploded view of the battery pack according to the embodiment according to the present application as shown in FIG. 4.
FIG. 6 is a schematic diagram of an electrical device according to an embodiment according to the present application using the secondary battery according to the present application as power.

In the drawings, the accompanying drawings are not necessarily drawn to an actual scale. Among them, the reference sings in the accompanying drawings are illustrated as follows: 1 - battery pack, 2 - upper case, 3 - lower case, 4 - battery module, 5 - secondary battery, 51 - housing, 52 - electrode assembly, and 53- cover plate.

### DETAILED DESCRIPTION

Hereinafter, embodiments of the secondary battery and the battery module, the battery pack and the electrical device containing the same will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all technical features and optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

It should be noted that in this article, the term "coating layer" refers to a material layer coated on the lithium manganese phosphate core, which can completely or partially cover the lithium manganese phosphate core. The use of "coating layer" is only for convenience of description and is not intended to limit the present invention. In addition, each layer of coating layer can be fully coated or partially coated. Similarly, the term "thickness of the coating layer" refers to the thickness of the material layer coated on the lithium manganese phosphate core radially.

It shall note that as used herein, the term "median particle size Dv50" is a particle size at which a cumulative volume distribution percentage of a material reaches to 50%. In the present application, the median particle size Dv50 of a material may be determined using a laser diffraction particle size analysis. For example, with reference to standard GB/T 19077-2016, it is determined using a laser particle size analyzer (e.g., Malvern Master Size 3000).

Herein, "approximately/about" before a number value represents a range of values, representing a range of ± 10% of that value.

Herein, the term "aryl" refers to a closed aromatic ring or ring system. Unless otherwise explicitly stated, the "aryl" structure can be single ring, multi ring, or fused ring. Examples of aryl groups include, but are not limited to, phenyl, naphthyl, anthracyl, phenyl, diphenyl, triphenyl, tetraphenylene, triphenylene, pyrenyl, perylene, indenyl, benzophenyl, fluorenyl, 9,9-dimethylfluorenyl, and spirodifluorenyl.

Herein, the term "heteroaryl" refers to one or more atoms in the ring of an aryl group being elements other than carbon. Examples of heteroaryl groups include, but are not limited to, pyrrolyl, furanyl, thienyl, indolyl, benzofuranyl, benzothienyl, dibenzofuran, dibenzothiophene, carbazolyl, indocarbazolyl, indolecarbazolyl, pyridinyl, pyrimidinyl, pyrazine, pyridazinyl, triazine, oxazole, isoxazolyl, thiazolyl, and isothiazolyl. The heteroatoms in the heteroaryl group can include N, O, S, Si, etc. The number of heteroatoms in a heteroaryl group can be one or multiple, and the multiple heteroatoms can be the same or different.

Herein, when substituents represent groups consisting of certain functional groups, they include groups formed by single bond bonding of these groups. For example, when a substituent represents at least one "selected from the group consisting of hydroxyl, C1-C18 monovalent alkyl, and C6-C18 monovalent aryl", the substituent separately discloses hydroxyl, C1-C18 monovalent alkyl, C6-C18 monovalent aryl, hydroxyl-substituted C1-C18 monovalent alkyl, hydroxyl-substituted C6-C18 monovalent aryl, and C1-C18 monovalent alkyl-substituted C1-C18 monovalent aryl.

Herein, when a substituent is "monovalent", it refers to a group formed by removing one H atom from the molecule. When a substituent is "divalent", it refers to a group formed by removing two H atoms from the molecule. When a substituent is "trivalent", it refers to a group formed by removing three H atoms from the molecule. When a substituent is "tetravalent", it refers to a group formed by removing four H atoms from the molecule.

Throughout this specification, the substituents of compounds are disclosed in groups or ranges. Clearly expect this description to include each individual sub combination of members of these groups and scopes. For example, it is explicitly expected that the term "C1-C6 alkyl" will separately disclose C1, C2, C3, C4, C5, C6, C1-C6, C1-C5, C1-C4, C1-C3, C1-C2, C2-C6, C2-C5, C2-C4, C2-C3, C3-C6, C3-C5, C3-C4, C4-C6, C4-C5, and C5-C6 alkyl groups.

The inventors of the present application found in an actual operation that leaching out of manganese ions is serious during deep charging and discharging of existing lithium manganese phosphate positive electrode active material. Although the prior art has attempted to coat the lithium manganese phosphate with lithium iron phosphate to reduce interfacial side reactions, such a coating layer cannot prevent the leached-out manganese ions from migrating into a non-aqueous electrolytic solution. The disassociated manganese ions are reduced to metal manganese after migration to a negative electrode. The produced metal manganese is equivalent to a "catalyst", which can catalyze decomposition of SEI (solid electrolyte interface) film on the surface of the negative electrode to produce a by-product. A part of the by-product is gas, which is prone to cause the secondary battery to expand and affect safety performance of the secondary battery, and another part is deposited on the surface of the negative electrode, and blocks channels for lithium ions to enter in and remove out of the negative electrode, resulting in an increased impedance of the battery and negatively affecting dynamic performance of the battery. In addition, in order to supplement the decomposed SEI film, the non-aqueous electrolytic solution and active lithium ions in the battery are continuously consumed, which has an irreversible impact on capacity retention rate of the battery.

The inventors, after thorough consideration on a positive electrode and a non-aqueous electrolytic solution, have designed a secondary battery capable of simultaneously combining a high energy density with good rate performance, cycling performance, storage performance and safety performance.

Specifically, a first aspect of the present application provides a secondary battery.

### SECONDARY BATTERY

A secondary battery, also known as a rechargeable battery or accumulator, is a battery that can continue to be used by activating its active material by means of charging after the battery has been discharged. Typically, a secondary battery includes an electrode assembly and a non-aqueous electrolytic solution, and the electrode assembly includes a positive electrode plate, a negative electrode plate, and a separator. The separator is disposed between the positive electrode plate and the negative electrode plate, which mainly functions to prevent short circuit of the positive and negative electrodes and at the same time allow lithium ions to pass through. The non-aqueous electrolytic solution functions to conduct lithium ions between the positive electrode plate and the negative electrode plate.

### [Positive electrode plate]

The secondary battery of the present application adopts a positive electrode plate comprising a positive electrode active material with a core-shell structure wherein the positive electrode active material comprises a core and a shell covering the core.

The positive electrode active material comprises a core and a shell covering the core;
the core has a chemical formula of Li₁₊ₓMn_{1-y}A_{y}P_{1-z}R_{z}O₄, in which
x is any value in the range of from -0.100 to 0.100,
y is any value in the range of from 0.001 to 0.500,
z is any value in the range of from 0.001 to 0.100,
A is one or more element(s) selected from the group consisting of Zn, Al, Na, K, Mg, Mo, W, Ti, V, Zr, Fe, Ni, Co, Ga, Sn, Sb, Nb, and Ge, and optionally is one or more element(s) selected from the group consisting of Fe, Ti, V, Ni, Co, and Mg,
R is one or more element(s) selected from the group consisting of B, Si, N, and S, and optionally is one or more element(s) selected from the group consisting of B, Si, N and S; and
x, y and z satisfy the condition that the core as a whole is electrically neutral.

The shell comprises a first coating layer covering the core, a second coating layer covering the first coating layer, and a third coating layer covering the second coating layer. The first coating layer comprises a crystalline pyrophosphate LiₐMP₂O₇ and/or M_{b}(P₂O₇)_{c}, in which 0 ≤ a ≤ 2, 1 ≤ b ≤ 4, and 1 ≤ c ≤ 6, and in which a, b and c satisfy the condition that the crystalline pyrophosphate LiₐMP₂O₇ or M_{b}(P₂O₇)_{c} is electrically neutral, M is, independently at each occurrence in the crystalline pyrophosphate LiₐMP₂O₇ and M_{b}(P₂O₇)_{c}, one or more element(s) selected from the group consisting of Fe, Ni, Mg, Co, Cu, Zn, Ti, Ag, Zr, Nb and Al. The second coating layer comprises crystalline phosphate XPO₄, in which X is one or more element(s) selected from the group consisting of Li, Fe, Ni, Mg, Co, Cu, Zn, Ti, Ag, Zr, Nb and Al. The third coating layer is carbon.

Unless otherwise stated, in the above chemical formula, when A represents more than two elements, the above range for the x value is not only for the stoichiometric number of each element as A, but also for the sum of the stoichiometric numbers of the elements as A. For example, when A represents more than two elements A1, A2 ...... and An, each of the stoichiometric numbers y1, y2 ......and yn of respective A1, A2 ......and An must fall within the numerical range defined by the present application for x, and the sum of y1, y2...... and yn must also fall within such numerical range of the present application. Similarly, in the case where R is more than two elements, the limitations on numerical ranges for the stoichiometric numbers of R in the present application also have the above meaning.

In an optional embodiment, when A is an element selected from one, two, three, or four of Zn, Al, Na, K, Mg, Mo, W, Ti, V, Zr, Fe, Ni, Co, Ga, Sn, Sb, Nb, and Ge, A_{y} is Qₙ₁Dₙ₂Eₙ₃Kₙ₄, in which n1+n2+n3+n4=y with n1, n2, n3, and n4 being positive numbers and not simultaneously 0, and Q, D, E, and K are each independently one selected from Zn, Al, Na, K, Mg, Mo, W, Ti, V, Zr, Fe, Ni, Co, Ga, Sn, Sb, Nb, and Ge, and optionally at least one of Q, D, E, and K is Fe. Optionally, one of n1, n2, n3, and n4 is zero, and the rest are not zero; and more optionally, two of n1, n2, n3 and n4 are zero and the rest are not zero; more optionally, three of n1, n2, n3 and n4 are zero and the rest are not zero. In the core Li₁₊ₓMn_{1-y}A_{y}P_{1-z}R_{z}O₄, it is advantageous to dope one, two, three or four of the A elements at the manganese site, and optionally, to dope one, two or three of the A elements; furthermore, it is advantageous to dope one or two of the R elements at the phosphorus site, which facilitates a uniform distribution of dopant elements.

In the core Li₁₊ₓMn_{1-y}A_{y}P_{1-z}R_{z}O₄, the magnitude of x is affected by the magnitude of the valence states of A and R, and the magnitude of y and z, to ensure that the whole system exhibits electroneutrality. If the value of x is too small, it will lead to a lower lithium content of the whole core system, affecting the capacity exertion of the positive electrode active material. The value of y will limit the total amount of all the dopant elements, and if y is too small, i.e., the amount of doping is too small, the dopant elements cannot play a role, and if y is more than 0.5, it will lead to a lower content of Mn in the system, affecting the voltage plateau of the material. The R element is doped at the position of P. Since the P-O tetrahedron is more stable, and if the value of z is too large, the stability of the material will be affected, thus the value of z is limited to 0.001 to 0.100.

After conducting extensive research, the inventors have found that by doping and modifying lithium manganese phosphate and multi-layer coating layer, a new type of positive electrode active material with a core-shell structure can be obtained. The positive electrode active material can achieve reduced manganese ion dissolution and reduced lattice change rate, so as to improve the cycling performance, rate performance, and safety performance and improved capacity exertion of secondary batteries.

Although the mechanism is not clear, it is presumed that, by doping the manganese and phosphorus sites of the lithium manganese phosphate core with element A and element R, respectively, not only can it effectively reduce the leaching out of manganese ions, and thus reduce manganese ions migrating to the negative electrode, and reduce the non-aqueous electrolytic solution consumed by the decomposition of the SEI film, and improve the cycling performance and the safety performance of the secondary batteries, but also can promote the adjustment of Mn-O bond, lowering the migration barrier of lithium ion, promoting lithium ion's migration, and improving the rate performance of the secondary battery; by covering the core with a first coating layer comprising crystalline pyrophosphate, the migration resistance of manganese ions can be further increased, reducing their leaching out, and reducing the content of surface heterolithium and the contact between the core and the non-aqueous electrolyte solution, thus reducing the interfacial side reaction, reducing the gas production, and improving the storage performance, cycling performance and safety performance of the secondary battery; by further applying a crystalline phosphate coating layer with excellent lithium ion conductivity, the interfacial side reaction between the positive electrode active material and the non-aqueous electrolytic solution can be effectively reduced, thereby improving the high-temperature cycling performance and high-temperature storage performance of the secondary battery; and by further applying a carbon layer as a third coating layer, the safety performance and kinetic performance of the secondary battery can be further improved.

In addition, in the core, the element A doped in the manganese position of the lithium manganese phosphate also helps to reduce the rate of lattice change of the e lithium manganese phosphate in the process of de-intercalation and intercalation of lithium in this material, improve the structural stability of the lithium manganese phosphate positive electrode active material, greatly reduce the leaching of the manganese ions and reduce the oxygen activity on the surface of the particles; and the element R doped in the phosphorus position also helps to change the degree of difficulty of the change in the bond length of the Mn-O bond, thereby improving the electronic conductivity and reducing the lithium ion migration barrier, promoting lithium ion migration, and improving the rate performance of the secondary battery.

In addition, the entire core system remains electrically neutral, which ensures that there are as few defects and heterogeneous phases in the positive electrode active material as possible. If there is an excessive amount of transition metal (e.g., manganese) in the positive electrode active material, due to the more stable structure of the material system itself, the excess transition metal is likely to precipitate in the form of monomers or form a heterogeneous phase inside the crystal lattice, and keeping the electroneutrality can keep such heterogeneous phases as small as possible. Additionally, ensuring the system is electrically neutral can also lead to the creation of lithium vacancies in the positive electrode active material in some cases, which can lead to better kinetic performance of the positive electrode active material.

The average particle size of the core prepared in the present application ranges from 50 nm to 500 nm, and the median particle size Dv50 is from 200 nm to 300 nm. The primary particle size of the core is within the range of from 50 nm to 500 nm, and the median particle size Dv50 is from 200 nm to 300 nm. If the average particle size of the core is too large (more than 500 nm), the capacity exertion of the secondary batteries using the material will be affected; if the average particle size of the core is too small, it has a large specific surface area and is prone to agglomeration, making it difficult to achieve uniform coating layer.

Through process control (e.g., sufficient mixing and grinding of materials from various sources), it is possible to ensure that the elements are uniformly distributed in the crystal lattice without agglomeration. The positions of the main characteristic peaks in the X-ray diffraction (XRD) patterns of lithium manganese phosphate doped with element A and element R are consistent with those of the un-doped LiMnPO₄, which indicates that the doping process has not introduced impurity phases, and thus the improvement of the performance of the core is mainly from the elemental doping rather than due to impurity phase. After preparing the positive electrode active material according to the present application, the inventors cut the middle region (the core region) of the prepared positive electrode active material particles by a focused ion beam (referred to as FIB), and tested it by a transmission electron microscope (referred to as TEM) as well as an X-ray energy spectrum analysis (referred to as EDS), and found that the distribution of the various elements was uniform, and that aggregation did not occur.

In the present application, "crystalline" means having a degree of crystallinity of 50% or more, i.e., 50% to 100%. A crystallinity of less than 50% is referred to as the glassy (or amorphous) state. The crystalline pyrophosphates and crystalline phosphates described in the present application have a crystallinity of 50% to 100%. Pyrophosphates and phosphates with a certain degree of crystallinity are not only conducive to giving full play to the functions of the pyrophosphate coating layer in hindering the leaching out of manganese ions and the excellent lithium ion conductivity of the phosphate coating layer, and reducing the interfacial side reactions, but also enable better lattice matching of the pyrophosphate coating layer and the phosphate coating layer so that a closer bonding of the coating layer s is achieved.

In the present application, the crystallinity of crystalline pyrophosphate as the material for the first coating layer and crystalline phosphate as the material for the second coating layer of the positive electrode active material can be tested by conventional technical means in the field, for example, by density method, infrared spectroscopy, differential scanning calorimetry, and nuclear magnetic resonance absorption method, and can also be tested, for example, by X-ray diffraction method.

A specific method for testing the crystallinity of crystalline pyrophosphate as the material for the first coating layer and crystalline phosphate as the material for the second coating layer of the positive electrode active material by the X-ray diffraction method may comprise the steps of taking a certain amount of the positive electrode active material powder and measuring the total scattering intensity by X-rays, which is the sum of the scattering intensities of the entire space substance, and is only related to the intensity of the primary rays, the chemical structure of the positive electrode active material powder, the total electron number (i.e., the mass), and not with the ordinal state of the sample; the crystalline scattering is then separated from the amorphous scattering from the diffractogram, and the degree of crystallinity, i.e., the ratio of the scattering of the crystalline portion of the scattering to the total intensity of the scattering.

It should be noted that in the present application, the crystallinity of the pyrophosphate and phosphate in the coating layer can be adjusted, for example, by adjusting the process conditions of the sintering process such as the sintering temperature, the sintering time and the like.

In the present application, since metal ions are difficult to migrate in the pyrophosphate, the pyrophosphate as the first coating layer can effectively isolate the dopant metal ions from the non-aqueous electrolyte solution. The crystalline pyrophosphate has a stable structure, so the coating layer with crystalline pyrophosphate can effectively inhibit the leaching out of the transition metal and improve the cycling performance of secondary battery.

The bonding between the first coating layer and the core is similar to a heterojunction, and the firmness of the bonding is limited by the degree of lattice matching. When the lattice mismatch is 5% or less, the lattice matching is better, and the two materials are easy to combine tightly. The tight bonding can ensure that the coating layer will not fall off in the subsequent cycling process, which is conducive to ensuring the long-term stability of the positive electrode active material. The measurement of the degree of bonding between the first coating layer and the core is mainly carried out by calculating the degree of mismatch between the core and the respective lattice constant of the coating layer. In the present application, after elements A and R are doped in the core, the matching degree between the core and the first coating layer is improved and the core and the pyrophosphate coating layer can be more tightly bonded with each other as compared to the non-doped elements.

Crystalline phosphate is chosen as the second coating layer, firstly, because it has a higher lattice matching with the first coating layer of crystalline pyrophosphate (the mismatch is only 3%); secondly, the stability of the phosphate itself is better than that of the pyrophosphate, and covering the pyrophosphate with it is conducive to the improvement of the stability of the positive electrode active material. The structure of crystalline phosphate is very stable, and it has excellent ability to conduct lithium ions, so the use of crystalline phosphate for covering can effectively reduce the interfacial side reaction between positive electrode active material and non-aqueous electrolyte solution, thus improving the high-temperature cycling performance and high-temperature storage performance of secondary battery. The lattice matching between the second coating layer and the first coating layer, among other things, is similar to the bonding between the first coating layer and the nucleus as described above, and when the lattice mismatch is less than 5%, the lattice matching is better, and the two materials are easy to be bonded tightly.

The main reason for carbon as the third coating layer is the better electronic conductivity of the carbon layer. Since electrochemical reactions which require the participation of electrons occur when secondary batteries operate, carbon with excellent electrical conductivity can be used to cover the positive electrode active material in order to increase the electron transfer between particles and at different locations on the particles. Coating layer with carbon can effectively improve the electrical conductivity and desolventization of the positive electrode active material.

In some embodiments, the primary particles of the positive electrode active material have an average particle size in the range of 50 nm to 500 nm, with a median particle size Dv50 in the range of from 200 nm to 300 nm. Since the particles will agglomerate, the actual measured size of the secondary particles after agglomeration may be from 500 nm to 40,000 nm. The size of the particles of the positive electrode active material affects the processing of the material and the compaction density performance of the electrode plate. By selecting the average particle size of the primary particles to be within the above range, it is thereby possible to avoid the following: the average particle size of the primary particles of the positive electrode active material being too small, which may cause agglomeration of the particles and make the particles difficult to be dispersed, and which requires a higher amount of binder, resulting in a poorer brittleness of the electrode plate; and the average particle size of the primary particles of the positive electrode active material being too large, which may result in larger inter-particle gaps and a lower compaction density.

By the above-described scheme, the lattice change rate of lithium manganese phosphate and manganese ion's leaching amount in the process of de-intercalation and intercalation of lithium can be effectively suppressed, thereby enhancing the high-temperature cycling performance and high-temperature storage performance of the secondary battery.

In some embodiments, the crystalline pyrophosphate in the first coating layer has an interplanar spacing ranging from 0.293 nm to 0.470 nm, and the angle of the crystal direction (111) ranges from 18.00° to 32.00°; the crystalline phosphate in the second coating layer has an interplanar spacing ranging from 0.244 nm to 0.425 nm, and the angle of the crystal direction (111) ranges from 20.00° to 37.00°.

Both the first coating layer and the second coating layer in the positive electrode active material described in the present application use crystalline substances. The crystalline pyrophosphates and crystalline phosphates in the coating layer can be characterized by means of techniques that are conventional in the art or, for example, with the aid of transmission electron microscopy (TEM). Under TEM, the core and the coating layer can be distinguished by testing the interplanar spacing.

The specific test method for the interplanar spacing and angle of crystalline pyrophosphate and crystalline phosphate in the coating layer may include the following steps: taking a certain amount of the sample powder of the coated positive electrode active material in a test tube and injecting a solvent, such as alcohol, into the test tube, and then carrying out sufficient stirring and dispersion, and then taking an appropriate amount of the above solution with a clean disposable plastic pipette and adding it dropwise to a 300-mesh copper mesh, and then leaving part of the powder on the copper mesh, and transferring the copper mesh with the sample to the TEM sample chamber for testing to obtain the original picture of the TEM test. The original picture obtained from the above TEM test was opened in the diffractometer software and Fourier transformed to obtain the diffraction pattern, and the distance from the diffracted spot to the center position in the diffraction pattern was measured to obtain the interplanar spacing, and the angle could be calculated according to Bragg's equation.

The difference between the range of the interplanar spacing of the crystalline pyrophosphate and that of the crystalline phosphate can be directly judged by the value of the interplanar spacing.

Crystalline pyrophosphates and crystalline phosphates having interplanar spacing and angle within the above range can more effectively inhibit the lattice change rate of lithium manganese phosphate and the leaching out of manganese ions in the process of de-intercalation and intercalation of lithium, thereby enhancing the high-temperature cycling performance and high-temperature storage performance of the secondary battery.

In some embodiments, in the core, the ratio of y to (1-y) is from 1:10 to 1:1, optionally from 1:4 to 1:1. Herein y denotes the sum of the stoichiometric numbers of the Mn-site doping element A. The energy density and cycling performance of a secondary battery using the positive electrode active material may be further improved when the above conditions are met.

In some embodiments, in the core, the ratio of z to (1-z) is from 1:9 to 1:999, optionally from 1:499 to 1:249. Herein z denotes the sum of the stoichiometric numbers of the P-position doping element R. The energy density and cycling performance of a secondary battery using the positive electrode active material may be further improved when the above conditions are met.

In some embodiments, the carbon of the third coating layer is a mixture of SP2 carbon and SP3 carbon; optionally, the molar ratio of the SP2 carbon to the SP3 carbon is any value in the range of 0.1 to 10, optionally any value in the range of 2.0 to 3.0.

In some embodiments, the molar ratio of the SP2 carbon to the SP3 carbon may be about 0.1, about 0.2, about 03, about 0.4, about 0.5, about 0.6, about 0.7, about 0.8, about 0.9, about 1, about 2, about 3, about 4, about 5, about 6, about 7, about 8, about 9, or about 10, or any value within any of the foregoing ranges.

By selecting the morphology of the carbon in the carbon coating layer, the overall electrochemical performance of the secondary battery is thereby enhanced. Specifically, by using a mixed morphology of SP2 carbon and SP3 carbon and limiting the ratio of the SP2 carbon to the SP3 carbon to a certain range, the following can be avoided: if the carbon in the coating layer is all in the amorphous SP3 morphology, the electrical conductivity is poor, and if it is all in the graphitized SP2 morphology, although the electrical conductivity is good, there are few lithium-ion pathways, which is not conducive to the de-intercalation of lithium-ion. In addition, limiting the molar ratio of the SP2 carbon to the SP3 carbon to the above range achieves good electrical conductivity and ensures the lithium ion pathway, and is therefore conducive to improving the kinetic performance and cycling performance of the secondary battery.

The mixing ratio of the SP2 form and the SP3 form of the carbon for the third coating layer can be controlled by sintering conditions such as sintering temperature and sintering time. For example, in the case where sucrose is used as a carbon source to prepare the third coating layer, the sucrose is cracked at a high temperature and then deposited on the second coating layer while at the same time under the action of high temperature, a carbon coating layer with both the SP3 form and the SP2 form is produced. The ratio of the SP2 carbon to the SP3 carbon may be regulated by selecting the high temperature pyrolysis conditions and the sintering conditions.

The structure and characterization of the carbon for the third coating layer can be determined by Raman (Raman) spectroscopy as follows: the molar ratio of the SP2 carbon to the SP3 carbon is confirmed by splitting the energy spectrum of the Raman test to obtain I_{d}/I_{g} (wherein I_{d} is the intensity of the peak of the carbon in the SP3 form and I_{g} is the intensity of the peak of the carbon in the SP2 form).

In some embodiments, the first coating layer has a coating amount C1 % by weight of greater than 0 and less than or equal to 6, optionally greater than 0 and less than or equal to 5.5, more optionally greater than 0 and less than or equal to 2, based on the weight of the core.

In some embodiments, the second coating layer has a coating amount C2 % by weight of greater than 0 and less than or equal to 6, optionally greater than 0 and less than or equal to 5.5, and more optionally between 2 and 4, based on the weight of the core.

In some embodiments, the third coating layer has a coating amount C3 % by weight of greater than 0 and less than or equal to 6, optionally greater than 0 and less than or equal to 5.5, more optionally greater than 0 and less than or equal to 2, based on the weight of the core.

In the present application, the coating amount of each layer is not zero amount.

In the positive electrode active material with a core-shell structure described in the present application, the coating amount of the three coating layer s is preferably within the above range, whereby the core can be sufficiently coated and at the same time further improve the dynamic performance, cycling performance, storage performance and safety performance of the secondary battery without sacrificing the gram capacity of the positive electrode active material.

For the first coating layer, by controlling the coating amount within the above range, the following situations can be avoided: if the coating amount is too small, the thickness of the coating layer is relatively thin, which may not be able to effectively impede the migration of the transition metal; if the coating amount that is too large, the coating layer is too thick, which may affect the migration of Li⁺, and thus affect the rate performance of the secondary battery.

For the second coating layer, by controlling the coating amount within the above range, the following situations can be effectively avoided: if the coating amount is too much, the overall platform voltage of the positive electrode active material may be affected; if the coating amount is too little, it may not be able to realize a sufficient coating effect.

For the third coating layer, the carbon covering mainly serves to enhance the electron transfer between the particles, however, since the structure also contains a large amount of amorphous carbon, the density of the carbon is relatively low, and therefore, if the coating amount is too large, the compaction density of the electrode plate may be affected.

In some embodiments, the first coating layer has a thickness of from 1 nm to 10 nm.

In some embodiments, the second coating layer has a thickness of from 2 nm to 15 nm.

In some embodiments, the third coating layer has a thickness of from 2 nm to 25 nm.

In some embodiments, the thickness of the first coating layer may be about 2 nm, about 3 nm, about 4 nm, about 5 nm, about 6 nm, about 7 nm, about 8 nm, about 9 nm, or about 10 nm, or in any range of any of the above values.

In some embodiments, the thickness of the second coating layer may be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, or in any range of any of the above values.

In some embodiments, the thickness of the third coating layer may be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, about 16 nm, about 17 nm, about 18 nm, about 19 nm, about 20 nm, about 21 nm, about 22 nm, about 23 nm, about 24 nm, or about 25 nm, or in any range of any of the above values.

When the thickness of the first coating layer is within the range of 1 nm to 10 nm, it is possible to avoid an unfavorable effect on the kinetic performance of the positive electrode active material that may arise when it is too thick, and it is possible to avoid a problem that may not be able to efficiently hinder the migration of the transition metal ions when it is too thin.

When the thickness of the second coating layer is within the range of 2 nm to 15 nm, the surface structure of the second coating layer is stable, and the side reaction with the non-aqueous electrolyte solution is small, and thus the interfacial side reaction can be effectively mitigated, thereby improving the high-temperature cycling performance and high-temperature storage performance of the secondary battery.

When the thickness of the third coating layer is within the range of 2 nm to 25 nm, the electrical conductivity of the positive electrode active material can be improved and the compaction density of the positive electrode plate prepared using the positive electrode active material can be improved.

The test for the thickness of the coating layer is mainly carried out by FIB, and the specific method may comprise the following steps: randomly selecting a single particle from the positive electrode active material powder to be tested, cutting a thin slice with a thickness of about 100 nm from the middle position of the selected particle or from the vicinity of the middle position, and then carrying out a TEM test on the thin slice, measuring the thickness of the coating layer, measuring 3-5 positions, and taking the average value.

In some embodiments, the content of manganese is in the range of 10 wt% to 35 wt%, optionally in the range of 15 wt% to 30 wt%, and more optionally in the range of 17 wt% to 20 wt%, based on the weight of the positive electrode active material.

In some embodiments, the content of phosphorus is in the range of 12 wt% to 25 wt%, optionally in the range of 15 wt% to 20 wt%, based on the weight of the positive electrode active material.

In some embodiments, the weight ratio of manganese to phosphorus is in the range of 0.90 to 1.25, optionally in the range of 0.95 to 1.20.

In the present application, where only the core of the positive electrode active material contains manganese, the amount of manganese may correspond to the amount of the core.

In the present application, limiting the content of manganese to the above range can effectively avoid problems such as deterioration of the structural stability of the positive electrode active material and decrease in density that may be caused if the content of manganese is too large, so as to improve the performance of the secondary battery in terms of cycling, storage and compaction density; and it can avoid problems such as a low voltage plateau that may be caused if the content of manganese is too small, so as to improve the energy density of the secondary battery.

In the present application, limiting the content of phosphorus to the above range can effectively avoid the following situations: if the content of phosphorus is too large, it may lead to the covalency of P-O being too strong and affect the conductivity of the small polarizers, thus affecting the electrical conductivity of the positive electrode active material; if the content of phosphorus is too small, it may cause the lattice structure of the pyrophosphate in the core, in the first coating layer and/or of the phosphate in the second coating layer to be less stable, thereby affecting the overall stability of the positive electrode active material.

The weight ratio of the manganese content to the phosphorus content has the following effects on the performance of the secondary battery: if the weight ratio is too large, it means that there is too much manganese, the manganese ions' leaching increases, which affects the stability and capacity exertion of the positive electrode active material, and thus affects the cycling performance and the storage performance of the secondary battery; if the weight ratio is too small, it means that there is too much phosphorus, which is prone to form a heterogeneous phase, causing the discharge voltage plateau of the positive electrode active material to decrease, thus the energy density of the secondary battery is reduced.

The measurement of the elemental manganese and the elemental phosphorus may be carried out by technical means conventional in the art. In particular, the content of the manganese element and the phosphorus element is measured using the following method: the material is dissolved in dilute hydrochloric acid (concentration 10-30%), the content of each element of the solution is tested using ICP, and then the content of the manganese element is measured and converted to obtain its weight percentage.

In some embodiments, the positive electrode active material with a core-shell structure has a lattice change rate of 4% or less, optionally 3.8% or less, and more optionally from 2.0% to 3.8% before and after complete deintercalation and intercalation of lithium.

The de-intercalation and intercalation of lithium in manganese phosphate (LiMnPO₄) is a two-phase reaction. The interfacial stress of the two phases is determined by the magnitude of the lattice change rate before and after the deintercalation and intercalation of lithium, and the smaller the lattice change rate is, the smaller the interfacial stress is, and the easier the Li⁺ transport is. Therefore, reducing the lattice change rate of the core will be favorable to enhance the Li⁺ transport ability, thereby improving the multiplicity performance of the secondary battery. The positive electrode active material having a core-shell structure described in the present application is capable of realizing a lattice change rate before and after the deintercalation and intercalation of lithium of less than 4%, and thus the use of the positive electrode active material is capable of improving the multiplication rate performance of the secondary battery. The lattice change rate can be measured by methods known in the art, such as X-ray diffraction (XRD) mapping.

In some embodiments, the positive electrode active material with a core-shell structure has a Li/Mn anti-site defect concentration of 4% or less, optionally 2.2% or less, more optionally 1.5% to 2.2%.

The term Li/Mn anti-site defect refers to interchange of Li⁺ with Mn²⁺ in terms of their sites in the LiMnPO₄ lattice. Accordingly, the Li/Mn anti-site defect concentration refers to a percentage of Li⁺ interchanged with Mn²⁺ relative to the total amount of Li⁺. The Li/Mn antisite defect concentration in the present application may, for example, be tested according to JIS K 0131-1996.

The positive electrode active material with a core-shell structure described in the present application is capable of realizing the lower Li/Mn anti-site defect concentration described above. Although the mechanism is not yet well understood, the inventors of the present application speculate that since Li⁺ and Mn²⁺ will swap positions in the LiMnPO₄ lattice, and the Li⁺ transport channel is a one-dimensional channel, Mn²⁺ will be difficult to migrate in the Li⁺ channel, which in turn hinders the Li⁺ transport. As a result, the positive electrode active material with the core-shell structure described in the present application is able to avoid Mn²⁺ from hindering Li⁺ transmission and at the same time enhance the capacity exertion and rate performance of the positive electrode active material due to the low concentration of Li/Mn anti-site defects, which is within the above range.

In some embodiments, the positive electrode active material has a compaction density of 2.2 g/cm³ or more, optionally 2.2 g/cm³ or more and 2.8 g/cm³ or less, at 3T (tonne). The higher the compaction density is, the greater the weight of the positive electrode active material per unit volume is. Thus, increase of the compaction density is conducive to improving the volumetric energy density of batteries. Compaction density can be measured according to GB/T 24533-2009.

In some embodiments, the positive electrode active material with a core-shell structure has a surface oxygen valence of -1.90 or less, optionally from -1.90 to -1.98.

The stable valence state of oxygen is originally -2 valence, and the closer the valence state is to -2 valence, the stronger its ability to obtain electrons, that is, the stronger its oxidizing ability. Generally, its surface valence state is -1.7 or less. This application limits the surface oxygen valence state of the positive electrode active material to the above range as described above, which can reduce the interface side reaction between the positive electrode active material and non-aqueous electrolytic solution, thereby improving the cycling performance and high-temperature storage performance of the secondary battery.

The surface oxygen valence state can be measured using methods known in this field, such as electron energy loss spectroscopy (EELS).

In some embodiments, the specific surface area of the positive electrode active material with a core-shell structure is B m2/g, with B ranging from 7 to 18 and optional from 10 to 15.

If the specific surface area of the positive active material is high, lithium ion conductivity of the positive electrode plate will be increased, which in turn can improve capacity exertion and rate performance of secondary batteries. However, the specific surface area of the positive electrode active material should not be too high, which may increase contact area between the positive electrode active material and a non-aqueous electrolytic solution, thereby increasing their interfacial side reactions and affecting cycling performance and storage performance of secondary batteries. By controlling the specific surface area of the positive electrode active material in a suitable range, it can ensure that the positive electrode plate has a high lithium ions conductivity, and at the same time, the secondary battery has good rate performance, cycling performance and storage performance. The specific surface area of the positive electrode active material has the common meaning in the art and may be determined by equipment and method known in the art. For example, with reference to GB/T 19587-2017, the nitrogen adsorption specific surface area analysis method can be used for testing, and the BET (BrunauerEmmett Teller) method can be used for calculating. The test can be carried out by Micromeritics Tri-Star 3020 specific surface area aperture analysis tester.

The present application further provides a method for the preparation of a positive electrode active material, comprising the steps of providing a core material and coating layer the core material.

Step of providing a core material: the core has the chemical formula of Li₁₊ₓMn_{1-y}A_{y}P_{1-z}R_{z}O₄, x being any value in the range of -0.100 to 0.100, y being any value in the range of 0.001 to 0.500, and z being any value in the range of 0.001 to 0.100; A being one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co, and Mg; R being one or more elements selected from B, Si, N, and S, optionally R being an element selected from among B, Si, N and S.

Step of coating layer : providing a suspension of LiₐMP₂O₇ and/or M_{b}(P₂O₇)_{c} and a suspension of XPO₄, adding the core material to the suspensions and mixing them, and obtaining the positive electrode active material by sintering, 0 ≤ a ≤ 2, 1 ≤ b ≤ 4, 1 ≤ c ≤ 6, and the values of a, b, and c satisfy the following conditions: making the crystalline pyrophosphate LiₐMP₂O₇ or M_{b}(P₂O₇)_{c} being electrically neutral; M is independently one or more element(s) selected from the group consisting of Fe, Ni, Mg, Co, Cu, Zn, Ti, Ag, Zr, Nb, and Al; X is one or more element(s) selected from the group consisting of Li, Fe, Ni, Mg, Co, Cu, Zn, Ti, Ag, Zr, Nb, and Al. The positive electrode active material has a core-shell structure comprising the core and a shell covering the core, wherein the shell comprises a first coating layer covering the core, a second coating layer covering the first coating layer, and a third coating layer covering the second coating layer, the first coating layer comprising crystalline pyrophosphates LiₐMP₂O₇ and/or M_{b}(P₂O₇)_{c}, the second coating layer comprises crystalline phosphoric acid XPO₄, and wherein the third coating layer is carbon.

In some embodiments, the step of providing a core material comprises the following Step (1) and Step (2).

Step (1), mixing a manganese source, a dopant of element A and an acid in a container and stirring to obtain manganese salt particles doped with element A.

Step (2): mixing the manganese salt particles doped with element A with a lithium source, a phosphorus source and a dopant of element R in a solvent to obtain a slurry, and obtaining a core doped with element A and element R after sintering under the protection of an inert gas atmosphere, wherein the core doped with element A and element R is Li₁₊ₓMn_{1-y}A_{y}P_{1-z}R_{z}O₄, x being any value in the range of -0.100 to 0.100, y being any value in the range of 0.001 to 0.500, and z being any value in the range of 0.001 to 0.100; A being one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co, and Mg; R being one or more elements selected from B, Si, N, and S, optionally R being an element selected from among B, Si, N and S.

The preparation methods according to the present application are not particularly limited to the source of the material, the source of an element may include one or more of a monomer, sulfate, halide, nitrate, organic acid salt, oxide, or hydroxide of the element, and the precursor being the source may fulfill the purpose of the preparation methods of the present application.

Optionally, the dopant of element A is one or more of monomers, carbonates, sulfates, chlorates, nitrates, organic acids, oxides, hydroxides of one or more of the respective elements selected from Zn, Al, Na, K, Mg, Mo, W, Ti, V, Zr, Fe, Ni, Co, Ga, Sn, Sb, Nb and Ge.

Optionally, the dopant of element R is one or more of an inorganic acid, an organic acid, a sulfate, a chloride, a nitrate, an organic acid salt, an oxide, a hydroxide of one or more of the elements of one or more of the respective elements of B, Si, N and S.

In the present application, the manganese source may be a manganese-containing substance known in the art that can be used to prepare lithium manganese phosphate. As an example, the manganese source may be one or more selected from elemental manganese, manganese dioxide, manganese phosphate, manganese oxalate, and manganese carbonate.

In the present application, the acid may be one or more selected from inorganic acids hydrochloric acid, sulfuric acid, nitric acid, phosphoric acid, silicic acid, metasilicic acid, and organic acids such as oxalic acid. In some embodiments, the acid is a dilute organic acid with a concentration of 60 wt% or less.

In the present application, the lithium source may be a lithium-containing substance known in the art that can be used to prepare lithium manganese phosphate. For example, the lithium source may be one or more selected from lithium carbonate, lithium hydroxide, lithium phosphate, and lithium dihydrogen phosphate.

In the present application, the phosphorus source may be a phosphorus-containing substance known in the art that can be used to prepare lithium manganese phosphate. For example, the phosphorus source may be one or more selected from diammonium hydrogen phosphate, ammonium dihydrogen phosphate, ammonium phosphate and phosphoric acid.

In some embodiments, after the manganese source, the dopant of element A, and the acid are reacted in a solvent to obtain a suspension of manganese salt doped with element A, the suspension is filtered, dried, and sanded to obtain manganese salt particles doped with element A having a particle size of 50-200 nm.

In some embodiments, the slurry in step (2) is dried to obtain a powder, and then the powder is sintered to obtain a core doped with element A and element R.

In some embodiments, the mixing in the step (1) is carried out at a temperature of 20°C to 120°C, optionally 40°C to 120°C. In some embodiments, the stirring in the step (1) is carried out at 400 rpm to 700 rpm for 1 h to 9 h, and optionally 3 h to 7 h.

Optionally, the reaction temperature in the step (1) may be about 30°C, about 50°C, about 60°C, about 70°C, about 80°C, about 90°C, about 100°C, about 110°C, or about 120°C; the stirring in the step (1) is carried out for about 2 hours, about 3 hours, about 4 hours, about 5 hours, about 6 hours, about 7 hours, about 8 hours, or about 9 hours; optionally, the reaction temperature and the stirring time in step (1) may be within any range of any of the above values.

In some embodiments, the mixing in the step (2) is carried out at a temperature of 20°C to 120°C, optionally 40°C to 120°C for 1 hour to 12 hours. Optionally, the reaction temperature in the step (2) may be about 30°C, about 50°C, about 60°C, about 70°C, about 80°C, about 90°C, about 100°C, about 110°C, or about 120°C; the mixing in the step (2) is carried out for about 2 hours, about 3 hours, about 4 hours, about 5 hours, about 6 hours, about 7 hours, about 8 hours, about 9 hours, about 10 hours, about 11 hours, or about 12 hours; optionally, the reaction temperature and the mixing time in the step (2) may be within any range of any of the above values.

When the temperature and time during the preparation of the core particles are within the above range, the core obtained by preparation and the positive electrode active material made therefrom have fewer lattice defects, which is favorable to suppressing manganese ion's leaching and reducing the interfacial side reaction between the positive electrode active material and the non-aqueous electrolytic solution, thereby improving the cycling performance and safety performance of the secondary battery.

In some embodiments, optionally, in the process of preparing the lithium manganese phosphate particles doped with element A and element R, pH of the solution is controlled to be from 3.5 to 6, optionally, the pH of the solution is controlled to be from 4 to 6, and more optionally, the pH of the solution is controlled to be from 4 to 5. It is to be noted that the pH of the resultant mixture can be adjusted in the present application by a method commonly used in the art, for example, by adding an acid or a base.

Optionally, in some embodiments, in the step (2), the molar ratio of the manganese salt particles doped with element A to the lithium source and the phosphorus source is 1:(0.5-2.1):(0.5-2.1), and more optionally, the molar ratio of the manganese salt particles doped with element A to the lithium source and to the phosphorus source is about 1:1:1.

In some embodiments, optionally, the sintering conditions in the process of preparing A-element and R-element doped lithium manganese phosphate are as follows: sintering at an atmosphere of inert gas or a mixture of inert gas and hydrogen at a temperature of from 600°C to 950°C for 4 hours to 10 hours; optionally, the sintering may be at a temperature of from about 650°C, to about 700°C, to about 750°C, to about 800°C, to about 850°C, or to about 900°C for about 2 hours, about 3 hours, about 4 hours, about 5 hours, about 6 hours, about 7 hours, about 8 hours, about 9 hours, or about 10 hours; optionally, the sintering may be at temperatures for sintering times, within any range of any of the above values. In the process of preparing A-element and R-element doped lithium manganese phosphate, when the sintering temperature is too low and the sintering time is too short, it will lead to a lower crystallinity of the core of the positive electrode active material, which will affect the overall performance, while when the sintering temperature is too high, the heterogeneous phases are likely to appear in the core of the positive electrode active material, which will affect the overall performance; and when the sintering time is too long, the particles of the core of the positive electrode active material will be larger in length, thus affecting the capacity exertion, compaction density, rate performance, and the like.

Optionally, the protective atmosphere is a mixture of 70-90 vol% nitrogen and 10-30 vol% hydrogen.

In some embodiments, the coating layer step comprises a first coating layer step, a second coating layer step and a third coating layer step.

The first coating layer step: dissolving a source of element M, a source of phosphorus and an acid, and optionally a source of lithium, in a solvent to obtain a suspension for first coating layer; mixing the core obtained in the step of providing a core material with the suspension of first coating layer obtained in the first coating layer step sufficiently, drying, and sintering to obtain the first coating layer-covered material.

The second coating layer step: dissolving a source of element X, a phosphorus source, and an acid in a solvent to obtain a suspension of second coating layer; mixing the first coating layer-covered material obtained in the first coating layer step with the suspension second coating layer obtained in the second coating layer step sufficiently, drying, and sintering, to obtain a two coating layers-covered material.

The third coating layer step: dissolving a carbon source in a solvent and fully dissolving it to obtain a solution of third coating layer; then adding the two coating layers-covered material obtained in the second coating layer step to the solution of third coating layer, mixing well, drying and then sintering to obtain a three coating layers-covered material, i.e., a positive electrode active material.

As an example, the source of element M is one or more of monomers, carbonates, sulfates, chlorates, nitrates, organic acids, oxides, hydroxides of one or more of the respective elements selected from Fe, Ni, Mg, Co, Cu, Zn, Ti, Ag, Zr, Nb, and Al.

As an example, the source of element X is one or more of monomers, carbonates, sulfates, chlorates, nitrates, organic acids, oxides, hydroxides of one or more of the respective elements Li, Fe, Ni, Mg, Co, Cu, Zn, Ti, Ag, Zr, Nb, and Al.

The amount of the sources of each of the elements A, R, M, and X added depends on the target doping amount, and the ratio of the amount of lithium source, manganese source, and phosphorus source conforms to the stoichiometric ratio.

As an example, the carbon source is one or more of starch, sucrose, glucose, polyvinyl alcohol, polyethylene glycol, and citric acid.

In some embodiments, in the first coating layer step, the pH of the solution of the source dissolved with element M, the phosphorus source and acid, and optionally the lithium source, is controlled to be from 3.5 to 6.5, and then stirred and reacted for from 1 hour to 5 hours, and then the solution is warmed up to from 50°C to 120°C, and maintained at that temperature for from 2 hours to 10 hours. In some embodiments, sintering is carried out at 650°C to 800°C for 2 hours to 6 hours in the first coating layer step.

Optionally, in the first coating layer step, the reaction is fully carried out. Optionally, in the first coating layer step, the reaction proceeds for about 1.5 hours, about 2 hours, about 3 hours, about 4 hours, about 4.5 hours, or about 5 hours. Optionally, the reaction time of the reaction in the first coating layer step may be within any range of any of the above values.

Optionally, in the first coating layer step, the solution pH is controlled to be from 4 to 6.

Optionally, in the first coating layer step, the solution is warmed to about 55°C, about 60°C, about 70°C, about 80°C, about 90°C, about 100°C, about 110°C, or about 120°C and held at that temperature for about 2 hours, about 3 hours, about 4 hours, about 5 hours, about 6 hours, about 7 hours, about 8 hours , about 9 hours, or about 10 hours; optionally, the temperature at which the warming occurs and the holding time in the first coating layer step may be within any range of any of the above values.

Optionally, in the first coating layer step, the sintering may be carried out at about 650°C, about 700° C., about 750° C., or about 800° C. for about 2 hours, about 3 hours, about 4 hours, about 5 hours, or about 6 hours; optionally, the sintering temperature and the sintering time, may be within any range of any of the above values.

In the first coating layer step, by controlling the sintering temperature and time within the above range, the following can be effectively avoided: when the sintering temperature in the first coating layer step is too low and the sintering time is too short, it will result in the first coating layer having a low degree of crystallinity and more amorphous matter, which will lead to a decrease in the effect of inhibiting the dissolution of metals, thereby affecting the cycling performance and high-temperature storage performance of the secondary battery; if the sintering temperature is too high, this will lead to the appearance of heterogeneous phases in the first coating layer, which will also affect its effect of inhibiting metal dissolution, thereby affecting the cycling performance and high-temperature storage performance of the secondary battery, etc.; and if the sintering time is too long, this will increase the thickness of the first coating layer, affecting the migration of Li⁺, thereby affecting the capacity exertion and the rate performance, etc. of the secondary battery.

In some embodiments, in the second coating layer step, the source of element X, the phosphorus source and the acid are dissolved in a solvent, then stirred and reacted for 1 hour to 10 hours, and then the solution is warmed up to 60°C to 150° C. and maintained at that temperature for 2 hours to 10 hours. In some embodiments, the sintering in the second coating layer step is carried out at 500°C to 700°C for 6 hours to 10 hours.

Optionally, in the second coating layer step, the reaction is fully carried out. Optionally, in the second coating layer step, the reaction proceeds for about 1.5 hours, about 2 hours, about 3 hours, about 4 hours, about 4.5 hours, about 5 hours, about 6 hours, about 7 hours, about 8 hours, about 9 hours, or about 10 hours. Optionally, the reaction time in the second coating layer step may be within any range of any of the above values.

Optionally, in the second coating layer step, the solution is warmed to about 65°C, about 70°C, about 80°C, about 90°C, about 100°C, about 110°C, about 120°C, about 130°C, about 140°C, or about 150°C and maintained at that temperature for about 2 hours, about 3 hours, about 4 hours, about 5 hours, about 6 hours, about 7 hours, about 8 hours, about 9 hours, or about 10 hours; optionally, the temperature at which the warming occurs and the holding time in the second coating layer step may be within any range of any of the above values.

In the step of providing the core material and in the first coating layer step and the second coating layer step, prior to sintering, i.e., in the preparation of the core material in which the chemical reaction takes place (steps (1) and (2)) as well as in the preparation of the first coating layer suspension and the second coating layer suspension, it is possible to avoid the following by selecting the appropriate reaction temperatures and the reaction times, as described above: if the reaction temperature is too low, the reaction cannot occur or the reaction rate is slow; if the temperature is too high, the product decomposes or a heterogeneous phase is formed; if the reaction time is too long, the product particle size is large, which may increase the time and difficulty of the subsequent process; and if the reaction time is too short, then the reaction is incomplete and less product is obtained.

Optionally, in the second coating layer step, the sintering may be carried out at about 550°C, about 600°C, or about 700°C for about 6 hours, about 7 hours, about 8 hours, about 9 hours, or about 10 hours; optionally, the sintering temperature and the sintering time may be in any range of any of the above values.

In the second capping step, by controlling the sintering temperature and time within the above range, the following can be effectively avoided: if the sintering temperature in the second coating layer step is too low and the sintering time is too short, it will result in the second coating layer having a low degree of crystallinity, more amorphous states, and a decline in its performance of lowering the surface reactive activity of the positive electrode active material, thereby affecting the cycling performance and storage performance under high temperature of the secondary battery, etc.; and if the sintering temperature is too high, it will lead to the appearance of heterogeneous phases in the second coating layer, which will also affect its effect of lowering the surface reaction activity of the positive electrode active material, thereby affecting the cycling performance and the storage performance under high temperature of the secondary battery, etc.; and if the sintering time is too long, it will lead to an increase in the thickness of the second coating layer, which will affect the voltage plateau of the positive electrode active material, thereby causing the energy density of the secondary battery to decrease, etc.

In some embodiments, the sintering in the third coating layer step is carried out at 700° C. to 800° C. for 6 hours to 10 hours. Optionally, in the third coating layer step, the sintering may be performed at about 700°C, about 750°C, or about 800°C for about 6 hours, about 7 hours, about 8 hours, about 9 hours, or about 10 hours; optionally, the temperature of the sintering, and the time of the sintering, may be within any range of any of the above values.

In the third coating layer step, by controlling the sintering temperature and time within the above ranges, the following can be effectively avoided: if the sintering temperature in the third coating layer step is too low, it will result in a decrease in the degree of graphitization of the third coating layer, which will affect its electrical conductivity, thereby affecting the capacity exertion of the positive electrode active material; if the sintering temperature is too high, it will result in an excessive degree of graphitization of the third coating layer, which will affect the Li⁺ transmission, thereby affecting the capacity exertion of the positive electrode active material, etc.; if the sintering time is too short, it will result in the coating layer being too thin, affecting its electrical conductivity, thereby affecting the capacity exertion of the positive electrode active material; if the sintering time is too long, it will result in the coating layer being too thick, affecting the compaction density of the positive electrode active material, etc.

In the above-described first coating layer step, second coating layer step, and third coating layer step, the drying may all be carried out at a drying temperature of 100°C to 200°C, optionally 110°C to 190°C, more optionally 120°C to 180°C, even more optionally 120°C to 170°C, and most optionally 120°C to 160°C., and the drying time may be from 3 hours to 9 hours, optionally 4 hours to 8 hours, more optionally 5 hours to 7 hours, and most optionally about 6 hours.

By the positive electrode active material prepared by the method for preparing the positive electrode active material described in the present application, the secondary battery prepared therefrom has a reduced amount of Mn and Mn-site doping elements leached out after cycling, and the high-temperature storage performance, the cycling performance, and the rate performance are improved. In addition, the raw materials are widely available, low cost and simple process, which is conducive to industrialization.

The positive electrode plate of the present application comprises a positive electrode current collector and a positive electrode film layer provided on at least one surface of the positive electrode current collector. In particular, said positive electrode current collector has two surfaces opposite to each other in the direction of its own thickness, and said positive electrode film layer is provided on either or both of two opposite surfaces of said positive electrode current collector. The positive electrode film layer comprises the positive electrode active material of the present application described above.

In some embodiments, optionally, said positive electrode active material is present in said positive electrode film layer in a content of from 90 wt% to 99.5 wt%, based on the total weight of said positive electrode film layer. More optionally, said positive electrode active material is present in said positive electrode film layer in a content of from 95 wt% to 99.5wt%, based on the total weight of said positive electrode film layer.

The positive electrode film layer does not exclude other positive electrode active materials than the positive electrode material having a core-shell structure according to the present application. For example, in some embodiments, the positive electrode film layer may further comprise at least one of a lithium transition metal oxide and a modified compound thereof. By way of example, said other positive electrode materials may include at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof.

In some embodiments, said positive electrode film layer optionally further comprises a positive electrode conductive agent. The present application does not specifically limit the type of said positive electrode conductive agent, and as an example, said positive electrode conductive agent includes at least one of superconducting carbon, conductive graphite, acetylene black, carbon black, Ketjen black, carbon dots, carbon nanotubes, graphene, and carbon nanofibers.

In some embodiments, the positive electrode film layer optionally further comprises a binder. The present application does not specifically limit the type of the binder, and as an example, the positive electrode binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate-based resin.

In some embodiments, said positive electrode current collector may be a metal foil or a composite current collector. As an example of a metal foil, an aluminum foil may be used. The composite current collector may include a polymeric material matrix and a metallic material layer formed on at least one surface of the polymeric material matrix. As an example, the metallic material may be at least one selected from aluminum, aluminum alloy, nickel, nickel alloy, titanium, titanium alloy, silver, and silver alloy. As an example, the polymeric material matrix may be selected from polypropylene (PP), polyethylene terephthalate (PET), polybutylene terephthalate (PBT), polystyrene (PS), polyethylene (PE), etc.

Said positive electrode film layer is usually made by applying a positive electrode slurry to the positive collector followed by drying and cold pressing. Said positive electrode slurry is usually formed by dispersing the positive electrode active material, an optional conductive agent, an optional binder, and any other components in a solvent and stirring uniformly. The solvent may be N-methylpyrrolidone (NMP), but is not limited thereto.

### [Negative electrode plate]

In some embodiments, said negative electrode plate comprises a negative electrode current collector and a negative electrode film layer provided on at least one surface of said negative electrode current collector and comprising a negative electrode active material. For example, said negative electrode current collector has two surfaces opposite to each other in the direction of its own thickness, and said negative electrode film layer is provided on either or both of two opposite surfaces of said negative electrode current collector.

Said negative electrode active material may be a negative electrode active material known in the art for use in secondary batteries. By way of example, said negative electrode active material includes, but is not limited to, at least one of natural graphite, artificial graphite, soft carbon, hard carbon, silicon-based material, tin-based material, and lithium titanate. Said silicon-based material may include at least one of elemental silicon, a silicon oxide, a silicon carbon composite, a silicon nitrogen composite, a silicon alloy material. Said tin-based materials may include at least one of elemental tin, a tin oxide, and a tin alloy material. The present application is not limited to these materials, and other conventionally known materials that can be used as negative electrode active materials for secondary batteries may also be used. These negative electrode active materials can be used alone, or in combination of two or more materials.

In some embodiments, said negative electrode film layer may also optionally comprise a negative electrode conductive agent. In the present application, the type of said negative conductive agent is not particularly limited and, as an example, said negative conductive agent may include at least one of superconducting carbon, conductive graphite, acetylene black, carbon black, Ketjen black, carbon dots, carbon nanotubes, graphene, and carbon nanofibers.

In some embodiments, said negative electrode film layer may further optionally comprise a negative electrode binder. In the present application, the type of said negative binder is not particularly limited and, as an example, said negative electrode binder may include at least one of styrene-butadiene rubber (SBR), water-soluble unsaturated resin SR-1B, aqueous acrylic resins (e.g., polyacrylic acid PAA, polymethacrylic acid PMAA, polyacrylic acid sodium salt PAAS), polyacrylamide (PAM), polyvinyl alcohol (PVA), sodium alginate (SA), and carboxymethyl chitosan (CMCS).

In some embodiments, said negative electrode film layer may optionally also include other additives. As an example, the other additives may include thickeners, e.g., sodium carboxymethyl cellulose (CMC), and PTC thermistor material, etc.

In some embodiments, said negative electrode current collector may be a metal foil or a composite collector. As an example of a metal foil, a copper foil may be used. The composite collector may include a polymeric material matrix and a metallic material layer formed on at least one surface of the polymeric material matrix. As an example, the metallic material may be selected from at least one of copper, copper alloy, nickel, nickel alloy, titanium, titanium alloy, silver, and silver alloy. As an example, the polymer material matrix may be selected from polypropylene (PP), polyethylene terephthalate (PET), polybutylene terephthalate (PBT), polystyrene (PS), polyethylene (PE), etc.

Said negative electrode film layer is usually made by applying a negative electrode slurry to the negative electrode current collector followed by drying and cold pressing. Said negative electrode slurry is usually formed by dispersing the negative active material, an optional conductive agent, an optional binder, and any other optional additives in a solvent and stirring uniformly. The solvent may be N-methylpyrrolidone (NMP) and deionized water, but is not limited thereto.

Said negative electrode plate does not exclude other additional functional layers than said negative electrode film layer. For example, in some embodiments, the negative electrode plate described in the present application further comprises a conductive primer (e.g. being composed of a conductive agent and a binder) sandwiched between said negative electrode current collector and said negative electrode film layer and disposed on the surface of said negative electrode current collector. In some other embodiments, the negative electrode plate described in this application further comprises a protective layer covering the surface of said negative electrode film layer.

### [Separator]

There is no particular limitation on the type of separator in the present application, and any well-known porous-structure separator with good chemical stability and mechanical stability may be used.

In some embodiments, materials of the separator may be at least one of glass fibers, non-woven fabrics, polyethylene, polypropylene and polyvinylidene fluoride. The separator may be a single-layer film or a multi-layer composite film. When the separator is a multi-layer composite film, materials of each layer may be the same or different.

In some embodiments, said positive electrode plate, said separator, and said negative electrode plate may be made into an electrode assembly by a winding process or a stacking process.

### [Non-aqueous electrolytic solution]

The secondary battery comprises a non-aqueous electrolytic solution, which is a bridge for the passage of lithium ions in the secondary battery, takes the burden of transporting lithium ions between the positive and negative electrodes in the secondary battery, and plays a crucial role in capacity exertion, cycling performance, storage performance, rate performance and safety performance of the secondary battery.

At present, the most widely commercialized non-aqueous electrolytic solution system is a mixed carbonate solution of lithium hexafluorophosphate. However, lithium hexafluorophosphate has poor thermal stability in high temperature environments and will decompose to form PF₅ at higher temperatures. PF₅ has strong Lewis acidity and can interact with lone pair electrons on oxygen atoms in organic solvent molecules, causing organic solvents to decompose; In addition, PF₅ has a high sensitivity to trace amounts of water in non-aqueous electrolytic solutions. When it encounters water, it generates HF, which increases the acidity of the non-aqueous electrolytic solution and can easily damage the coating layer on the surface of the positive electrode active material. In particular, it is easy to damage the first coating layer including crystalline pyrophosphate and the second coating layer including crystalline phosphate, accelerating the dissolution of manganese ions and affecting the cycling and storage performance of the secondary battery. In addition, the carbon in the third coating layer will catalyze the oxidation and decomposition of non-aqueous electrolytic solutions under high voltage, further increasing the irreversible consumption of active lithium ions.

The inventors further conducted extensive research by cleverly adding the first additive represented by Formulae 1-A to 1-D to the non-aqueous electrolytic solution, which can reduce the dissolution of the first and second coating layers, reduce the catalytic oxidation effect of the third coating layer, and significantly improve the cycling and storage performance of the secondary battery.

In particular, the non-aqueous electrolytic solution according to the present application comprises a first additive including one or more of the compounds shown in formulae 1-A to 1-D, 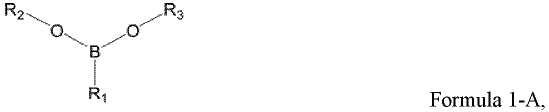 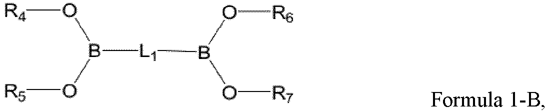 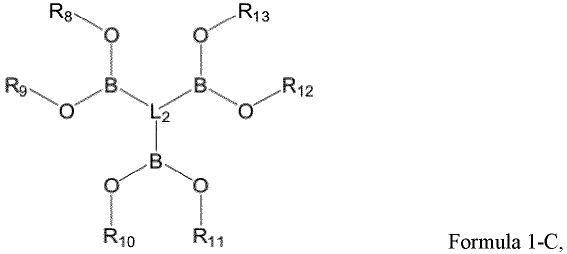 and

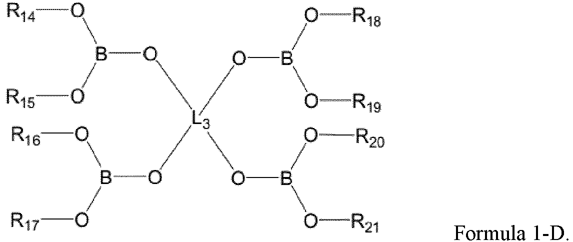

R₁ represents a hydrogen atom or at least one selected from the group consisting of hydroxyl, C1-C18 monovalent alkyl, C1-C18 monovalent alkoxy, C2-C18 monovalent alkoxy alkyl, C3-C18 monovalent cycloalkyl, C2-C18 monovalent heterocyclic alkyl, C6-C18 monovalent aryl, C7-C18 monovalent aryl alkyl, C7-C18 monovalent alkylaryl, C6-C18 monovalent aryloxy, C7-C18 monovalent aryloxy alkyl, C12-C18 monovalent aryl ether group, C2-C18 monovalent heteroaryl, C3-C18 monovalent heteroaryl alkyl, C3-C18 monovalent alkyl heteroaryl, and C1-C18 monovalent silyl.

R₂ to R₂₁ each independently represent a hydrogen atom or at least one selected from the group consisting of C1-C18 monovalent alkyl, C2-C18 monovalent alkoxyalkyl, C3-C18 monovalent cycloalkyl, C2-C18 monovalent oxocycloalkyl, C6-C18 monovalent aryl, C7-C18 monovalent aryl alkyl, C7-C18 monovalent alkylaryl, C7-C18 monovalent aryloxyalkyl, C12-C18 monovalent aryl ether group, C2-C18 monovalent heteroaryl, C3-C18 monovalent heteroaryl alkyl, C3-C18 monovalent alkyl heteroaryl, and C1-C18 monovalent silyl.

When R₂ and R₃ both are hydrogen atoms, R₁ is not hydroxyl.

R₂ and R₃ can further bond with each other to form a ring structure, R₄ and R₅ can further bond with each other to form a ring structure, R₆ and R₇ can further bond with each other to form a ring structure, R₈ and R₉ can further bond with each other to form a ring structure, R₁₀ and R₁₁ can further bond with each other to form a ring structure, R₁₂ and R₁₃ can further bond with each other to form a ring structure, R₁₄ and R₁₅ can further bond with each other to form a ring structure, R₁₆ and R₁₇ can further bond with each other to form a ring structure, Ris and R₁₉ can further bond with each other to form a ring structure, and R₂₀ and R₂₁ can further bond with each other to form a ring structure.

L₁ represents an oxygen atom or at least one selected from the group consisting of C1-C18 divalent alkyl, C1-C18 oxodialkyl, C6-C18 divalent cycloalkyl, C6-C18 divalent oxo cycloalkyl, C6-C18 divalent aryl, C7-C18 divalent arylalkyl, C7-C18 divalent alkyl aryl, C6-C18 divalent aryloxy, C7-C18 divalent aryloxyalkyl, C12-C18 divalent aryl ether group, C2-C18 divalent heteroaryl, C3-C18 divalent heteroaryl alkyl, and C3-C18 divalent alkyl heteroaryl.

L₂ represents at least one selected from the group consisting of C1-C18 trivalent alkyl, C1-C18 oxo trivalent alkyl, C6-C18 trivalent cycloalkyl, C6-C18 trivalent oxocycloalkyl, C6-C18 trivalent aryl, C7-C18 trivalent arylalkyl, C7-C18 trivalent alkylaryl, C6-C18 trivalent aryloxy, C7-C18 trivalent aryloxyalkyl, C12-C18 trivalent aryl ether group, C3-C18 trivalent heteroaryl, C3-C18 trivalent heteroaryl alkyl, and C3-C18 trivalent alkyl heteroaryl.

L₃ represents at least one selected from the group consisting of C1-C18 tetravalent alkyl, C1-C18 oxo tetravalent alkyl, C6-C18 tetravalent cycloalkyl, C6-C18 tetravalent oxo cycloalkyl, C6-C18 tetravalent aryl, C7-C18 tetravalent arylalkyl, C7-C18 tetravalent alkylaryl, C7-C18 tetravalent aryloxyalkyl, C12-C18 tetravalent aryl ether group, C4-C18 tetravalent heteroaryl, C4-C18 tetravalent heteroaryl, and C4-C18 tetravalent alkyl heteroaryl.

Under the conditiona that the non-aqueous electrolytic solution contains the first additive represented by Formulae 1-A to 1-D, it can form a dense and stable interface film on the surface of the positive active material during the secondary battery charging process, reduce the dissolution of the first and second coating layer s, reduce the dissolution of manganese ions, reduce the catalytic oxidation of the third coating layer under high voltage, and reduce the consumption of non-aqueous electrolytic solution and active lithium ions, This can significantly improve the cycling and storage performance of secondary batteries, especially under high temperature and high voltage conditions.

The first additive comprises one or more of the compounds represented by Formulae 1-A to 1-D. Specifically, in some embodiments, the first additive includes one or more of the compounds represented by formula 1-A; in some embodiments, the first additive includes one or more of the compounds represented by Formula 1-B; in some embodiments, the first additive includes one or more of the compounds represented by Formula 1-C; in some embodiments, the first additive includes one or more of the compounds represented by Formula 1-D; in some embodiments, the first additive includes any two, three, or four of the compounds represented by Formulae 1-A to 1-D.

In some embodiments according to the present application, optionally, R₂ and R₃ bond with each other to form a ring structure. More optionally, R₂ and R₃ bond with each other to form a ring structure with five or more members.

In some embodiments according to the present application, at least one of R₁ to R₃ represents C3-C18 monovalent cycloalkyl, C2-C18 monovalent oxocycloalkyl, C6-C18 monovalent aryl, C7-C18 monovalent arylalkyl, C7-C18 monovalent alkylaryl, C7-C18 monovalent aryloxyalkyl, C12-C18 monovalent aryl ether group, C2-C18 monovalent heteroaryl, C3-C18 monovalent heteroarylalkyl, or C3-C18 monovalent alkyl heteroaryl; and optionally, R₁ to R3 independently represent C6-C18 monovalent aryl, C7-C18 monovalent arylalkyl, C7-C18 monovalent alkylaryl, C7-C18 monovalent aryloxyalkyl, C12-C18 monovalent aryl ether group, C2-C18 monovalent heteroaryl group, C3-C18 monovalent heteroaryl group, or C3-C18 monovalent alkyl heteroaryl group.

When R₁ to R₃ represent the above substituents, it is helpful to form an interface film containing cross-linked macromolecular polymer on the surface of the positive active material, further reduce the dissolution of the first and second coating layer s, further reduce the catalytic oxidation of the third coating layer, reduce the dissolution of manganese ions and the consumption of non-aqueous electrolytic solution and active lithium ions, so as to further enhance the improvement effect on the cycling performance and storage performance of the secondary battery.

As an example, the first additive comprises at least one of the following compounds:

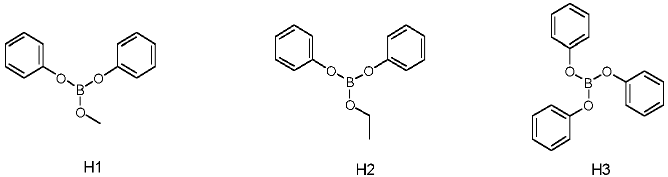

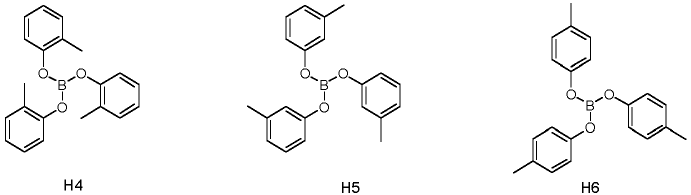

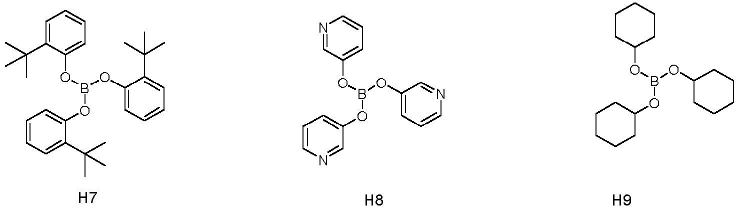

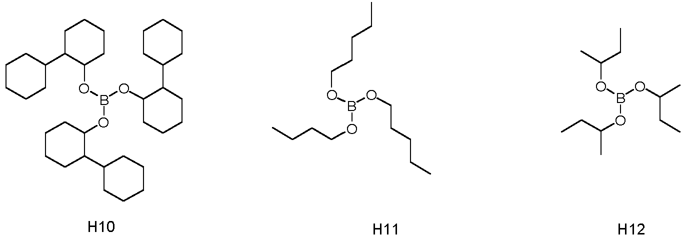

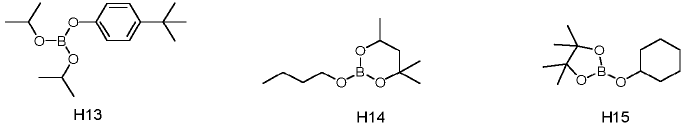

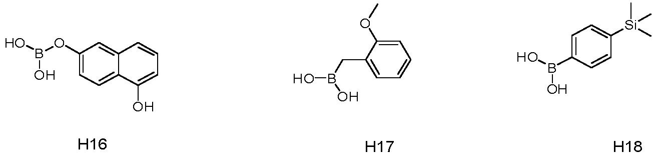

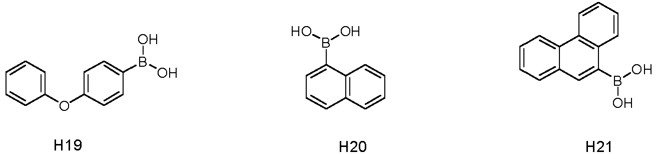

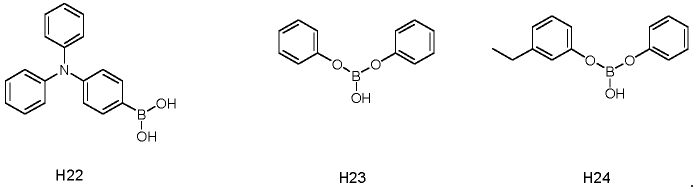

Optionally, the compound of Formula 1-A comprises at least one selected from the group consisting of H1 to H10, and H13 to H15, and more optionally, the compound of Formula 1-A comprises at least one selected from the group consisting of H1 to H8.

In some embodiments, alternatively, R₄ to R₇ represent hydrogen atoms, and L₁ represents C6-C18 divalent cycloalkyl, C6-C18 divalent oxoalkyl, C6-C18 divalent aryl, C7-C18 divalent arylalkyl, C7-C18 divalent alkylaryl, C6-C18 divalent aryloxy, C7-C18 divalent aryloxyalkyl, C12-C18 divalent aryl ether gropu, C2-C18 divalent heteroaryl, C3-C18 divalent heteroarylalkyl, or C3-C18 divalent alkyl heteroaryl. Optionally, R₄ to R₇ represent hydrogen atoms, and L₁ represents C6-C18 divalent aryl, C7-C18 divalent arylalkyl, C7-C18 divalent alkylaryl, C6-C18 divalent aryloxy, C7-C18 divalent aryloxyalkyl, C12-C18 divalent aryl ether group, C2-C18 divalent heteroaryl group, C3-C18 divalent heteroaryl or C3-C18 divalent alkyl heteroaryl. Optionally, R₄ to R₇ represent hydrogen atoms, and L₁ represents divalent phenyl, divalent diphenyl, divalent triphenyl, divalent tetraphenyl, divalent naphthyl, divalent anthracene, divalent phenyl, divalent pyrene, or divalent fluorene.

In some embodiments, R4 and R5, and R6 and R7, at least one pair of them, bond to form a ring structure. For example, R4 and R5 bond to form a ring structure, or R6 and R7 bond to form a ring structure, or R4 and R5 bond to form a ring structure and R6 and R7 bond to form a ring structure.

In some embodiments, optionally, R4 to R7 are the same and are not hydrogen atoms.

In some embodiments, optionally, L1 represents an oxygen atom, and R4 to R7 each independently represent C3-C18 monovalent cycloalkyl, C2-C18 monovalent oxocyclic alkyl, C6-C18 monovalent aryl, C7-C18 monovalent arylalkyl, C7-C18 monovalent alkylaryl, C7-C18 monovalent aryloxyalkyl, C12-C18 monovalent aryl ether, C2-C18 monovalent heteroaryl, C3-C18 monovalent heteroaryl, or C3-C18 monovalent alkyl heteroaryl. Optionally, L₁ represents an oxygen atom, and R₄ to R7 each independently represent C6-C18 monovalent aryl, C7-C18 monovalent arylalkyl, C7-C18 monovalent alkylaryl, C7-C18 monovalent aryloxyalkyl, C12-C18 monovalent aryl ether group, C2-C18 monovalent heteroaryl, C3-C18 monovalent heteroaryl alkyl, or C3-C18 monovalent alkyl heteroaryl group.

As an example, the first additive comprises at least one of the following compounds:

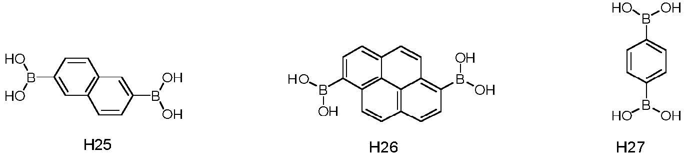

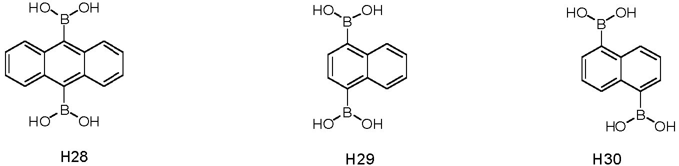

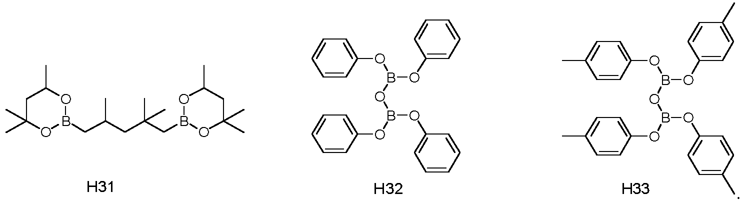

Optionally, the compounds represented by Formulas 1-B include at least one of H31 to H33. Optionally, the compounds represented by Formulas 1-B include at least one of H32 to H33.

In some embodiments, at least one group of R8 and R9, R10 and R11, R12 and R13 can optionally bond to form a ring structure. For example, R8 and R9 bond to form a ring structure, R10 and R11 bond to form a ring structure, R12 and R13 bond to form a ring structure, or any two or three groups of R8 and R9, R10 and R11, R12 and R13 bond to form a ring structure.

In some embodiments, optionally, R8 to R13 each independently represent C1-C18 monovalent alkyl, C2-C18 monovalent alkoxyalkyl, C3-C18 monovalent cycloalkyl, C2-C18 monovalent oxo cycloalkyl, C6-C18 monovalent aryl, C7-C18 monovalent arylalkyl C7-C18 monovalent alkylaryl, C7-C18 monovalent aryloxyalkyl, C12-C18 monovalent aryl ether, C2-C18 monovalent heteroaryl, C3-C18 monovalent heteroarylalkyl, or C3-C18 monovalent alkyl heteroaryl.

In some embodiments, optionally, L₂ represents C6-C18 trivalent cycloalkyl, C6-C18 trivalent oxoalkyl, C6-C18 trivalent aryl, C7-C18 trivalent arylalkyl, C7-C18 trivalent alkylaryl, C6-C18 trivalent aryloxy, C7-C18 trivalent aryloxyalkyl, C12-C18 trivalent aryl ether, C3-C18 trivalent heteroaryl, C3-C18 trivalent heteroarylalkyl, or C3-C18 trivalent alkyl heteroaryl. More optionally, L₂ represents C6-C18 trivalent aryl, C7-C18 trivalent aryl alkyl, C7-C18 trivalent alkylaryl, C6-C18 trivalent aryloxy, C7-C18 trivalent aryloxy alkyl, C12-C18 trivalent aryl ether, C3-C18 trivalent heteroaryl, C3-C18 trivalent heteroaryl alkyl, or C3-C18 trivalent alkyl heteroaryl. Optionally, L₂ represents trivalent phenyl, trivalent phenylalkyl, and trivalent alkylphenyl.

As an example, the compound of Formula 1-C comprises at least one of the following compounds:

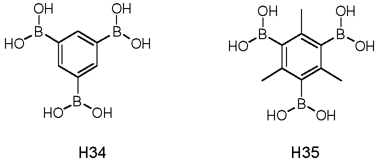

In some embodiments, optionally, R14 and R15, R16 and R17, R18 and R19, R20 and R21, at least one pair of them, bond to form a ring structure. For example, R14 and R15 bond to form a ring structure, or R16 and R17 bond to form a ring structure, or R18 and R19 bond to form a ring structure, or R20 and R21 bond to form a ring structure, or any two, three, or four groups of R14 and R15, R16 and R17, R18 and R19, R20 and R21 bond to form a ring structure.

In some embodiments, optionally, R14 to R21 each independently represent C1-C18 monovalent alkyl, C2-C18 monovalent alkoxyalkyl, C3-C18 monovalent cycloalkyl, C2-C18 monovalent oxoalkyl, C6-C18 monovalent aryl, C7-C18 monovalent arylalkyl, C7-C18 monovalent alkylaryl, C7-C18 monovalent aryloxyalkyl, C12-C18 monovalent aryl ether, C2-C18 monovalent heteroaryl, C3-C18 monovalent heteroarylalkyl, or C3-C18 monovalent alkyl heteroaryl.

In some embodiments, optionally, L₃ represents C6-C18 tetravalent cycloalkyl, C6-C18 tetravalent oxoalkyl, C6-C18 tetravalent aryl, C7-C18 tetravalent arylalkyl, C7-C18 tetravalent alkylaryl, C7-C18 tetravalent aryloxyalkyl, C12-C18 tetravalent aryl ether, C4-C18 tetravalent heteroaryl, C4-C18 tetravalent heteroarylalkyl, or C4-C18 tetravalent alkyl heteroaryl. More optionally, L₃ represents C6-C18 tetravalent aryl, C7-C18 tetravalent aryl alkyl, C7-C18 tetravalent alkylaryl, C7-C18 tetravalent aryloxyalkyl, C12-C18 tetravalent aryl ether, C4-C18 tetravalent heteroaryl, C4-C18 tetravalent heteroaryl alkyl, or C4-C18 tetravalent alkyl heteroaryl. Optionally, L₃ represents tetravalent phenyl, tetravalent biphenyl, tetravalent triphenyl, or tetravalent tetraphenyl.

As an example, the compound of Formula 1-D comprises at least one of the following compounds:

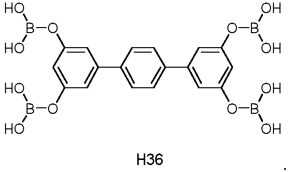

The inventors have found in the research process that taking at least one of the above compounds H1 to H36 as the first additive can form a more compact and stable interface film on the surface of the positive active material, which helps to further reduce the dissolution of the first and second coating layer s, further reduce the catalytic oxidation of the third coating layer, and further reduce the dissolution of manganese ions and the consumption of non-aqueous electrolytic solution and active lithium ions; this can further enhance the improvement effect on the cycling performance and storage performance of secondary batteries.

Optionally, the first additive comprises at least one selected from the group consisting of H1 to H10, H13 to H15, H31 to H33, and more optionally, the first additive comprises at least one selected from the group consisting of H1 to H8 and H32 to H33. These first additives help to form an interface film containing cross-linked macromolecular polymer on the surface of the positive active material, further reduce the dissolution of the first and second coating layer s, further reduce the catalytic oxidation of the third coating layer, thus further reducing the dissolution of manganese ions and the consumption of non-aqueous electrolytic solution and active lithium ions, which can further enhance the improvement of the secondary battery cycling performance and storage performance.

During the research process, the inventors also found that when the non-aqueous electrolytic solution contains too much first additive, the positive electrode interface impedance significantly increases, which affects the capacity exertion and rate performance of the secondary battery. Therefore, the content of the first additive in non-aqueous electrolytic solution should not be too high. In some embodiments, the content of the first additive is W1% by weight, with W1 ranging from 0.01 to 20, optionally from 0.1 to 10, and more optionally from 0.3 to 5, based on the total weight of the non-aqueous electrolytic solution. When the content of the first additive is within an appropriate range, it can reduce the dissolution of the first and second coating layers, reduce the catalytic oxidation effect of the third coating layer, and not deteriorate the positive electrode interface impedance, thereby significantly improving the cycling and storage performance of the secondary battery, while not affecting the capacity exertion and rate performance of the secondary battery.

In some embodiments, the non-aqueous electrolytic solution also includes a second additive, which includes one or more of sulfonic acid lactones, cyclic sulfates, lithium difluorophosphate (LiPO₂F₂), lithium difluorooxalate phosphate (LiDODFP), and lithium difluorooxalate borate (LiDFOB).

The second additive helps to form a low-impedance interface film on the surface of the positive active material. In addition, the second additive can also form a dense and stable interface film on the surface of the negative active material so as to reduce the direct contact between the negative active material and non-aqueous electrolytic solution, and reduce the negative interface side reaction. Therefore, when the non-aqueous electrolytic solution contains both the first and second additives, it helps to significantly improve the cycling and storage performance of the secondary battery, while also enhancing the capacity exertion and rate performance of the secondary battery.

In some embodiments according to the present application, the sulfonic acid lactones comprise at least one of the compounds as represented by Formula 2-A,

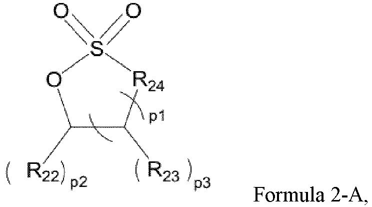

p1 represents 1, 2, or 3, p2 represents 1 or 2, and p3 represents 1 or 2.

R₂₂, at each occurrence, independently represents hydrogen atom, halogen atom, carboxylic ester group (-C(=O)-O-), sulfonic ester group(-S(=O)z-O-), C1-C6 monovalent alkyl, C1-C6 monovalent haloalkyl, C1-C6 monovalent alkoxy, C1-C6 monovalent haloalkoxy, C2-C6 monovalent alkenyl, or a chain structure or a ring structure formed from more than one of the aforementioned groups linked together with single bonds. Optionally, the ring structure is a cylic sulfonic ester group, a cyclic carboxylic ester group, or oxacycloalkyl. More optionally, the ring structure is a four-membered ring structure, a five-membered ring structure, or a six-membered ring structure.

When R₂₂ represents the ring structure, it is bonded to the ring of Formula 2-A via a single bond or shares a carbon atom with the ring of Formula 2-A to form a spiral-ring compound.

R₂₃, at each occurrence, independently represents hydrogen atom, halogen atom, carboxylic ester group (-C(=O)-O-), sulfonic ester group (-S(=O)₂-O-), C1-C6 monovalent alkyl, C1-C6 monovalent haloalkyl, C1-C6 monovalent alkoxy, C1-C6 monovalent haloalkoxy, and C2-C6 monovalent alkenyl p, or a chain structure or a ring structure formed from more than one of the aforementioned groups linked together with single bonds. Optionally, the ring structure is a cyclic sulfonic ester group, a cyclic carboxylic ester group, or oxacycloalkyl. More optionally, the ring structure is a four-membered ring structure, a five-membered ring structure, or a six-membered ring structure.

When R₂₃ represents the ring structure, it is bonded to the ring of Formula 2-A via a single bond or shares a carbon atom with the ring of Formula 2-A to form a spiral-ring compound.

R₂₄ represents carbonyl (C=O) or C(Y¹)₂, wherein Y₁ at each occurrence independently represents hydrogen atom, halogen atom, carboxylic ester group (-C(=O)-O-), sulfonic ester group (-S(=O)₂-O-), C1-C6 monovalent alkyl group, C1-C6 monovalent haloalkyl group, C1-C6 monovalent alkoxy group, C1-C6 monovalent haloalkoxy group, C2-C6 monovalent alkenyl group, C6-C12 monovalent aryl group, or a combination thereof.

R₂₂ and R₂₃ can further bond with each other to form a ring structure.

Optionally, the sulfonic acid lactone comprises at least one of the following compounds:

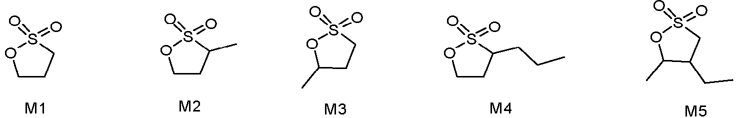

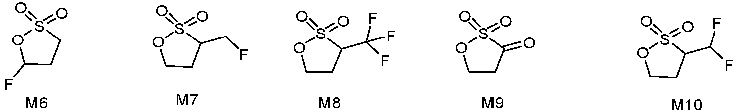

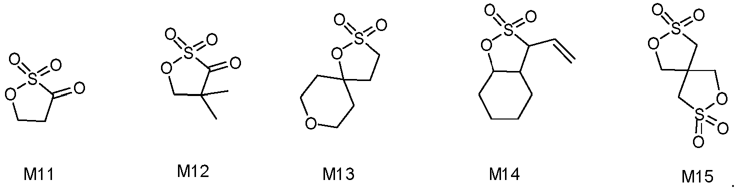

In some embodiments according to the present application, the cyclic sulfate comprises at least one of the compounds represented by Formula 2-B,

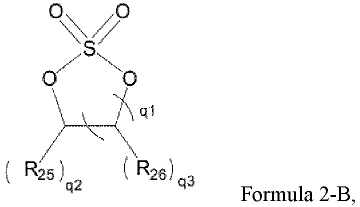

q1 represents 1, 2, or 3, q2 represents 1 or 2, q3 represents 1 or 2.

R₂₅, at each occurrence, independently represents a hydrogen atom, halogen atom, carbonyl oxygen atom, carboxylic ester group (-C(=O)-O-), sulfate ester group (-O-S(=O)₂-O-), C1-C6 monovalent alkyl, C1-C6 monovalent haloalkyl, C1-C6 monovalent alkoxy, C1-C6 monovalent haloalkoxy, C2-C6 monovalent alkenyl, or a chain structure or a ring structure formed from more than one of the aforementioned groups linked together with single bonds. Optionally, the ring structure is a cylic sulfonic ester group, a cyclic carboxylic ester group, or oxacycloalkyl. More optionally, the ring structure is a four-membered ring structure, a five-membered ring structure, or a six-membered ring structure.

When R₂₅ represents the ring structure, it is bonded to the ring of Formula 2-B via a single bond or shares a carbon atom with the ring of Formula 2-B to form a spiral-ring compound.

R₂₆, at each occurrence, independently represents a hydrogen atom, halogen atom, carboxylic ester group (-C(=O)-O-), sulfate group (-O-S(=O)₂-O-), C1-C6 monovalent alkyl group, C1-C6 monovalent haloalkyl, C1-C6 monovalent alkoxy, C1-C6 monovalent haloalkoxy, C2-C6 monovalent alkenyl, or a chain structure or a ring structure formed from more than one of the aforementioned groups linked together with single bonds. Optionally, the ring structure is a cylic sulfonic ester group, a cyclic carboxylic ester group, or oxacycloalkyl. More optionally, the ring structure is a four-membered ring structure, a five-membered ring structure, or a six-membered ring structure.

When R₂₆ represents the ring structure, it is bonded to the ring of Formula 2-B via a single bond or shares a carbon atom with the ring of Formula 2-B to form a spiral-ring compound.

R₂₅ and R₂₆ can further bond with each other to form a ring structure.

Optionally, the cyclic sulfate comprises at least one of the following compounds:

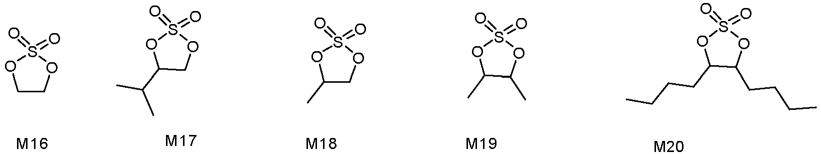

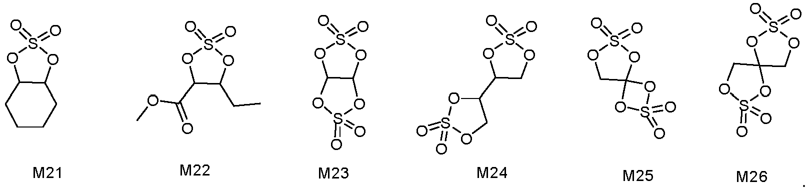

During the research process, the inventors have found that when the non-aqueous electrolytic solution contains too much second additive, the positive electrode interface impedance does not decrease but increases, thereby affecting the capacity exertion and rate performance of the secondary battery. Therefore, the content of the second additive in non-aqueous electrolytic solution should not be too high. In some embodiments, the content of the second additive is W2% by weight, with W2 ranging from 0.01 to 20, optionally from 0.1 to 10, and more optionally from 0.3 to 5, based on the total weight of the non-aqueous electrolytic solution. When the content of the second additive is within an appropriate range, it can effectively improve the capacity exertion and rate performance of the secondary battery.

During the research process, the inventors also found that the ratio of the content W1 of the first additive to the content W2 of the second additive affects the electrochemical performance of the secondary battery. In some embodiments, W1/W2 ranges from 0.01 to 20. Optionally, W1/W2 is 0.01 to 10, 0.1 to 10, 0.1 to 8, 0.1 to 5, 0.2 to 5, 0.3 to 5, or 1 to 5. When W1/W2 is within the appropriate range, it can better achieve the synergistic effect between the two, help to form a dense, stable and low-impedance interface film on the surface of the positive active material, further reduce the dissolution of the first and second coating layer s, further reduce the catalytic oxidation of the third coating layer, and further reduce the leaching-out of manganese ions and the consumption of non-aqueous electrolytic solution and active lithium ions. This can further enhance the improvement effect on the cycling performance and storage performance of the secondary battery, while enhancing the capacity exertion and rate performance of the secondary battery. And it can effectively avoid the following situations: when W1/W2 is large, the second additive cannot effectively reduce the positive electrode interface impedance, which may affect the capacity exertion and rate performance of the secondary battery; When W1/W2 is small, it cannot significantly reduce the dissolution of the first and second coating layers, and reduce the catalytic oxidation effect of the third coating layer. Therefore, the improvement effect on the cycling performance and storage performance of the secondary battery may not be significant.

In some embodiments, the first coating layer has a coating amount C1% by weight, the second coating layer has a coating amount C2% by weight, the content W1% by weight of the first additive and the content W2 % by weight of the second additive satisfy (W1+W2)/(C1+C2+C3) ranging from 0.001 to 2. Optionally, (W1+W2)/(C1+C2+C3) is 0.01 to 2, 0.01 to 1.5, 0.01 to 1, 0.1 to 1, 0.15 to 1, 0.2 to 1, or 0.25 to 1. Under the condition that (W1+W2)/(C1+C2+C3) is within an appropriate range, it can significantly enhance the improvement effect on the cycling and storage performance of the secondary battery, while also enhancing the capacity exertion and rate performance of the secondary battery. And it can effectively avoid the following situations: when (W1+W2)/(C1+C2+C3) is too small, there is no enough first and second additives to form a film on the surface of the positive electrode active material, which cannot significantly reduce the dissolution of the first and second coating layers, reduce the catalytic oxidation effect of the third coating layer, and thus the improvement effect on the cycling performance and storage performance of the secondary battery is not significant; When (W1+W2)/(C1+C2+C3) is large, the positive electrode interface impedance increases, which affects the capacity exertion and rate performance of the secondary battery.

In some embodiments, the electrolyte injection coefficient Q0 g/Ah of the secondary battery satisfies Q0 ranging from 2.5 to 4.0.

In some embodiments, the content of the first additive W1%, the content of the second additive W2%, the initial capacity D0 mAh/g of the secondary battery, the electrolyte injection coefficient Q0 g/Ah of the secondary battery, and the specific surface area B m²/g of the positive electrode active material satisfy that [(W1%+W2%) × D0 × Q0]/B is from 0.005 to 10, optionally from 0.01 to 5. When [(W1%+W2%) × D0 × Q0]/B is within the appropriate range, the improvement effect on the cycling and storage performance of the secondary battery can be significantly enhanced, while the capacity exertion and rate performance of the secondary battery are also improved. And the following situations can be avoided: when [(W1%+W2%) × D0 × Q0]/B is too small, there is no enough first and second additives to form a film on the surface of the positive electrode active material, so the dissolution of the first and second coating layers cannot be significantly reduced and the catalytic oxidation effect of the third coating layer cannot be further reduced. Therefore, the effect on improving the cycling performance and storage performance of the secondary battery is not significant. When [(W1%+W2%) × D0 × Q0]/B is too large, the positive electrode interface impedance increases, affecting the capacity exertion and rate performance of the secondary battery.

An initial capacity D0 in mAh/g of a secondary battery can be obtained by the following method. A secondary battery is charged to a charge cut-off voltage at 0.33C at a constant temperature of 25°C and then is charged at the constant voltage until the current is less than or equal to 0.05mA. After that, the battery is allowed to stand for 5 minutes, and then is discharged to a discharge cut-off voltage at 0.33C. At this time, a ratio of the discharge capacity to the mass of the positive electrode active material is an initial capacity D0 in mAh/g of the secondary battery. In the test method of the present application, the charge and discharge cut-off voltage of the secondary battery may be 2.5V-4.3V.

In some embodiments, the non-aqueous electrolytic solution also includes a third additive, which includes cyclic carbonate compounds containing unsaturated bonds, halogenated cyclic carbonate compounds, nitrile compounds, phosphonitrile compounds, aromatic hydrocarbons and halogenated aromatic hydrocarbon compounds, isocyanate compounds, anhydride compounds, phosphite ester compounds, phosphate ester compounds, sulfite ester compounds One or more of the dimethyl disulfonate compounds. When the non-aqueous electrolytic solution contains the first additive and the third additive, or the first additive, the second additive and the third additive at the same time, the third additive helps to form a more compact and stable interface film on the surface of the positive and/or negative active materials, thus helping to further improve at least one of the cycling performance, storage performance and magnification performance of the secondary battery. In some embodiments, the content of the third additive is W3% by weight of, with W3 being 10 or less, optionally ranging from 0.1 to 10, and more optionally from 0.5 to 5, based on the total weight of the non-aqueous electrolytic solution.

There are no special restrictions on the types of third additives in this application, as long as they do not undermine the main purpose of this application. For example, third additives can be selected from the following specific substances at any ratio.

### (a) Cyclic carbonate compound containing carbon-carbon unsaturated bonds

The cyclic carbonate compound containing carbon-carbon unsaturated bonds may comprise one or more of the compounds shown in Formula 3-1. R₂₇ represents C1-C6 alkylene group with alkenyl or alkynyl substituents on its branched chain, or a substituted or unsubstituted C2-C6 straight-chain alkenylene group, wherein the substituent is one or more selected from a halogen atom, C1-C6 alkyl group, and a C2-C6 alkenyl group.

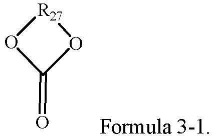

Optionally, the cyclic carbonate compound containing a carbon-carbon unsaturated bond may include, but is not limited to, one or more of the following compounds.

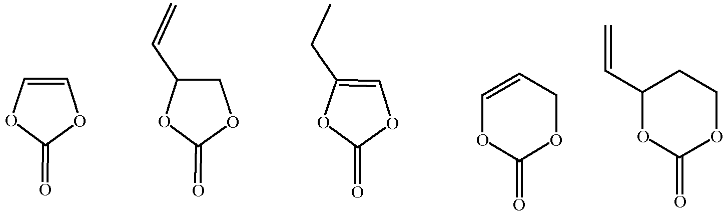

### (b) Halogen-substituted cyclic carbonate compound

The halogen-substituted cyclic carbonate compound may include one or more of the compounds shown in Formula 3-2. R₂₈ represents a halogen-substituted C1-C6 alkylene group, or a halogen-substituted C2-C6 alkenylene group.

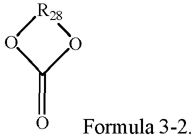

Optionally, the halogen-substituted cyclic carbonate compound may include, without being limited to, one or more of fluoro ethylene carbonate (FEC), fluoro propylene carbonate (FPC), trifluoro propylene carbonate (TFPC), and trans or cis-4,5-difluoro-1,3-dioxolan-2-one (hereinafter, both are collectively referred to as DFEC).

### (c) Nitrile compound

The nitrile compound may be a dinitrile or trinitrile compound. Optionally, the nitrile compound may comprise one or more of the compounds shown in Formula 3-3 and Formula 3-4. R₂₉ represents substituted or unsubstituted C1-C12 alkylene, substituted or unsubstituted C1-C12 oxa-alkylene, substituted or unsubstituted C2-C12 alkenylene, or substituted or unsubstituted C2-C12 alkynylene, and R₃₀ to R₃₂ each independently represent, substituted or unsubstituted C0-C12 alkylene, substituted or unsubstituted C1-C12 oxa-alkylene, substituted or unsubstituted C2-C12 alkenylene, or substituted or unsubstituted C2-C12 alkynylene, wherein the substituent is one or more selected from a halogen atom, a nitrile group, C1-C6 alkyl, C2-C6 alkenyl, and C1-C6 alkoxy.

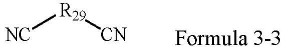

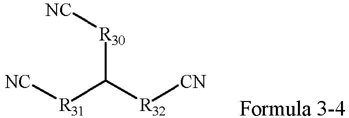

Optionally, the nitrile compound may include one or more of ethanedinitrile, propanedinitrile, butanedinitrile, pentanedinitrile, hexanedinitrile, heptanedinitrile, octanedinitrile, nonanedinitrile, decanedinitrile, undecanedinitrile, dodecanedinitrile, tetramethylsuccinonitrile, methylpentanedinitrile, butadienedinitrile, 2-pentenedinitrile, hex-2-enedinitrile, hex-3-enedinitrile, oct-4-enedinitrile, oct-4-ynedinitrile, 1,2,3-propane-tricarbonitrile, 1,3,5-pentanetricarbonitrile, 1,3,6-hexanetrinitrile.

### (d) Phosphonitrile compound

The phosphonitrile compound may be a cyclic phosphonitrile compound. The cyclic phosphonitrile compound may include one or more of methoxy pentafluorocyclotriphosphonitrile, ethoxy pentafluorocyclotriphosphonitrile, phenoxy pentafluorocyclotriphosphonitrile, and ethoxy heptafluorocyclotetraphosphonitrile. Optionally, the cyclic phosphonitrile compound may include one or more of methoxy pentafluorocyclotriphosphonitrile, ethoxy pentafluorocyclotriphosphonitrile, phenoxy pentafluorocyclotriphosphonitrile. Further optionally, the cyclic phosphonitrile compound may include methoxy pentafluorocyclotriphosphonitrile, ethoxy pentafluorocyclotriphosphonitrile, or a combination thereof.

### (e) Aromatic hydrocarbon and halogenated aromatic hydrocarbon compound

The aromatic hydrocarbon and halogenated aromatic hydrocarbon compound may include one or more of cyclohexylbenzene, fluorinated cyclohexylbenzene compounds (e.g., 1-fluoro-2-cyclohexylbenzene, 1-fluoro-3-cyclohexylbenzene, 1-fluoro-4-cyclohexylbenzene), t-butylbenzene, t-amylbenzene, 1-fluoro-4-t-butylbenzene, biphenyl, terphenyl (ortho-, meta-, para-), diphenyl ether, fluorobenzene, difluorobenzene (ortho-, meta-, para-), anisole, 2,4-difluoroanisole, partial hydrides of terphenyl (e.g., 1,2-dicyclohexylbenzene, 2-phenylbicyclohexyl, 1,2-diphenylcyclohexane, o-cyclohexylbiphenyl). Optionally, the aromatic hydrocarbon and halogenated aromatic hydrocarbon compound may include one or more of biphenyl, terphenyl (ortho-, meta-, para-), fluorobenzene, cyclohexylbenzene, t-butylbenzene, t-amylbenzene. Further optionally, the aromatic hydrocarbon and halogenated aromatic hydrocarbon compound may include one or more of biphenyl, o-terphenyl, fluorobenzene, cyclohexylbenzene, and tertpentylbenzene.

### (f) Isocyanate compounds

The isocyanate compound may include one or more of methyl isocyanate, ethyl isocyanate, butyl isocyanate, phenyl isocyanate, tetramethylene diisocyanate, hexamethylene diisocyanate, octamethylene diisocyanate, 1,4-phenylene diisocyanate, 2-isocyanatoethyl acrylate, and 2-isocyanatoethyl methacrylate. Optionally, the isocyanate compound may comprise one or more of hexamethylene diisocyanate, octamethylene diisocyanate, 2-isocyanatoethyl acrylate, and 2-isocyanatoethyl methacrylate.

### (g) Acid anhydride compound

The acid anhydride compound may be a chain acid anhydride or a cyclic acid anhydride. Specifically, the acid anhydride compound may include one or more of acetic anhydride, propionic anhydride, succinic anhydride, maleic anhydride, 2-allyl succinic anhydride, glutaric anhydride, itaconic anhydride, and 3-sulfo-propionic anhydride. Optionally, the acid anhydride compound may include one or more of succinic anhydride, maleic anhydride, and 2-allyl succinic anhydride. Further optionally, the acid anhydride compound may include succinic anhydride, 2-allyl succinic anhydride, or a combination thereof.

### (h) Phosphite compound

The phosphite compound may be a silane phosphite compound, and specifically may include one or more of the compounds shown in Formulae 3-5, with R₃₃ to R41 each independently representing halogen-substituted or unsubstituted C1-C6 alkyl.

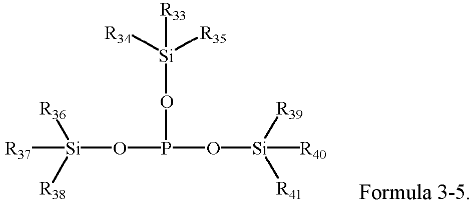

Optionally, the silane phosphite compound may include, but is not limited to, one or more of the following compounds.

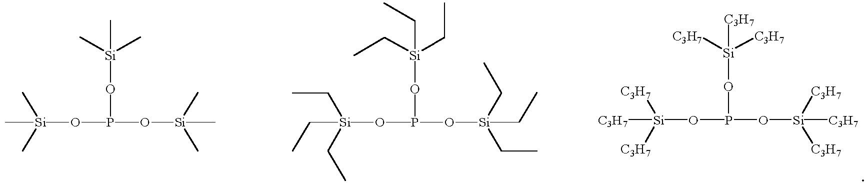

### (i) Phosphate ester compound

The phosphate ester compound may be a silane phosphate ester compound, and specifically may include one or more of the compounds shown in Formula 3-6, with R₄₂ to R₅₀ each independently representing halogen-substituted or unsubstituted C1-C6 alkyl.

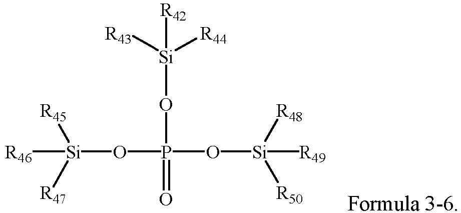

Optionally, the silane phosphate compound may include, but is not limited to, one or more of the following compounds.

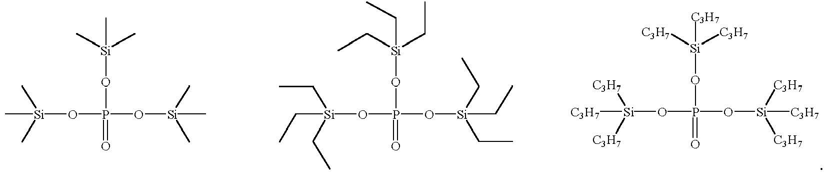

### (j) Sulfite compound

The sulfite compound may be a cyclic sulfite compound, and specifically may include one or more of the compounds shown in Formula 3-7. R₅₁ represents substituted or unsubstituted C1-C6 alkylene, substituted or unsubstituted C2-C6 alkenylene, wherein the substituent is one or more selected from a halogen atom, C1-C3 alkylene, and C2-C4 alkenylene.

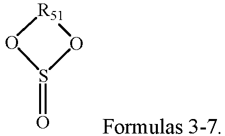

Optionally, the sulfite compound compound may include one or more of ethylene sulfite (ES), propylene sulfite (PS), and butylene sulfite (BS).

### (k) Methylene disulfonate compound

The methylene disulfonate compound may include one or more of the compounds shown in Formula 3-8. R₅₂ to R₅₅ each independently represent a hydrogen atom, a halogen atom, substituted or unsubstituted C1-C10 alkyl group, and substituted or unsubstituted C2-C10 alkenyl, wherein the substituent is one or more selected from a halogen atom, C1-C3 alkyl, and C2-C4 alkenyl.

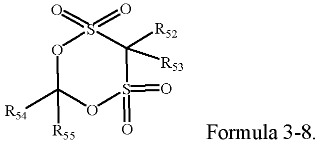

Optionally, the methylene disulfonate compound may include, but is not limited to, one or more of the following compounds.

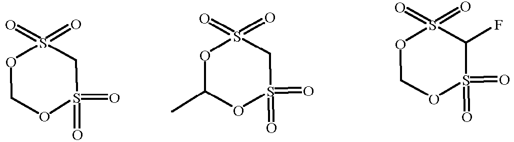

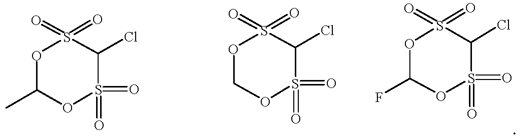

In some embodiments, said third additive may comprise one or more of vinylidene carbonate (VC), vinyl ethylene carbonate (VEC), fluorinated ethylene carbonate (FEC). These third additives are electrochemical reduction additives, and their reduction potential is higher than that of an organic solvent, so that electrochemical reduction can preferentially occur on the surface of the negative electrode active materials to form an interfacial membrane with excellent performances, thereby reducing destruction of the interfacial membrane by the organic solvent, and thus the secondary battery adopting the same can have better electrochemical performance and safety performance.

Said non-aqueous electrolytic solution further comprises a lithium salt and an organic solvent. The present application has no particular limitation on the types of said lithium salt and said organic solvent, which may be selected according to actual needs.

As an example, said organic solvent may include one or more of chain carbonate, cyclic carbonate, carboxylic acid ester. Among them, the present application has no specific limitation on the types of said chain carbonate, said cyclic carbonate, and said carboxylic acid ester, which can be selected according to actual needs. Optionally, said organic solvent includes one or more of dimethyl carbonate (DMC), diethyl carbonate (DEC), dipropyl carbonate (DPC), methyl ethyl carbonate (EMC), methyl propyl carbonate (MPC), ethyl propyl carbonate (EPC), ethylene carbonate (EC), propylene carbonate (PC), butylene carbonate (BC), gamma-butyrolactone (GBL), methyl formate (MF), ethyl formate (EF), methyl acetate (MA), ethyl acetate (EA), propyl acetate (PA), methyl propionate (MP), ethyl propionate (EP), propyl propionate (PP), and tetrahydrofuran (THF).

As an example, said lithium salt may include one or more of LiN(CₘF₂ₘ₊₁SO₂)(CₙF₂ₙ₊₁ SO₂), LiPF₆, LiBF₄, LiBOB, LiAsF₆, Li(FSO₂)₂N, LiCF₃SO₃, and LiClO₄, with m and n being natural numbers. When the non-aqueous electrolytic solution includes the lithium salt described above, this helps to form a dense, stable and low-impedance interface film on the surface of the positive electrode and/or negative electrode active materials, and effectively improves at least one of cycling performance, storage performance and rate performance of the secondary battery.

The cyclic carbonate has a higher dielectric constant, which facilitates dissociation of lithium salts. In some embodiments, said cyclic carbonate may be present in a content of 20 wt% or more, optionally from 20 wt% to 80 wt%, more optionally from 20 wt% to 50 wt%, based on the total weight of said organic solvent. Optionally, said cyclic carbonate includes one or more of ethylene carbonate (EC), propylene carbonate (PC), and butylene carbonate (BC).

The chain carbonate has a smaller dielectric constant and a weaker ability to dissociate lithium salts, but has a low viscosity and good fluidity and thus it can increase migration rate of lithium ions. In some embodiments, said chain carbonate may be present in a content of 10 wt% or more, optionally from 10 wt% to 80 wt%, based on the total weight of said organic solvent. Optionally, said chain carbonate comprises one or more of dimethyl carbonate (DMC), diethyl carbonate (DEC), dipropyl carbonate (DPC), methyl ethyl carbonate (EMC), methyl propyl carbonate (MPC), and ethyl propyl carbonate (EPC).

Carboxylic acid esters have advantages of low viscosity and high dielectric constant and thus it may enhance conductivity of a non-aqueous electrolytic solution. In some embodiments, said carboxylic acid ester may be present in a content of from 0 wt% to 70 wt%, optionally from 0 wt% to 60 wt%, based on the total weight of said organic solvent. Optionally, said carboxylic acid ester comprises one or more of methyl formate (MF), ethyl formate (EF), methyl acetate (MA), ethyl acetate (EA), propyl acetate (PA), methyl propionate (MP), ethyl propionate (EP), and propyl propionate (PP).

With increasing the content of lithium salts, the total number of migratable lithium ions increases, but at the same time, viscosity of the non-aqueous electrolytic solution will also increase, and migration rate of lithium ions slows down instead. Thus, an optimal value for the content of lithium salts occurs. In some embodiments, said lithium salt may be present in a content of from 6 wt% to 39 wt%, optionally from 10 wt% to 31 wt%, more optionally from 11 wt% to 24 wt%, based on the total weight of said non-aqueous electrolytic solution, and further optionally from 12 wt% to 20 wt%, based on the total weight of said non-aqueous electrolytic solution.

The non-aqueous electrolytic solution of the present application can be prepared in accordance with conventional methods in the field. For example, said additives, said organic solvent, said lithium salt and the like can be mixed well to obtain a non-aqueous electrolytic solution. There is no particular limitation on the order of addition of each material. For example, said additive, said lithium salt and the like can be added to the organic solvent and mixed homogeneously to obtain an non-aqueous electrolytic solution.

In the present application, components and their contents in said non-aqueous electrolytic solution can be determined according to methods conventional in the art. For example, they can be determined by gas chromatography-mass spectrometry (GC-MS), ion chromatography (IC), liquid chromatography (LC), nuclear magnetic resonance spectrometry (NMR) and the like.

It should be noted that the non-aqueous electrolytic solution of the present application can also be obtained from a secondary battery. An exemplary method of obtaining a non-aqueous electrolytic solution from a secondary battery comprises the step of discharging the secondary battery to a discharge cut-off voltage and then centrifuging it, after which an appropriate amount of liquid obtained from centrifugation is taken for testing.

### [Outer package]

In some embodiments, said secondary battery may include an outer package. The outer package may be used to encapsulate said electrode assembly and a non-aqueous electrolytic solution.

In some embodiments, said outer package of said secondary battery may be a hard case, such as a hard plastic case, an aluminum case, a steel case, and the like. The outer package of the secondary battery may also be a soft package, such as a pouch-type soft package. Material of the soft bag can be plastic, such as at least one of polypropylene (PP), polybutylene terephthalate (PBT), and polybutylene succinate (PBS).

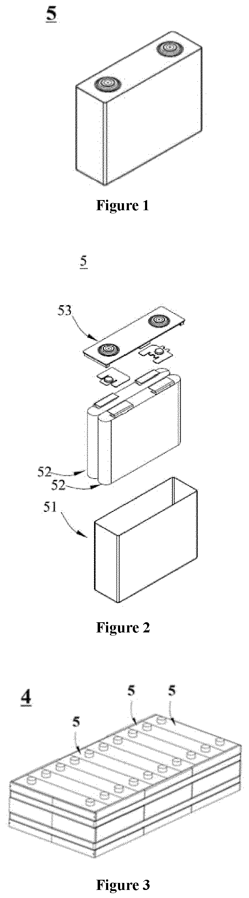

The shape of the secondary battery is not particularly limited in the present application, and it may be cylindrical, square, rectangular or any other shape. FIG. 1 is a schematic diagram of a secondary battery 5 of a rectangular structure as an example.

In some embodiments, as shown in FIG. 2, the outer package may include a casing 51 and a cover plate 53, wherein the casing 51 may include a bottom plate and side plates connected to the bottom plate, and the bottom plate and the side plates enclose an accommodating cavity. The casing 51 has an opening communicating with the accommodating cavity, and the cover plate 53 is used to cover the opening to close the accommodating cavity. A positive electrode plate, a separator, and a negative electrode plate may be made into an electrode assembly 52 by a winding process or a stacking process. The electrode assembly 52 is packaged in the accommodating cavity, and the electrolytic solution is infiltrated in the electrode assembly 52. The number of electrode assemblies 52 contained in the secondary battery 5 may be one or more, and may be adjusted according to requirements.

A process for preparing the secondary battery of the present application is well known in the art. In some embodiments, a positive electrode plate, a separator, a negative electrode plate and a non-aqueous electrolytic solution may be assembled into a secondary battery. As an example, a positive electrode plate, a separator, and a negative electrode plate can be made into an electrode assembly by a winding process or a stacking process, and the electrode assembly can be placed in an outer package and is subjected to drying, to which a non-aqueous electrolytic solution is injected. After vacuum encapsulation, resting, formation, and shaping process, a secondary battery can be obtained.

### Battery Module

In some embodiments, the secondary batteries according to the present application can be assembled into a battery module, and the number of secondary batteries contained in the battery module can be more than one, and the specific number can be adjusted according to application and capacity of the battery module.

FIG. 3 is a schematic diagram of the battery module 4 as an example. As shown in FIG. 3, in the battery module 4, a plurality of secondary batteries 5 may be arranged in sequence along the longitudinal direction of the battery module 4. Certainly, they can also be arranged in any other manner. Furthermore, a plurality of secondary batteries 5 can be fixed with fasteners.

Optionally, the battery module 4 may further include a housing having an accommodating space in which a plurality of secondary batteries 5 are accommodated.

### Battery pack

In some embodiments, the above-mentioned battery modules can also be assembled into a battery pack, and the number of battery modules included in the battery pack can be adjusted according to the application and capacity of the battery pack.

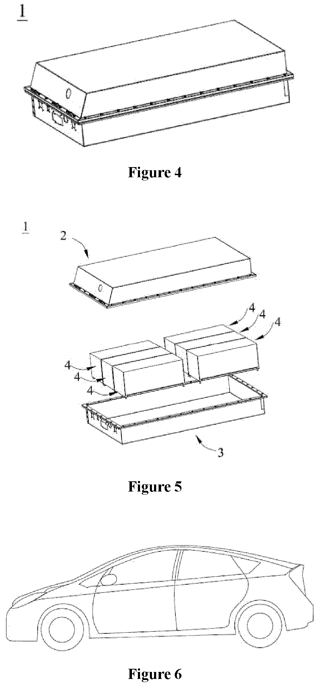

FIGS. 4 and 5 are schematic diagrams of the battery pack 1 as an example. As shown in FIGS. 4 and 5, the battery pack 1 may include a battery case and a plurality of battery modules 4 provided in the battery case. The battery box includes an upper case body 2 and a lower case body 3, and the upper case body 2 is used to cover the lower case body 3 to form a closed space for accommodating the battery modules 4. A plurality of battery modules 4 may be arranged in the battery case in any manner.

### Electrical device

The present application further provides an electrical device comprising at least one of the secondary battery, battery module, and battery pack of the present application. The secondary battery, battery module or battery pack can be used as a power source of the electrical device, and can also be used as an energy storage unit of the electrical device. The electrical device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electrical device can select a secondary battery, a battery module or a battery pack according to its usage requirements.

FIG. 6 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, and the like. The electric device is generally required to be light and thin, and a secondary battery can be used as a power source.

### Examples

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on mass, and all reagents used in the examples are commercially available or synthesized according to conventional methods and can be directly used without further treatment, and all instruments used in the examples are commercially available.

The sources of raw materials involved in examples of the present application are as follows:

| Name | Chemical Formula | Supplier | Specification |
|---|---|---|---|
| Manganese Carbonate | MnCO₃ | Shandong West Asia Chemical Industry Co. | 1Kg |
| Lithium Carbonate | Li₂CO₃ | Shandong West Asia Chemical Industry Co. | 1Kg |
| Magnesium carbonate | MgCO₃ | Shandong West Asia Chemical Industry Co. | 1Kg |
| Zinc Carbonate | ZnCO₃ | Wuhan Xinru Chemical Co. | 25Kg |
| Ferrous Carbonate | FeCO₃ | Xi'an Lanzhiguang Fine Material Co. | 1Kg |
| Nickel Sulfate | NiCO₃ | Shandong West Asia Chemical Industry Co. | 1Kg |
| Titanium Sulfate | Ti(SO₄)₂ | Shandong West Asia Chemical Industry Co. | 1Kg |
| Cobalt Sulfate | CoSO₄ | Xiamen Zhixin Chemical Co. | 500g |
| Vanadium Dichloride | VCl₂ | Shanghai Jin Jin Le Industry Co. | 1Kg |
| Oxalic acid dihydrate | C₂H₂O₄^{•}2H₂O | Shanghai Jin Jin Le Industry Co. | 1Kg |
| Ammonium dihydrogen phosphate | NH₄H₂PO₄ | Shanghai Chengshao Biotechnology Co. | 500g |
| Sucrose | C₁₂H₂₂O₁₁ | Shanghai Yuanye Biotechnology Co. | 100g |
| Dilute sulfuric acid | H₂SO₄ | Shenzhen Haisian Biotechnology Co. | In a mass percentage of 60% |
| Dilute nitric acid | HNO₃ | Anhui Lingtian Fine Chemical Co. | In a mass percentage of 60% |
| Metasilicic acid | H₂SiO₃ | Shanghai Yuanye Biotechnology Co. | 100g, in a mass percentage of 99.8% |

### I. Preparation of battery

### Example 1

### Step 1: Preparation of positive electrode active material

### Step S1: Preparation of Fe, Co, V and S co-doped manganese oxalate

689.6 g of manganese carbonate, 455.27 g of ferrous carbonate, 4.65 g of cobalt sulfate, and 4.87 g of vanadium dichloride were added to a mixer and mixed thoroughly for 6 hours. The obtained mixture was then transferred to a reactor in which 5 L of deionized water and 1260.6 g of oxalic acid dihydrate were added, heated to 80 °C, and stirred sufficiently at 500 rpm for 6 h until the reaction terminated without bubbles being generated to obtain a Fe, Co, and V co-doped manganese oxalate suspension. The suspension was then filtered, dried at 120°C, and then sanded to obtain manganese oxalate particles with a particle size of 100 nm.

### Step S2: Preparation of core Li_{0.997}Mn_{0.60}Fe_{0.393}V_{0.004}CO_{0.003}P_{0.997}S_{0.003}O₄

1793.1 g of manganese oxalate prepared in step S1 as well as 368.3 g of lithium carbonate, 1146.6 g of ammonium dihydrogen phosphate, and 4.9 g of dilute sulfuric acid were added into 20 L of deionized water, mixed thoroughly under stirring, and reacted with homogeneous mixing for 10 hours at 80 °C to obtain a slurry. The slurry was transferred to a spray drying equipment for spray drying and granulation, and dried at a temperature of 250°C to obtain a powder. The powder was sintered in a roller kiln at 700°C for 4 hours in a protective atmosphere (90% nitrogen and 10% hydrogen) to obtain the core material.

### Step S3: Preparation of the first coating layer suspension

Li₂FeP₂O₇ solution was prepared by dissolving 7.4 g of lithium carbonate, 11.6 g of ferrous carbonate, 23.0 g of ammonium dihydrogen phosphate, and 12.6 g of oxalic acid dihydrate in 500 mL of deionized water, controlling the pH to be 5, and then stirred and reacted for 2 hours at room temperature to obtain the solution, after which the solution was warmed up to 80°C and kept at this temperature for 4 hours to obtain the first coating layer suspension.

### Step S4: Coating layer of the first coating layer

1571.9 g of the doped lithium manganese phosphate core material obtained in step S2 were added to the first coating layer suspension (with a coating layer material content of 15.7 g) obtained in step S3, and mixed with sufficient stirring for 6 hours, and after mixing well, transferred to an oven at 120°C for drying for 6 hours, and then sintered at 650°C for 6 hours to obtain the pyrophosphate-coated material.

### Step S5: Preparation of the second coating layer suspension

3.7 g of lithium carbonate, 11.6 g of ferrous carbonate, 11.5 g of ammonium dihydrogen phosphate, and 12.6 g of oxalic acid dihydrate were dissolved in 1500 mL of deionized water, and then stirred and reacted for 6 hours to obtain a solution, and then the solution was warmed up to 120°C and kept at this temperature for 6 hours to obtain the second coating layer suspension.

### Step S6: Coating layer of the second coating layer

1586.8 g of the pyrophosphate-coated material obtained in Step S4 was added to the second coating layer suspension (with a coating layer material content of 47.1 g) obtained in Step S5, and mixed with thorough stirring for 6 hours, and after the mixture was homogeneous, it was transferred to an oven at 120°C for drying for 6 hours, and then sintered at 700°C for 8 hours to obtain the two-layer coated material.

### Step S7: Preparation of the aqueous solution of the third coating layer

37.3 g of sucrose was dissolved in 500 g of deionized water, then stirred and fully dissolved to obtain an aqueous solution of sucrose.

### Step S8: Coating layer of the third coating layer

1633.9 g of the two-layer coated material obtained in Step S6 was added to the sucrose solution obtained in Step S7, stirred and mixed together for 6 hours, and after mixing uniformly, transferred to an oven at 150°C to dry for 6 hours, and then sintered at 700°C for 10 hours to obtain the three-layer coated material, i.e., the positive electrode active material.

### Step 2: Preparation of positive electrode plate

The positive electrode active material with a three-layer coated structure prepared above, acetylene black as a conductive agent, and polyvinylidene fluoride (PVDF) as a binder were added to N-methylpyrrolidone (NMP) at a weight ratio of 97.0 : 1.2.5 : 1.8 with stirring until these materials were mixed homogeneously to obtain a positive electrode slurry. The positive electrode slurry was then uniformly applied to an aluminum foil at 0.280 g/1540.25 mm², and then dried, cold pressed, and slit to obtain a positive electrode plate.

### Step 3: Preparation of negative electrode plate

Artificial graphite as a negative active material, hard carbon, acetylene black as a conductive agent, styrene butadiene rubber (SBR) as a binder, sodium carboxymethyl cellulose (CMC) as a thickener at a weight ratio of 90:5:2:2:1 were dissolved in a solvent deionized water, which was stirred and mixed well to prepare a negative electrode slurry. The negative electrode slurry was uniformly applied to a copper foil as a current collector at 0.117 g/1540.25 mm², and then dried, cold pressed, and slit to obtain a negative electrode plate.

### Step 4: Preparation of non-aqueous electrolytic solution

In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H3 were dissolved, and the resulting mixture was stirred homogeneously, to obtain a non-aqueous electrolytic solution.

### Step 5: Preparation of separator

A commercially available PP-PE copolymer microporous film with a thickness of 20 µm and an average pore size of 80 nm was used (from Trico Electronic Technology, model 20).

### Step 6: Preparation of full battery

The positive electrode plate, separator and negative electrode plate were stacked in order, so that the separator was sandwiched between the positive and negative electrodes for isolation, and then they were wound to form an electrode assembly. The electrode assembly was placed in an outer package, filled with the above electrolytic solution, and encapsulated to obtain a full battery. The full battery has a liquid injection coefficient of 3.5 g/Ah.

### [Preparation of button battery]

The positive electrode active material prepared above, polyvinylidene fluoride (PVDF), and acetylene black were added to N-methylpyrrolidone (NMP) at a weight ratio of 90: 5: 5 and stirred in a drying room to make a slurry. The above slurry was applied to an aluminum foil, dried and cold pressed to form a positive electrode plate. The coating layer amount was 0.2g/cm² and the compaction density was 2.0g/cm³.

Lithium plate was used as a negative electrode, it was assembled together with the above prepared positive electrode plate and the non-aqueous electrolytic solution in a button battery box to form a button battery (hereinafter also referred to as "button").

### Examples 2-76 and Comparative Examples 1-18

Prepare the positive electrode active material, non-aqueous electrolytic solution, and battery in Examples 2-76 and the corresponding Comparative Examples 1-18 in a way similar to Example 1. Examples 30-42 have the same conditions as Example 1, except that the first or second coating layer material is different from Example 1. Examples 43-76 have the same conditions as Example 1, except that the preparation process of the water electrolyte is different from Example 1. The differences in the preparation of positive electrode active materials are shown in Tables 1 to 8, wherein the first coating layer is not coated for Comparative Examples 1-2, 4-10, and 12, so there are no steps S3 and S4; and for Comparative Examples 1-11, the second coating layer is not covered, so there are no steps S5-S6. The differences in the preparation of non-aqueous electrolytic solutions are shown in Table 9.

In addition, in all embodiments and comparative examples of this application, if not indicated, the first and/or second coating layer materials used are defaulted to be crystalline.

**Table 1. Raw materials for the core**

| No. | Core | Raw materials used in step S1 | Raw materials used in step S2 |
|---|---|---|---|
| Comparative Examples 1 and 13 | LiMnPO₄ | manganese carbonate, 1149.3g; water, 5L; oxalic acid dihydrate, 1260.6g | manganese oxalate dihydrate obtained in step S1 (counted as C₂O₄Mn•2H₂O) , 1789.6g; lithium carbonate, 369.4g; ammonium dihydrogen phosphate, 1150.1g; water, 20L |
| Comparative Example 2 | LiMn_{0.60}Fe_{0.40}PO₄ | manganese carbonate, 689.6g; ferrous carbonate, 463.4g; water, 5L; oxalic acid dihydrate, 1260.6g | ferromanganese oxalate dihydrate obtained in step S1 (counted as C₂O₄Mn_{0.60}Fe_{0.40•}2H₂O) , 1793.2g; lithium carbonate, 369.4g; ammonium dihydrogen phosphate, 1150.1g; water, 20L |
| Comparative Example 3 | LiMn_{0.80}Fe_{0.20}PO₄ | manganese carbonate, 919.4g; ferrous carbonate, 231.7g; water, 5L; oxalic acid dihydrate, 1260.6g | ferromanganese oxalate dihydrate obtained in step S1 (counted as C₂O₄Mn_{0.80}Fe_{0.20}•2H₂O) , 1791.4g; lithium carbonate, 369.4g; ammonium dihydrogen phosphate, 1150.1g; water, 20L |
| Comparative Example 4 | LiMn_{0.70}Fe_{0.295}V_{0.005}PO₄ | manganese carbonate, 804.5g; ferrous carbonate, 341.8g; vanadium dichloride, 6.1g; water, 5L; oxalic acid dihydrate, 1260.6g | ferrovanadium manganese oxalate dihydrate obtained in step S1 (counted as C₂O₄Mn_{0.70}Fe_{0.295}V_{0.005•}2H₂O) , 1792.0g;lithium carbonate, 369.4g; ammonium dihydrogen phosphate, 1150.1g; water, 20L |
| Comparative Examples 5 and 15 | LiMn_{0.60}Fe_{0.395}Mg_{0.005}PO₄ | manganese carbonate, 689.6g; ferrous carbonate, 457.6g; magnesium carbonate, 4.2g; water, 5L; oxalic acid dihydrate, 1260.6g | ferromanganese magnesium oxalate dihydrate obtained in step S1 (counted as C₂O₄Mn_{0.60}Fe_{0.395}Mg_{0.005}•2H₂O) , 1791.6g;lithium carbonate, 369.4g; ammonium dihydrogen phosphate, 1150.1g; water, 20L |
| Comparative Example 6 | LiMn_{0.60}Fe_{0.35}Ni_{0.05}PO₄ | manganese carbonate, 689.6g; ferrous carbonate, 405.4g; nickel carbonate, 59.3g; water, 5L; oxalic acid dihydrate, 1260.6g | nickel ferromanganese oxalate dihydrate obtained in step S1 (counted as C₂O₄Mn_{0.60}Fe_{0.35}Ni_{0.35}•2H₂O) , 1794.6g; lithium carbonate, 369.4g; ammonium dihydrogen phosphate, 1150.1g; water, 20L |
| Comparative Example 7 and 9 | LiMn_{0.60}Fe_{0.395} V_{0.002}Ni_{0.003}PO₄ | manganese carbonate, 689.6g; ferrous carbonate, 457.6g; vanadium dichloride, 2.4g; nickel carbonate, 3.6g; water, 5L; oxalic acid dihydrate, 1260.6g | nickel manganese iron vanadium oxalate dihydrate obtained in step S1 (counted as C₂O₄Mn_{0.60}Fe_{0.395}V_{0.002}Ni_{0.003}H₂O) , 1793.2g; lithium carbonate, 369.4g; ammonium dihydrogen phosphate, 1150.1g; water, 20L |
| Comparative Example 8 | LiMn_{0.60}Fe_{0.395}V_{0.002}Mg_{0.003}PO₄ | manganese carbonate, 689.6g; ferrous carbonate, 457.6g; vanadium dichloride, 2.4g; magnesium carbonate, 2.53g; water, 5L; oxalic acid dihydrate, 1260.6g | magnesium manganese iron vanadium oxalate dihydrate obtained in step S1 (counted as C₂O₄Mn_{0.60}Fe_{0.395}V_{0.002}Mg_{0.003}2H₂O) , 1792.1g; lithium carbonate, 369.4g; ammonium dihydrogen phosphate, 1150.1g; water, 20L |
| Comparative Examples 10-12, Comparative Example 16-18 and Example 1-10 | Li_{0.997} Mn_{0.60}Fe_{0.393}V_{0.004}CO_{0.003}P_{0.997} S_{0.003}O₄ | manganese carbonate, 689.6g; ferrous carbonate, 455.3g; cobalt sulfate, 4.7g; vanadium dichloride, 4.9g; water, 5L; oxalic acid dihydrate, 1260.6g | manganese iron vanadium cobalt oxalate dihydrate obtained in step S1 (counted as C₂O₄Mn_{0.60}Fe_{0.393}V_{0.004}Co_{0.003}•2H₂O) , 1793.1g; lithium carbonate, 368.3g; ammonium dihydrogen phosphate, 1146.6g; dilute sulfuric acid, 4.9g; water, 20L |
| Comparative Example 14 | Li_{1.2}MnP_{0.8}Si_{0.2}O₄ | manganese carbonate, 1149.3g; water, 5L; oxalic acid dihydrate, 1260.6g | manganese oxalate dihydrate obtained in step S1 (counted as C₂O₄Mn•2H₂O) , 1789.6g; lithium carbonate, 443.3g; ammonium dihydrogen phosphate, 920.1g; metasilicic acid, 156.2g; water, 20L |
| Example 11 | Li_{1.001}Mn_{0 .60}Fe_{0.393}V_{0.004}C_{0.003}P_{0.999}Si_{0.001}O₄ | manganese carbonate, 689.6g; ferrous carbonate, 455.3g; cobalt sulfate, 4.7g; vanadium dichloride, 4.9g; water, 5L; oxalic acid dihydrate, 1260.6g | manganese iron vanadium cobalt oxalate dihydrate obtained in step S1 (counted as C₂O₄Mn_{0.60}Fe_{0.393}V_{0.004}Co_{0.003}•2H₂O) , 1793.1g; lithium carbonate, 369.8g; ammonium dihydrogen phosphate, 1148.9g; metasilicic acid, 0.8g; water, 20L |
| Example 12 | LiMn_{0.60}Fe_{0.393}V_{0.004}CO_{0.003}P_{0.998}N_{0.002}O₄ | manganese carbonate, 689.6g; ferrous carbonate, 455.3g; cobalt sulfate, 4.7g; vanadium dichloride, 4.9g; water, 5L; oxalic acid dihydrate, 1260.6g | manganese iron vanadium cobalt oxalate dihydrate obtained in step S1 (counted as C₂O₄Mn_{0.60}Fe_{0.393}V_{0.004}Co_{0.003}•2H₂O) , 1793.1g; lithium carbonate, 369.4g; ammonium dihydrogen phosphate, 1147.8g; dilute nitric acid, 2.7g; water, 20L |
| Example 13 | Li_{0.995}Mn_{0.65}Fe_{0.341}V_{0.004}Co_{0.005}P_{0.995} S_{0.005}O₄ | manganese carbonate, 747.1g; ferrous carbonate, 395.1g; cobalt sulfate, 7.8g; vanadium dichloride, 4.9g; water, 5L; oxalic acid dihydrate, 1260.6g | manganese iron vanadium cobalt oxalate dihydrate obtained in step S1 (counted as C₂O₄Mn_{0.65}Fe_{0.341}V_{0.004}Co_{0.005}•2H₂O) , 1792.7g; lithium carbonate, 367.6g; ammonium dihydrogen phosphate, 1144.3g; dilute sulfuric acid, 8.2g; water, 20L |
| Example 14 | Li_{1,002}Mn_{0.70}Fe_{0.293}V_{0.004}Co_{0.003}P_{0.998}Si_{0.002}O₄ | manganese carbonate, 804.6g; ferrous carbonate, 339.5g; cobalt sulfate, 4.7g; vanadium dichloride, 4.9g; water, 5L; oxalic acid dihydrate, 1260.6g | manganese iron vanadium cobalt oxalate dihydrate obtained in step S1 (counted as C₂O₄Mn_{0.70}Fe_{0.293}V_{0.004}Co_{0.003}•2H₂O) , 1792.2g; lithium carbonate, 370.2g; 1147.8; metasilicic acid, 1.6g; water, 20L |
| Examples 15 and 17 | LiMn_{0.60}Fe_{0.393}V_{0.004}Co_{0.003}P_{0.999}N_{0.001}O₄ | manganese carbonate, 689.6g; ferrous carbonate, 455.3g; cobalt sulfate, 4.7g; vanadium dichloride, 4.9g; water, 5L; oxalic acid dihydrate, 1260.6g | manganese iron vanadium cobalt oxalate dihydrate obtained in step S1 (counted as C₂O₄Mn_{0.60}Fe_{0.393}V_{0.004}Co_{0.003}•2H₂O) , 1793.1g; lithium carbonate, 369.4g; ammonium dihydrogen phosphate, 1148.9g; dilute nitric acid, 1.4g; water, 20L |
| Example 16 | Li₀.₉₉₇Mn₀₆₀Fe_{0.393}V₀.₀₀₄CO₀.₀₀₃P_{0.997} S_{0.003}O₄ | manganese carbonate, 689.6g; ferrous carbonate, 455.3g; cobalt sulfate, 4.7g; vanadium dichloride, 4.9g; water, 5L; oxalic acid dihydrate, 1260.6g | manganese iron vanadium cobalt oxalate dihydrate obtained in step S1 (counted as C₂O₄Mn_{0.60}Fe_{0.393}V_{0.004}Co_{0.003}•2H₂O) , 1793.1g; lithium carbonate, 368.7g; ammonium dihydrogen phosphate, 1146.6g; dilute sulfuric acid, 4.9g; water, 20L |
| Example 18 | LiMn_{0.60}Fe_{0.393}V_{0.004}Mg_{0.003}P_{0.995}N_{0.005}O₄ | manganese carbonate, 689.6g; ferrous carbonate, 455.3g; magnesium carbonate, 2.5g; vanadium dichloride, 4.9g; water, 5L; oxalic acid dihydrate, 1260.6g | magnesium manganese iron vanadium oxalate dihydrate obtained in step S1 (counted as C₂O₄Mn_{0.60}Fe_{0.393}V_{0.004}Mg_{0.003}•2H₂O) , 1791.1g; lithium carbonate, 369.4g; ammonium dihydrogen phosphate, 1144.3g; dilute nitric acid, 7.0g; water, 20L |
| Example 19 | Li_{0.999}Mn_{0.60}Fe_{0.393}V_{0.004}Mg_{0.003}P_{0.999}S_{0.001}O₄ | manganese carbonate, 689.6g; ferrous carbonate, 455.3g; magnesium carbonate, 2.5g; vanadium dichloride, 4.9g; water, 5L; oxalic acid dihydrate, 1260.6g | magnesium manganese iron vanadium oxalate dihydrate obtained in step S1 (counted as C₂O₄Mn_{0.60}Fe_{0.393}V_{0.004}Mg_{0.003}•2H₂O) , 1791.1g; lithium carbonate, 369.0g; ammonium dihydrogen phosphate, 1148.9g; dilute sulfuric acid, 1.6g; water, 20L |
| Example 20 | Li_{0.998}Mn_{0.60}Fe_{0.393}V_{0.004}Ni_{0.003}P_{0.998}S_{0.002}O₄ | manganese carbonate, 689.6g; ferrous carbonate, 455.3g; nickel carbonate, 3.6g; vanadium dichloride, 4.9g; water, 5L; oxalic acid dihydrate, 1260.6g | nickel manganese iron vanadium oxalate dihydrate obtained in step S1 (counted as C₂O₄Mn_{0.60}Fe_{0.393}V_{0.004}Ni_{0.003}•2H₂O) , 1792.2g; lithium carbonate, 368.7g; ammonium dihydrogen phosphate, 1147.8g; dilute sulfuric acid, 3.2g; water, 20L |
| Example 21-24 | Li_{1.001}Mn_{0.60}Fe_{0.393}V_{0.004}Ni_{0.003}P_{0.999}Si_{0.001}O₄ | manganese carbonate, 689.6g; ferrous carbonate, 455.3g; nickel carbonate, 3.6g; vanadium dichloride, 4.9g; water, 5L; oxalic acid dihydrate, 1260.6g | nickel manganese iron vanadium oxalate dihydrate obtained in step S1( 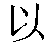 C₂O₄Mn_{0.60}Fe_{0.393}V_{0.004}Ni_{0.003}•2H₂O 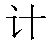 ) , 1793.1g; lithium carbonate, 369.8g; ammonium dihydrogen phosphate, 1148.9g; metasilicic acid, 0.8g; water, 20L |
| Example 25 | Li_{1.001}Mn_{0.50}Fe_{0.493}V_{0.004}Ni_{0.003}P_{0.999}Si_{0.001}O₄ | manganese carbonate, 574.7g; ferrous carbonate, 571.2g; nickel carbonate, 3.6g; vanadium dichloride, 4.9g; water, 5L; oxalic acid dihydrate, 1260.6g | nickel manganese iron vanadium oxalate dihydrate obtained in step S1 (counted as C₂O₄Mn_{0.50}Fe_{0.493}V_{0.004}Ni_{0.003}•2H₂O) , 1794.0g; lithium 0 carbonate, 369.8g; ammonium dihydrogen phosphate, 1148.9g; metasilicic acid, 0.8g; water, 20L |
| Example 26 | Li_{1.001}Mn_{0.999}Fe_{0.001}P_{0.999}Si_{0.001}O₄ | manganese carbonate, 1148.2g; ferrous carbonate, 1.2g; water, 5L; oxalic acid dihydrate, 1260.6g | ferromanganese oxalate dihydrate obtained in step S1 (counted as C₂O₄Mn_{0.999}Fe_{0.001}•2H₂O) , 1789.6g; lithium carbonate, 369.8g; ammonium dihydrogen phosphate, 1148.9g; metasilicic acid, 0.8g; water, 20L |
| Example 27 | LiMn_{0.60}Fe_{0.393}V_{0.004}Ni_{0.003}P_{0.9}N_{0.100}O₄ | manganese carbonate, 689.6g; ferrous carbonate, 455.3g; nickel carbonate, 3.6g; vanadium dichloride, 4.9g; water, 5L; oxalic acid dihydrate, 1260.6g | nickel manganese iron vanadium oxalate dihydrate obtained in step S1 (counted as C₂O₄Mn_{0.60}Fe_{0.393}V_{0.004}Ni_{0.003}•2H₂O) , 1793.1g; lithium carbonate, 369.4g; ammonium dihydrogen phosphate, 1035.1g; dilute nitric acid, 140.0g; water, 20L |
| Example 28 | Li_{1.001}Mn_{0.40}Fe_{0.593}V_{0.004}Ni_{0.003}P_{0.999}Si_{0.001}O₄ | manganese carbonate, 459.7g; ferrous carbonate, 686.9g; vanadium dichloride, 4.8g; nickel carbonate, 3.6g; water, 5L; oxalic acid dihydrate, 1260.6g | nickel manganese iron vanadium oxalate dihydrate obtained in step S1 (counted as C₂O₄Mn_{0.40}Fe_{0.593}V_{0.004}Ni_{0.003}•2H₂O) , 1794.9g; lithium carbonate, 369.8g; ammonium dihydrogen phosphate, 1148.9g; metasilicic acid, 0.8g; water, 20L |
| Example 29 | Li_{1.001}Mn_{0.40}Fe_{0.393}V_{0.204}Ni_{0.003}P_{0.999}Si_{0.001}O₄ | manganese carbonate, 459.7g; ferrous carbonate, 455.2g; vanadium dichloride, 248.6g; nickel carbonate, 3.6g; water, 5L; oxalic acid dihydrate, 1260.6g | nickel manganese iron vanadium oxalate dihydrate obtained in step S1 (counted as C₂O₄Mn_{0.40}Fe_{0.393}V_{0.204}Ni_{0.003}•2H₂O), 1785.1g; lithium carbonate, 369.8g; ammonium dihydrogen phosphate, 1148.9g; metasilicic acid, 0.8g; water, 20L |

**Table 2. Preparation of a suspension for the first coating layer suspension (Step S3:)**

| No. | Material for the first coating layer | Preparation of the first coating layer suspension |
|---|---|---|
| Comparative Examples 3, 16 | Amorphous Li₂FeP₂O₇ | 7.4g lithium carbonate; 11.6g ferrous carbonate; 23.0g ammonium dihydrogen phosphate; 12.6g oxalic acid dihydrate; pH being controlled to 5 |
| Comparative Example 11, 13-15, 17-18; Examples 1-14, 19,21-29 | crystalline Li₂FeP₂O₇ | 7.4g lithium carbonate; 11.6g ferrous carbonate; 23.0g ammonium dihydrogen phosphate; 12.6g oxalic acid dihydrate; pH being controlled to 5 |
| Examples 15-16 | crystalline Al₄(P₂O₇)₃ | 53.3g aluminum chloride; 34.5g ammonium dihydrogen phosphate; 18.9g oxalic acid dihydrate; pH being controlled to 4 |
| Examples 17-18, 20 | crystalline Li₂NiP₂O₇ | 7.4g lithium carbonate; 11.9g nickel carbonate; 23.0g ammonium dihydrogen phosphate; 12.6g oxalic acid dihydrate; pH being controlled to 5 |

**Table 3. Application of the first coating layer (Step S4:)**

| No. | Material for the first coating layer and the amount (based on the weight of the core) | The amount of the core added in step S4 | Step S4: Application of the second coating layer | | | | |
|---|---|---|---|---|---|---|---|
| | | | The amount of corresponding coating layer material in the first coating layer suspension | Mixing time (hour) | Drying temperatu re (°C) | Sintering temperatu re (°C) | Sintering time (hour) |
| Comparative Example 3 | 2% amorphous Li₂FeP₂O₇ | 1570.4g | 31.4g | 6 | 120 | 500 | 4 |
| Comparative Example 11 | 1% crystalline Li₂FeP₂O₇ | 1571.1g | 15.7g | 6 | 120 | 650 | 6 |
| Comparative Example 13 | 2% crystalline Li₂FeP₂O₇ | 1568.5g | 31.4g | 6 | 120 | 650 | 6 |
| Comparative Example 14 | 2% crystalline Li₂FeP₂O₇ | 1562.8g | 31.2g | 6 | 120 | 650 | 6 |
| Comparative Example 15 | 2% crystalline Li₂FeP₂O₇ | 1570.6g | 31.4g | 6 | 120 | 650 | 6 |
| Comparative Example 16 | 2% amorphous Li₂FeP₂O₇ | 1571.1g | 31.4g | 6 | 120 | 500 | 4 |
| Comparative Example 17 | 2% crystalline Li₂FeP₂O₇ | 1571.1g | 31.4g | 6 | 120 | 650 | 6 |
| Comparative Example 18 | 1% crystalline Li₂FeP₂O₇ | 1571.9g | 15.7g | 6 | 120 | 650 | 6 |
| Examples 1-4, 8-10 | 1% crystalline Li₂FeP₂O₇ | 1571.9g | 15.7g | 6 | 120 | 650 | 6 |
| Example 5 | 2%crystalline Li₂FeP₂O₇ | 1571.9g | 31.4g | 6 | 120 | 650 | 6 |
| Example 6 | 3% crystalline Li₂FeP₂O₇ | 1571.1g | 47.1g | 6 | 120 | 650 | 6 |
| Example 7 | 5% crystalline Li₂FeP₂O₇ | 1571.9g | 78.6g | 6 | 120 | 650 | 6 |
| Example 11 | 1% crystalline Li₂FeP₂O₇ | 1572.1g | 15.7g | 6 | 120 | 650 | 6 |
| Example 12 | 1% crystalline Li₂FeP₂O₇ | 1571.7g | 15.7g | 6 | 120 | 650 | 6 |
| Example 13 | 2% crystalline Li₂FeP₂O₇ | 1571.4g | 31.4g | 6 | 120 | 650 | 6 |
| Example 14 | 2.5% crystalline Li₂FeP₂O₇ | 1571.9g | 39.3g | 6 | 120 | 650 | 6 |
| Example 15 | 2% crystalline Al₄(P₂O₇)₃ | 1571.9g | 31.4g | 6 | 120 | 680 | 8 |
| Example 16 | 3% crystalline Al₄(P₂O₇)₃ | 1571.9g | 47.2g | 6 | 120 | 680 | 8 |
| Example 17 | 1.5% crystalline Li₂NiP₂O₇ | 1571.9g | 23.6g | 6 | 120 | 630 | 6 |
| Example 18 | 1% crystalline Li₂NiP₂O₇ | 1570.1g | 15.7g | 6 | 120 | 630 | 6 |
| Example 19 | 2% crystalline Li₂FeP₂O₇ | 1571.0g | 31.4g | 6 | 120 | 650 | 6 |
| Example 20 | 1% crystalline Li₂NiP₂O₇ | 1571.9g | 15.7g | 6 | 120 | 630 | 6 |
| Examples 21-24 | 2% crystalline Li₂FeP₂O₇ | 1572.1g | 31.4g | 6 | 120 | 650 | 6 |
| Example 22 | 5.50% crystalline Li₂FeP₂O₇ | 1572.1g | 86.5g | 6 | 120 | 650 | 6 |
| Example 25 | 1% crystalline Li₂FeP₂O₇ | 1573.0g | 15.7g | 6 | 120 | 650 | 6 |
| Example 26 | 1% crystalline Li₂FeP₂O₇ | 1568.6g | 15.7g | 6 | 120 | 650 | 6 |
| Example 27 | 1% crystalline Li₂FeP₂O₇ | 1569.2g | 15.7g | 6 | 120 | 650 | 6 |
| Example 28 | 2% crystalline Li₂FeP₂O₇ | 1573.9g | 31.4g | 6 | 120 | 650 | 6 |
| Example 29 | 2%crystalline Li₂FeP₂O₇ | 1564.1g | 31.2g | 6 | 120 | 650 | 6 |

**Table 4. Preparation of a suspension for the second coating layer (Step S5:)**

| No. | Material for the second coating layer | Step S5: Preparation of the second coating layer suspension |
|---|---|---|
| Comparative Example 12, 18; Example 1-14, 18-19,25-27 | crystalline LiFePO₄ | 3.7g lithium carbonate; 11.6g ferrous carbonate; 11.5g ammonium dihydrogen phosphate; 12.6g oxalic acid dihydrate |
| Comparative Example 13-16; Example 15, 17, 20, 21-24, 28-29 | crystalline LiCoPO₄ | 3.7g lithium carbonate; 15.5g cobalt sulfate; 11.5g ammonium dihydrogen phosphate; 12.6g oxalic acid dihydrate |
| Comparative Example 17 | Amorphous LiCoPO₄ | 3.7g lithium carbonate; 15.5g cobalt sulfate; 11.5g ammonium dihydrogen phosphate; 12.6g oxalic acid dihydrate |
| Example 16 | crystalline LiNiPO₄ | 3.7g lithium carbonate; 11.9g nickel carbonate; 11.5g ammonium dihydrogen phosphate; 12.6g oxalic acid dihydrate |

**Table 5. Application of the second coating layer (Step S6)**

| No. | Material for the second coating layer and the amount (based on the weight of the core) | Amount of pyrophosphate-coated material added in step S6 (g) | Step S6: Coating layer of the second coating layer | | | | |
|---|---|---|---|---|---|---|---|
| | | | The amount of correspondi ng coating layer material in the second coating layer suspension (g) | Mixing time (hour) | Drying temperat ure (°C) | Sintering temperat ure (°C) | Sintering time (hour) |
| Comparative Example 12 | 3% crystalline LiFePO₄ | 1571.1 | 47.1 | 6 | 120 | 700 | 8 |
| Comparative Example 13 | 4% crystalline LiCoPO₄ | 1599.9 | 62.7 | 6 | 120 | 750 | 8 |
| Comparative Example 14 | 4% crystalline LiCoPO₄ | 1594.0 | 62.5 | 6 | 120 | 750 | 8 |
| Comparative Example 15 | 4% crystalline LiCoPO₄ | 1602.0 | 62.8 | 6 | 120 | 750 | 8 |
| Comparative Example 16 | 4% crystalline LiCoPO₄ | 1602.5 | 62.8 | 6 | 120 | 750 | 8 |
| Comparative Example 17 | 4% amorphous LiCoPO₄ | 1602.5 | 62.8 | 6 | 120 | 650 | 8 |
| Comparative Example 18 | 3% crystalline LiFePO₄ | 1586.8 | 47.1 | 6 | 120 | 700 | 8 |
| Examples 1-4 | 3% crystalline LiFePO₄ | 1586.8 | 47.1 | 6 | 120 | 700 | 8 |
| Example 5 | 3% crystalline LiFePO₄ | 1602.5 | 47.1 | 6 | 120 | 700 | 8 |
| Example 6 | 3% crystalline LiFePO₄ | 1618.2 | 47.1 | 6 | 120 | 700 | 8 |
| Example 7 | 3 %crystalline LiFePO₄ | 1649.6 | 47.1 | 6 | 120 | 700 | 8 |
| Example 8 | 1% crystalline LiFePO₄ | 1586.8 | 15.7 | 6 | 120 | 700 | 8 |
| Example 9 | 4% crystalline LiFePO₄ | 1586.8 | 62.8 | 6 | 120 | 700 | 8 |
| Example 10 | 5% crystalline LiFePO₄ | 1586.8 | 78.6 | 6 | 120 | 700 | 8 |
| Example 11 | 2.50% crystalline LiFePO₄ | 1587.8 | 39.3 | 6 | 120 | 700 | 8 |
| Example 12 | 3% crystalline LiFePO₄ | 1587.4 | 47.2 | 6 | 120 | 700 | 8 |
| Example 13 | 2% crystalline LiFePO₄ | 1602.8 | 31.4 | 6 | 120 | 700 | 8 |
| Example 14 | 3.50% crystalline LiFePO₄ | 1610.5 | 55.0 | 6 | 120 | 700 | 8 |
| Example 15 | 2.5% crystalline LiCoPO₄ | 1603.3 | 39.3 | 6 | 120 | 750 | 8 |
| Example 16 | 3% crystalline LiNiPO₄ | 1619.0 | 47.2 | 6 | 120 | 680 | 8 |
| Example 17 | 2.5% crystalline LiCoPO₄ | 1595.5 | 39.3 | 6 | 120 | 750 | 8 |
| Example 18 | 3% crystalline LiFePO₄ | 1585.9 | 47.1 | 6 | 120 | 700 | 8 |
| Example 19 | 4% crystalline LiFePO₄ | 1602.4 | 62.8 | 6 | 120 | 700 | 8 |
| Example 20 | 3% crystalline LiCoPO₄ | 1587.7 | 47.2 | 6 | 120 | 750 | 8 |
| Example 21 | 4% crystalline LiCoPO₄ | 1603.5 | 62.9 | 6 | 120 | 750 | 8 |
| Example 22 | 4% crystalline LiCoPO₄ | 1658.6 | 62.9 | 6 | 120 | 750 | 8 |
| Example 23 | 5.50% crystalline LiCoPO₄ | 1603.5 | 86.5 | 6 | 120 | 750 | 8 |
| Example 24 | 4% crystalline LiCoPO₄ | 1603.5 | 62.9 | 6 | 120 | 750 | 8 |
| Example 25 | 3% crystalline LiFePO₄ | 1588.7 | 47.2 | 6 | 120 | 700 | 8 |
| Example 26 | 3% crystalline LiFePO₄ | 1584.3 | 47.1 | 6 | 120 | 700 | 8 |
| Example 27 | 3% crystalline LiFePO₄ | 1584.9 | 47.1 | 6 | 120 | 700 | 8 |
| Example 28 | 4% crystalline LiCoPO₄ | 1605.4 | 63.0 | 6 | 120 | 750 | 8 |
| Example 29 | 4% crystalline LiCoPO₄ | 1605.4 | 63.0 | 6 | 120 | 750 | 8 |
| Note: Comparative Example 12 relates to the amount of the added core. | | | | | | | |

**Table 6: Application of the third coating layer (Step S8)**

| No. | Material for the third coating layer | Molar ratio of SP2 to SP3 | Amount of material added in step S8 that has been covered with two layers (g) | Step S8: Coating layer of the third coating layer | | | | |
|---|---|---|---|---|---|---|---|---|
| | | | | Amount of sucrose (g) | Mixin g time (hour) | Drying temperatur e (°C) | Sintering temperatur e (°C) | Sintering time (hour) |
| Comparative Example 1 | 1%carbon | 2.5 | 1568.5 | 37.3 | 6 | 150 | 650 | 8 |
| Comparative Example 2 | 2%carbon | 2.8 | 1572.2 | 74.7 | 6 | 150 | 680 | 8 |
| Comparative Example 3 | 2%carbon | 2.7 | 1601.8 | 74.6 | 6 | 150 | 680 | 7 |
| Comparative Example 4 | 1%carbon | 2.4 | 1571.0 | 37.3 | 6 | 150 | 630 | 8 |
| Comparative Example 5 | 1.5%carbon | 2.6 | 1570.6 | 56.0 | 6 | 150 | 650 | 7 |
| Comparative Example 6 | 2.5%carbon | 2.8 | 1573.6 | 93.4 | 6 | 150 | 680 | 8 |
| Comparative Example 7 | 1%carbon | 2.7 | 1572.2 | 37.3 | 6 | 150 | 680 | 7 |
| Comparative Example 8 | 1.5%carbon | 2.9 | 1571.1 | 56.0 | 6 | 150 | 680 | 10 |
| Comparative Example 9 | 1%carbon | 2.2 | 1572.2 | 37.3 | 6 | 150 | 600 | 8 |
| Comparative Example 10 | 1%carbon | 2.4 | 1571.1 | 37.3 | 6 | 150 | 630 | 8 |
| Comparative Example 11 | 1%carbon | 2.3 | 1586.8 | 37.3 | 6 | 150 | 620 | 8 |
| Comparative Example 12 | 1%carbon | 2.1 | 1618.2 | 37.3 | 6 | 150 | 600 | 6 |
| Comparative Example 13 | 1%carbon | 2 | 1662.6 | 37.3 | 6 | 120 | 600 | 6 |
| Comparative Example 14 | 1%carbon | 1.8 | 1656.5 | 37.1 | 6 | 120 | 600 | 6 |
| Comparative Example 15 | 1%carbon | 1.7 | 1664.8 | 37.3 | 6 | 100 | 600 | 6 |
| Comparative Example 16 | 1%carbon | 3.1 | 1665.4 | 37.3 | 6 | 150 | 700 | 10 |
| Comparative Example 17 | 1%carbon | 3.5 | 1665.4 | 37.3 | 6 | 150 | 750 | 10 |
| Comparative Example 18 | 1%carbon | 2.2 | 1633.9 | 37.3 | 6 | 150 | 700 | 10 |
| Example 1 | 1%carbon | 2.2 | 1633.9 | 37.3 | 6 | 150 | 700 | 10 |
| Example 2 | 3%carbon | 2.3 | 1633.9 | 111.9 | 6 | 150 | 600 | 9 |
| Example 3 | 4%carbon | 2.1 | 1633.9 | 149.2 | 6 | 150 | 600 | 6 |
| Example 4 | 5%carbon | 2.4 | 1633.9 | 186.5 | 6 | 150 | 630 | 8 |
| Example 5 | 1%carbon | 2.5 | 1649.6 | 37.3 | 6 | 150 | 650 | 8 |
| Example 6 | 1%carbon | 2.5 | 1665.3 | 37.3 | 6 | 150 | 650 | 8 |
| Example 7 | 1%carbon | 2.4 | 1696.7 | 37.3 | 6 | 150 | 630 | 8 |
| Example 8 | 1%carbon | 2.3 | 1602.5 | 37.3 | 6 | 150 | 600 | 9 |
| Example 9 | 1%carbon | 2.2 | 1649.6 | 37.3 | 6 | 150 | 600 | 8 |
| Example 10 | 1%carbon | 2.2 | 1665.3 | 37.3 | 6 | 150 | 600 | 9 |
| Example 11 | 1.5%carbon | 2.3 | 1629.0 | 56.1 | 6 | 150 | 600 | 9 |
| Example 12 | 2%carbon | 2.4 | 1634.6 | 74.7 | 6 | 150 | 630 | 8 |
| Example 13 | 2%carbon | 2.5 | 1634.2 | 74.6 | 6 | 150 | 650 | 8 |
| Example 14 | 2.5%carbon | 2.7 | 1665.5 | 93.3 | 6 | 150 | 680 | 7 |
| Example 15 | 2%carbon | 2.8 | 1642.6 | 74.7 | 6 | 150 | 680 | 8 |
| Example 16 | 1%carbon | 2.7 | 1666.2 | 37.3 | 6 | 150 | 680 | 7 |
| Example 17 | 1.5%carbon | 2.3 | 1634.8 | 56.0 | 6 | 150 | 600 | 9 |
| Example 18 | 1%carbon | 2.6 | 1633.0 | 37.3 | 6 | 150 | 650 | 7 |
| Example 19 | 1.5%carbon | 2.4 | 1665.2 | 56.0 | 6 | 150 | 630 | 8 |
| Example 20 | 1.5%carbon | 2.2 | 1634.8 | 56.0 | 6 | 150 | 600 | 9 |
| Example 21 | 1%carbon | 2.2 | 1666.4 | 37.3 | 6 | 150 | 600 | 9 |
| Example 22 | 1%carbon | 2.3 | 1721.4 | 37.3 | 6 | 150 | 600 | 9 |
| Example 23 | 1%carbon | 2.4 | 1690.0 | 37.3 | 6 | 150 | 630 | 8 |
| Example 24 | 5.5%carbon | 2.6 | 1666.4 | 205.4 | 6 | 150 | 650 | 7 |
| Example 25 | 1%carbon | 2.4 | 1635.9 | 37.4 | 6 | 150 | 630 | 8 |
| Example 26 | 1%carbon | 2.3 | 1631.3 | 37.3 | 6 | 150 | 600 | 9 |
| Example 27 | 1.5%carbon | 2.1 | 1631.9 | 55.9 | 6 | 150 | 600 | 6 |
| Example 28 | 1%carbon | 0.07 | 1668.3 | 37.4 | 6 | 80 | 600 | 6 |
| Example 29 | 1%carbon | 13 | 1668.3 | 37.4 | 6 | 150 | 850 | 10 |
| Note: Comparative Examples 1-2 and 4-10 relate to the amount of the added core, Comparative Examples 3 and 11 relate to the amount of the added material which has been covered by the first coating layer. | | | | | | | | |

**Table 7. Examination of the material for the first coating layer**

| No. | Material for the first coating layer | Preparation of the suspension for the first coating layer |
|---|---|---|
| Example 30 | Crystalline Li₂MgP₂O₇ | Dissolving 7.4g lithium carbonate, 8.4g magnesium carbonate, 23.0g ammonium dihydrogen phosphate and 12.6g oxalic acid dihydrate in 500 mL of deionized water at a controlled pH of 5, and then stirring and fully reacting for 2 hours to obtain a solution, after which the solution was warmed to 80°C and maintained at this temperature for 4 hours to obtain a suspension |
| Example 31 | Crystalline Li₂CoP₂O₇ | Dissolving 7.4g lithium carbonate, 15.5g cobalt sulfate, 23.0g ammonium dihydrogen phosphate and 12.6g oxalic acid dihydrate in 500 mL of deionized water at a controlled pH of 5, and then stirring and fully reacting for 2 hours to obtain a solution, after which the solution was warmed to 80°C and maintained at this temperature for 4 hours to obtain a suspension |
| Example 32 | Crystalline Li₂CuP₂O₇ | Dissolving 7.4g lithium carbonate, 16.0g copper sulfate, 23.0g ammonium dihydrogen phosphate and 12.6g oxalic acid dihydrate in 500 mL of deionized water at a controlled pH of 5, and then stirring and fully reacting for 2 hours to obtain a solution, after which the solution was warmed to 80°C and maintained at this temperature for 4 hours to obtain a suspension |
| Example 33 | Crystalline Li₂ZnP₂O₇ | Dissolving 7.4g lithium carbonate, 12.5g zinc carbonate,23.0g ammonium dihydrogen phosphate and 12.6g oxalic acid dihydrate in 500 mL of deionized water at a controlled pH of 5, and then stirring and fully reacting for 2 hours to obtain a solution, after which the solution was warmed to 80°C and maintained at this temperature for 4 hours to obtain a suspension |
| Example 34 | Crystalline TiP₂O₇ | Dissolving 24.0g titanium sulfate, 23.0g ammonium dihydrogen phosphate and 12.6g oxalic acid dihydrate in 500 mL of deionized water at a controlled pH of 5, and then stirring and fully reacting for 2 hours to obtain a solution, after which the solution was warmed to 80°C and maintained at this temperature for 4 hours to obtain a suspension |
| Example 35 | Crystalline Ag₄P₂O₇ | Dissolving 67.9g silver Nitrate, 23.0g ammonium dihydrogen phosphate and 25.2goxalic acid dihydrate in 500 mL of deionized water at a controlled pH of 5, and then stirring and fully reacting for 2 hours to obtain a solution, after which the solution was warmed to 80°C and maintained at this temperature for 4 hours to obtain a suspension |
| Example 36 | Crystalline ZrP₂O₇ | Dissolving 56.6g zirconium sulfate, 23.0g ammonium dihydrogen phosphate and 25.2g oxalic acid dihydrate in 500 mL of deionized water at a controlled pH of 5, and then stirring and fully reacting for 2 hours to obtain a solution, after which the solution was warmed to 80°C and maintained at this temperature for 4 hours to obtain a suspension |

**Table 8. Examination of materials for the second coating layer**

| No. | Material for the second coating layer | Preparation of the the second coating layer suspension |
|---|---|---|
| Example 37 | Crystalline Cu₃(PO₄)₂ | Dissolving 48.0g copper sulfate, 23.0g ammonium dihydrogen phosphate, 37.8g oxalic acid dihydrate in 1500mL of deionized water, then stirring and fully reacting for 6 hours to obtain a solution, after which the solution was heated to 120°C and maintained at this temperature for 6 hours to obtain a suspension |
| Example 38 | Crystalline Zn₃(PO₄)₂ | Dissolving 37.6g zinc carbonate, 23.0g ammonium dihydrogen phosphate and 37.8g oxalic acid dihydrate in 1500mL of deionized water, then stirring and fully reacting for 6 hours to obtain a solution, after which the solution was heated to 120°C and maintained at this temperature for 6 hours to obtain a suspension |
| Example 39 | Crystalline Ti₃(PO₄)₄ | Dissolving 72.0g titanium sulfate, 46.0gammonium dihydrogen phosphate and 75.6goxalic acid dihydrate in 1500mL of deionized water, then stirring and fully reacting for 6 hours to obtain a solution, after which the solution was heated to 120°C and maintained at this temperature for 6 hours to obtain a suspension |
| Example 40 | Crystalline Ag₃PO₄ | Dissolving 50.9g silver Nitrate, 11.5gammonium dihydrogen phosphate and 18.9g oxalic acid dihydrate in 1500mL of deionized water, then stirring and fully reacting for 6 hours to obtain a solution, after which the solution was heated to 120°C and maintained at this temperature for 6 hours to obtain a suspension |
| Example 41 | Crystalline Zr₃(PO₄)₄ | Dissolving 85.0g zirconium sulfate,46.0g ammonium dihydrogen phosphate and 37.8g oxalic acid dihydrate in 1500mL of deionized water, then stirring and fully reacting for 6 hours to obtain a solution, after which the solution was heated to 120°C and maintained at this temperature for 6 hours to obtain a suspension |
| Example 42 | Crystalline AlPO₄ | Dissolving 13.3g aluminum chloride, 11.5g ammonium dihydrogen phosphate and 18.9g oxalic acid dihydrate in 1500mL of deionized water, then stirring and fully reacting for 6 hours to obtain a solution, after which the solution was heated to 120°C and maintained at this temperature for 6 hours to obtain a suspension |

**Table 9. Preparation of non-aqueous electrolytic solution (Step 4)**

| No. | Preparation of non-aqueous electrolytic solution |
|---|---|
| Comparative Examples 1-18 | In an argon atmosphere glove box (H₂O<0.1ppm, O₂<0.1ppm), ethyl carbonate (EC), diethyl carbonate (DEC), and dimethyl carbonate (DMC) were uniformly mixed in a volume ratio of 1:1:1 as an organic solvent. Afterwards, 12.5 weight% (based on the total weight of the non-aqueous electrolytic solution) LiPF6 was added and dissolved in the aforementioned organic solvent, and stirred evenly to obtain a non-aqueous electrolytic solution. |
| Example 1-42 | In an argon atmosphere glove box (H₂O<0.1ppm, O₂<0.1ppm), ethyl carbonate (EC), diethyl carbonate (DEC), and dimethyl carbonate (DMC) were uniformly mixed in a volume ratio of 1:1:1 as an organic solvent. Afterwards, 12.5 weight% (based on the total weight of the non-aqueous electrolytic solution) of LiPF₆ and 1 wt % (based on the total weight of the non-aqueous electrolytic solution) of compound H3 were added and dissolved in the organic solvent, and stirred evenly to obtain a non-aqueous electrolytic solution. |
| Example 43 | In an argon atmosphere glove box (H₂O<0.1ppm, O₂<0.1ppm), ethyl carbonate (EC), diethyl carbonate (DEC), and dimethyl carbonate (DMC) were uniformly mixed in a volume ratio of 1:1:1 as an organic solvent. Afterwards, 12.5 weight% (based on the total weight of the non-aqueous electrolytic solution) of LiPF and 1 weight% (based on the total weight of the non-aqueous electrolytic solution) of compound H1 were added and dissolved in the organic solvent and stirred evenly, Obtain a non-aqueous electrolytic solution. |
| Example 44 | In an argon atmosphere glove box (H₂O<0.1ppm, O₂<0.1ppm), ethyl carbonate (EC), diethyl carbonate (DEC), and dimethyl carbonate (DMC) were uniformly mixed in a volume ratio of 1:1:1 as an organic solvent. Afterwards, 12.5 weight% (based on the total weight of the non-aqueous electrolytic solution) of LiPF₆ and 1 weight% (based on the total weight of the non-aqueous electrolytic solution) of compound H2 were added and dissolved in the organic solvent and stirred evenly, Obtain a non-aqueous electrolytic solution. |
| Example 45 | In an argon atmosphere glove box (H₂O<0.1ppm, O₂<0.1ppm), ethyl carbonate (EC), diethyl carbonate (DEC), and dimethyl carbonate (DMC) were uniformly mixed in a volume ratio of 1:1:1 as an organic solvent. Afterwards, 12.5 weight% (based on the total weight of the non-aqueous electrolytic solution) of LiPF₆ and 1 weight% (based on the total weight of the non-aqueous electrolytic solution) of compound H5 were added and dissolved in the organic solvent, stirring evenly, Obtain a non-aqueous electrolytic solution. |
| Example 46 | In an argon atmosphere glove box (H₂O<0.1ppm, O₂<0.1ppm), ethyl carbonate (EC), diethyl carbonate (DEC), and dimethyl carbonate (DMC) were uniformly mixed in a volume ratio of 1:1:1 as an organic solvent. Afterwards, 12.5 weight% (based on the total weight of the non-aqueous electrolytic solution) of LiPF₆ and 1 weight% (based on the total weight of the non-aqueous electrolytic solution) of compound H9 were added and dissolved in the organic solvent, and stirred evenly, Obtain a non-aqueous electrolytic solution. |
| Example 47 | In an argon atmosphere glove box (H₂O<0.1ppm, O₂<0.1ppm), ethyl carbonate (EC), diethyl carbonate (DEC), and dimethyl carbonate (DMC) were uniformly mixed in a volume ratio of 1:1:1 as an organic solvent. Afterwards, 12.5 weight% (based on the total weight of the non-aqueous electrolytic solution) of LiPF₆ and 1 weight% (based on the total weight of the non-aqueous electrolytic solution) of compound H11 were added and dissolved in the organic solvent, and stirred evenly, Obtain a non-aqueous electrolytic solution. |
| Example 48 | In an argon atmosphere glove box (H₂O<0.1ppm, O₂<0.1ppm), ethyl carbonate (EC), diethyl carbonate (DEC), and dimethyl carbonate (DMC) were uniformly mixed in a volume ratio of 1:1:1 as an organic solvent. Afterwards, 12.5 weight% (based on the total weight of the non-aqueous electrolytic solution) of LiPF₆ and 1 weight% (based on the total weight of the non-aqueous electrolytic solution) of compound H19 were added and dissolved in the organic solvent, and stirred evenly, Obtain a non-aqueous electrolytic solution. |
| Example 49 | In an argon atmosphere glove box (H₂O<0.1ppm, O₂<0.1ppm), ethyl carbonate (EC), diethyl carbonate (DEC), and dimethyl carbonate (DMC) were uniformly mixed in a volume ratio of 1:1:1 as an organic solvent. Afterwards, 12.5 weight% (based on the total weight of the non-aqueous electrolytic solution) of LiPF₆ and 1 weight% (based on the total weight of the non-aqueous electrolytic solution) of compound H23 were added and dissolved in the organic solvent, and stirred evenly to obtain a non-aqueous electrolytic solution. |
| Example 50 | In an argon atmosphere glove box (H2O<0.1ppm, O₂<0.1ppm), ethyl carbonate (EC), diethyl carbonate (DEC), and dimethyl carbonate (DMC) were uniformly mixed in a volume ratio of 1:1:1 as an organic solvent. Afterwards, 12.5 weight% (based on the total weight of the non-aqueous electrolytic solution) of LiPF6 and 1 weight% (based on the total weight of the non-aqueous electrolytic solution) of compound H28 were added and dissolved in the organic solvent, stirring evenly, Obtain a non-aqueous electrolytic solution. |
| Example 51 | In an argon atmosphere glove box (H₂O<0.1ppm, O₂<0.1ppm), ethyl carbonate (EC), diethyl carbonate (DEC), and dimethyl carbonate (DMC) were uniformly mixed in a volume ratio of 1:1:1 as an organic solvent. Afterwards, 12.5 weight% (based on the total weight of the non-aqueous electrolytic solution) of LiPF₆ and 1 weight% (based on the total weight of the non-aqueous electrolytic solution) of compound H32 were added and dissolved in the organic solvent, stirring evenly, Obtain a non-aqueous electrolytic solution. |
| Example 52 | In an argon atmosphere glove box (H₂O<0.1ppm, O₂<0.1ppm), ethyl carbonate (EC), diethyl carbonate (DEC), and dimethyl carbonate (DMC) were uniformly mixed in a volume ratio of 1:1:1 as an organic solvent. Afterwards, 12.5 weight% (based on the total weight of the non-aqueous electrolytic solution) LiPF₆ and 1 weight% (based on the total weight of the non-aqueous electrolytic solution) compound H36 were added and dissolved in the organic solvent, and stirredevenly to obtain a non-aqueous electrolytic solution. |
| Example 53 | In an argon atmosphere glove box (H₂O<0.1ppm, O₂<0.1ppm), mix ethyl carbonate (EC), diethyl carbonate (DEC), and dimethyl carbonate (DMC) evenly in a volume ratio of 1:1:1 as an organic solvent, afterwards, 12.5% by weight (based on the total weight of the non-aqueous electrolytic solution) of LiPF₆, 1% by weight (based on the total weight of the non-aqueous electrolytic solution) of compound H3, and 1% by weight (based on the total weight of the non-aqueous electrolytic solution) of M16 were added and dissolved in the organic solvent, stirred evenly to obtain the non-aqueous electrolytic solution. |
| Example 54 | In an argon atmosphere glove box (H₂O<0.1ppm, O₂<0.1ppm), mix ethyl carbonate (EC), diethyl carbonate (DEC), and dimethyl carbonate (DMC) evenly in a volume ratio of 1:1:1 as an organic solvent, afterwards, 12.5% by weight (based on the total weight of the non-aqueous electrolytic solution) of LiPF₆, 1% by weight (based on the total weight of the non-aqueous electrolytic solution) of compound H3, and 1% by weight (based on the total weight of the non-aqueous electrolytic solution) of M24 were added and dissolved in the organic solvent, stirred evenly to obtain the non-aqueous electrolytic solution. |
| Example 55 | In an argon atmosphere glove box (H₂O<0.1ppm, O₂<0.1ppm), mix ethyl carbonate (EC), diethyl carbonate (DEC), and dimethyl carbonate (DMC) evenly in a volume ratio of 1:1:1 as an organic solvent, afterwards, 12.5% by weight (based on the total weight of the non-aqueous electrolytic solution) of LiPF₆, 1% by weight (based on the total weight of the non-aqueous electrolytic solution) of compound H3, and 1% by weight (based on the total weight of the non-aqueous electrolytic solution) of M1 were added and dissolved in the organic solvent, stirred evenly to obtain the non-aqueous electrolytic solution. |
| Example 56 | In an argon atmosphere glove box (H₂0<0.1ppm, O₂<0.1ppm), mix ethyl carbonate (EC), diethyl carbonate (DEC), and dimethyl carbonate (DMC) evenly in a volume ratio of 1:1:1 as an organic solvent, afterwards, 12.5% by weight (based on the total weight of the non-aqueous electrolytic solution) of LiPF₆, 1% by weight (based on the total weight of the non-aqueous electrolytic solution) of compound H3, and 1% by weight (based on the total weight of the non-aqueous electrolytic solution) of M15 were added and dissolved in the organic solvent, stirred evenly to obtain the non-aqueous electrolytic solution. |
| Example 57 | In an argon atmosphere glove box (H₂0<0.1ppm, O₂<0.1ppm), mix ethyl carbonate (EC), diethyl carbonate (DEC), and dimethyl carbonate (DMC) evenly in a volume ratio of 1:1:1 as an organic solvent, afterwards, 12.5% by weight (based on the total weight of the non-aqueous electrolytic solution) of LiPF₆, 1% by weight (based on the total weight of the non-aqueous electrolytic solution) of compound H3, and 1% by weight (based on the total weight of the non-aqueous electrolytic solution) of lithium difluorophosphate were added and dissolved in the organic solvent, stirred evenly to obtain the non-aqueous electrolytic solution. |
| Example 58 | In an argon atmosphere glove box (H₂O<0.1ppm, O₂<0.1ppm), mix ethyl carbonate (EC), diethyl carbonate (DEC), and dimethyl carbonate (DMC) evenly in a volume ratio of 1:1:1 as an organic solvent, afterwards, 12.5% by weight (based on the total weight of the non-aqueous electrolytic solution) of LiPF₆, 1% by weight (based on the total weight of the non-aqueous electrolytic solution) of compound H3, and 1% by weight (based on the total weight of the non-aqueous electrolytic solution) of lithium difluorodioxalate phosphate were added and dissolved in the aforementioned organic solvent, stirred evenly to obtain the non-aqueous electrolytic solution. |
| Example 59 | In an argon atmosphere glove box (H₂O<0.1ppm, O₂<0.1ppm), mix ethyl carbonate (EC), diethyl carbonate (DEC), and dimethyl carbonate (DMC) evenly in a volume ratio of 1:1:1 as an organic solvent, afterwards, 12.5 weight% (based on the total weight of the non-aqueous electrolytic solution) of LiPF₆, 1 weight% (based on the total weight of the non-aqueous electrolytic solution) of compound H3, and 1 weight% (based on the total weight of the non-aqueous electrolytic solution) of lithium difluorooxalate borate were added and dissolved in the aforementioned organic solvent, stirred evenly to obtain the non-aqueous electrolytic solution. |
| Example 60 | In an argon atmosphere glove box (H₂O<0.1ppm, O₂<0.1ppm), mix ethyl carbonate (EC), diethyl carbonate (DEC), and dimethyl carbonate (DMC) evenly in a volume ratio of 1:1:1 as an organic solvent, afterwards, 12.5% by weight (based on the total weight of the non-aqueous electrolytic solution) LiPF₆, 1% by weight (based on the total weight of the non-aqueous electrolytic solution) compound H3, 1% by weight (based on the total weight of the non-aqueous electrolytic solution) M16, and 1% by weight (based on the total weight of the non-aqueous electrolytic solution) VC were added and dissolved in the organic solvent, stirred evenly to obtain the non-aqueous electrolytic solution. |
| Example 61 | In an argon atmosphere glove box (H₂O<0.1ppm, O₂<0.1ppm), mix ethyl carbonate (EC), diethyl carbonate (DEC), and dimethyl carbonate (DMC) evenly in a volume ratio of 1:1:1 as an organic solvent, afterwards, 12.5% by weight (based on the total weight of the non-aqueous electrolytic solution) LiPF₆, 1% by weight (based on the total weight of the non-aqueous electrolytic solution) compound H3, 1% by weight (based on the total weight of the non-aqueous electrolytic solution) M16, and 1% by weight (based on the total weight of the non-aqueous electrolytic solution) VEC were added and dissolved in the organic solvent, stirred evenly to obtain the non-aqueous electrolytic solution. |
| Example 62 | In an argon atmosphere glove box (H₂0<0.1ppm, O₂<0.1ppm), mix ethyl carbonate (EC), diethyl carbonate (DEC), and dimethyl carbonate (DMC) evenly in a volume ratio of 1:1:1 as an organic solvent, afterwards, 12.5% by weight (based on the total weight of the non-aqueous electrolytic solution) LiPF₆, 1% by weight (based on the total weight of the non-aqueous electrolytic solution) compound H3, 1% by weight (based on the total weight of the non-aqueous electrolytic solution) M16, and 1% by weight (based on the total weight of the non-aqueous electrolytic solution) FEC were added and dissolved in the organic solvent, stirred evenly to obtain the non-aqueous electrolytic solution. |
| Example 63 | In an argon atmosphere glove box (H₂O<0.1ppm, O₂<0.1ppm), mix ethyl carbonate (EC), diethyl carbonate (DEC), and dimethyl carbonate (DMC) evenly in a volume ratio of 1:1:1 as an organic solvent, afterwards, 12.5% by weight (based on the total weight of the non-aqueous electrolytic solution) LiPF₆, 0.01% by weight (based on the total weight of the non-aqueous electrolytic solution) compound H3, and 1% by weight (based on the total weight of the non-aqueous electrolytic solution) M16 were added and dissolved in the aforementioned organic solvent, stirred evenly to obtain the non-aqueous electrolytic solution. |
| Example 64 | In an argon atmosphere glove box (H₂0<0.1ppm, O₂<0.1ppm), mix ethyl carbonate (EC), diethyl carbonate (DEC), and dimethyl carbonate (DMC) evenly in a volume ratio of 1:1:1 as an organic solvent, afterwards, 12.5% by weight (based on the total weight of the non-aqueous electrolytic solution) LiPF₆, 0.1% by weight (based on the total weight of the non-aqueous electrolytic solution) compound H3, and 1% by weight (based on the total weight of the non-aqueous electrolytic solution) M16 were added and dissolved in the organic solvent, stirred evenly to obtain the non-aqueous electrolytic solution. |
| Example 65 | In an argon atmosphere glove box (H₂O<0.1ppm, O₂<0.1ppm), mix ethyl carbonate (EC), diethyl carbonate (DEC), and dimethyl carbonate (DMC) evenly in a volume ratio of 1:1:1 as an organic solvent, afterwards, 12.5% by weight (based on the total weight of the non-aqueous electrolytic solution) LiPF₆, 0.3% by weight (based on the total weight of the non-aqueous electrolytic solution) compound H3, and 1% by weight (based on the total weight of the non-aqueous electrolytic solution) M16 were added and dissolved in the organic solvent, stirred evenly to obtain the non-aqueous electrolytic solution. |
| Example 66 | In an argon atmosphere glove box (H₂O<0.1ppm, O₂<0.1ppm), mix ethyl carbonate (EC), diethyl carbonate (DEC), and dimethyl carbonate (DMC) evenly in a volume ratio of 1:1:1 as an organic solvent, afterwards, 12.5% by weight (based on the total weight of the non-aqueous electrolytic solution) of LiPF₆, 5% by weight (based on the total weight of the non-aqueous electrolytic solution) of compound H3, and 1% by weight (based on the total weight of the non-aqueous electrolytic solution) of M16 were added and dissolved in the organic solvent, stirred evenly to obtain the non-aqueous electrolytic solution. |
| Example 67 | In an argon atmosphere glove box (H₂O<0.1ppm, O₂<0.1ppm), mix ethyl carbonate (EC), diethyl carbonate (DEC), and dimethyl carbonate (DMC) evenly in a volume ratio of 1:1:1 as an organic solvent, afterwards, 12.5% by weight (based on the total weight of the non-aqueous electrolytic solution) of LiPF₆, 8% by weight (based on the total weight of the non-aqueous electrolytic solution) of compound H3, and 1% by weight (based on the total weight of the non-aqueous electrolytic solution) of M16 were added and dissolved in the organic solvent, stirred evenly to obtain the non-aqueous electrolytic solution. |
| Example 68 | In an argon atmosphere glove box (H₂O<0.1ppm, O₂<0.1ppm), mix ethyl carbonate (EC), diethyl carbonate (DEC), and dimethyl carbonate (DMC) evenly in a volume ratio of 1:1:1 as an organic solvent, afterwards, 12.5% by weight (based on the total weight of the non-aqueous electrolytic solution) of LiPF₆, 10% by weight (based on the total weight of the non-aqueous electrolytic solution) of compound H3, and 1% by weight (based on the total weight of the non-aqueous electrolytic solution) of M16 were added and dissolved in the organic solvent, stirred evenly to obtain the non-aqueous electrolytic solution. |
| Example 69 | In an argon atmosphere glove box (H₂O<0.1ppm, O₂<0.1ppm), mix ethyl carbonate (EC), diethyl carbonate (DEC), and dimethyl carbonate (DMC) evenly in a volume ratio of 1:1:1 as an organic solvent, afterwards, 12.5% by weight (based on the total weight of the non-aqueous electrolytic solution) of LiPF₆, 20% by weight (based on the total weight of the non-aqueous electrolytic solution) of compound H3, and 1% by weight (based on the total weight of the non-aqueous electrolytic solution) of M16 were added and dissolved in the organic solvent, stirred evenly to obtain the non-aqueous electrolytic solution. |
| Example 70 | In an argon atmosphere glove box (H₂O<0.1ppm, O₂<0.1ppm), mix ethyl carbonate (EC), diethyl carbonate (DEC), and dimethyl carbonate (DMC) evenly in a volume ratio of 1:1:1 as an organic solvent, afterwards, 12.5% by weight (based on the total weight of the non-aqueous electrolytic solution) LiPF6, 1% by weight (based on the total weight of the non-aqueous electrolytic solution) compound H3, and 0.01%by weight (based on the total weight of the non-aqueous electrolytic solution) M16 were added and dissolved in the aforementioned organic solvent, stirred evenly to obtain the non-aqueous electrolytic solution. |
| Example 71 | In an argon atmosphere glove box (H₂O<0.1ppm, O₂<0.1ppm), mix ethyl carbonate (EC), diethyl carbonate (DEC), and dimethyl carbonate (DMC) evenly in a volume ratio of 1:1:1 as an organic solvent, afterwards, 12.5% by weight (based on the total weight of the non-aqueous electrolytic solution) LiPF₆, 1% by weight (based on the total weight of the non-aqueous electrolytic solution) compound H3, and 0.1% by weight (based on the total weight of the non-aqueous electrolytic solution) M16 were added and dissolved in the organic solvent, stirred evenly to obtain the non-aqueous electrolytic solution. |
| Example 72 | In an argon atmosphere glove box (H₂O<0.1ppm, O₂<0.1ppm), mix ethyl carbonate (EC), diethyl carbonate (DEC), and dimethyl carbonate (DMC) evenly in a volume ratio of 1:1:1 as an organic solvent, afterwards, 12.5% by weight (based on the total weight of the non-aqueous electrolytic solution) LiPF₆, 1% by weight (based on the total weight of the non-aqueous electrolytic solution) compound H3, and 0.3% by weight (based on the total weight of the non-aqueous electrolytic solution) M16 were added and dissolved in the organic solvent, stirred evenly to obtain the non-aqueous electrolytic solution. |
| Example 73 | In an argon atmosphere glove box (H₂O<0.1ppm, O₂<0.1ppm), mix ethyl carbonate (EC), diethyl carbonate (DEC), and dimethyl carbonate (DMC) evenly in a volume ratio of 1:1:1 as an organic solvent, afterwards, 12.5% by weight (based on the total weight of the non-aqueous electrolytic solution) of LiPF₆, 1% by weight (based on the total weight of the non-aqueous electrolytic solution) of compound H3, and 5% by weight (based on the total weight of the non-aqueous electrolytic solution) of M16 were added and dissolved in the organic solvent, stirred evenly to obtain the non-aqueous electrolytic solution. |
| Example 74 | In an argon atmosphere glove box (H₂O<0.1ppm, O₂<0.1ppm), mix ethyl carbonate (EC), diethyl carbonate (DEC), and dimethyl carbonate (DMC) evenly in a volume ratio of 1:1:1 as an organic solvent, afterwards, 12.5% by weight (based on the total weight of the non-aqueous electrolytic solution) of LiPF₆, 1% by weight (based on the total weight of the non-aqueous electrolytic solution) of compound H3, and 8% by weight (based on the total weight of the non-aqueous electrolytic solution) of M16 were added and dissolved in the organic solvent, stirred evenly to obtain the non-aqueous electrolytic solution. |
| Example 75 | In an argon atmosphere glove box (H₂O<0.1ppm, O₂<0.1ppm), mix ethyl carbonate (EC), diethyl carbonate (DEC), and dimethyl carbonate (DMC) evenly in a volume ratio of 1:1:1 as an organic solvent, afterwards, 12.5% by weight (based on the total weight of the non-aqueous electrolytic solution) of LiPF₆, 1% by weight (based on the total weight of the non-aqueous electrolytic solution) of compound H3, and 10% by weight (based on the total weight of the non-aqueous electrolytic solution) of M16 were added and dissolved in the organic solvent, stirred evenly to obtain the non-aqueous electrolytic solution. |
| Example 76 | In an argon atmosphere glove box (H₂0<0.1ppm, O₂<0.1ppm), mix ethyl carbonate (EC), diethyl carbonate (DEC), and dimethyl carbonate (DMC) evenly in a volume ratio of 1:1:1 as an organic solvent, afterwards, 12.5% by weight (based on the total weight of the non-aqueous electrolytic solution) of LiPF₆, 1% by weight (based on the total weight of the non-aqueous electrolytic solution) of compound H3, and 20% by weight (based on the total weight of the non-aqueous electrolytic solution) of M16 were added and dissolved in the organic solvent, stirred evenly to obtain the non-aqueous electrolytic solution. |

### II. Performance evaluation

### 1. Measurement method for lattice change rate

Under a constant temperature environment of 25°C, a positive electrode active material sample was placed in an X-ray diffractometer (Bruker D8 Discover model) and tested at 1°/minute. The test data was organized and analyzed. Referring to the standard PDF card, the lattice constants a0, b0, c0, and v0 (a0, b0, and c0 represent the length size in different directions of a lattice cell, respectively, and v0 represents the volume of lattice cell, which can be directly obtained through XRD refinement results) were calculated.

Using the preparation method of a button battery described in the above Example, the positive electrode active material sample was prepared into a button battery. The button battery was charged at a small rate of 0.05C until the current decreased to 0.01C. Then the positive electrode plate was taken out of the button battery and soaked in DMC for 8 hours. After drying and scraping powder, the particles with a particle size less than 500 nm were obtained by seiving. A sample was taken and the volume of lattice cell v1 was calculated in the same way as the fresh sample was tested above. The lattice change rate (or the change rate of the lattice cell volume)after complete deintercalation and intercalation of lithium, represented by (v0-v1)/v0 × 100%, was shown in the table.

### 2. Measurement method for Li/Mn anti-site defect concentration

The XRD results measured in the "Measurement method for lattice change rate" were compared with the PDF (Powder Diffusion File) card of standard crystal to obtain the Li/Mn anti-site defect concentration. Specifically, the XRD results measured in the "Measurement method for lattice change rate" were imported into the General Structural Analysis System (GSAS) software to automatically obtain refined results, which include the occupancy of different atoms. The Li/Mn anti-site defect concentration was obtained by reading the refined results.

### 3. Measurement method for compaction density

5g of positive electrode active material powder were taken and placed in a special mold for compaction (CARVER mold in the United States, model 13mm), and then the mold was placed on a compaction density instrument. 3T (tonne) of pressure was applied and the thickness of the powders under pressure was read on the equipment (the thickness after pressure relief, the area of the container used for testing being 1540.25mm²). The compaction density was calculated via ρ= m/v.

### 4. Measurement of specific surface area

5 g of the positive electrode active material powder prepared above were taken and tested by using the Tri Star 3020 specific surface area pore size analysis tester from Micromeritics in the United States. Then, the specific surface area was calculated using the BET (Brunauer Emmett Teller) method. The testing was conducted according to GB/T 19587-2017.

### 5. Measurement of surface oxygen valence

5g of the positive electrode active material sample were prepared above taken and prepared into a button battery according to the preparation method of a button battery described in the above Example. The button battery was charged at a low rate of 0.05C until the current decreased to 0.01C. Then the positive electrode plate was taken out of the button battery and soaked in DMC for 8 hours. After drying and scraping powder, the particles with a particle size less than 500 nm were obtained by sieving. The obtained particles were measured with Electron Energy Loss Spectroscopy (EELS, Talos F200S model) to obtain the energy loss near edge structure (ELNES), which can reflect the state density and energy level distribution of elements. Based on the density of states and energy level distribution, the number of occupied electrons was calculated by integrating the density of states in valence band, thereby calculating the surface oxygen valence after charging.

### 6. Measurement method for leaching out of Mn (and Fe doped at Mn site)

At 45 °C, a full battery prepared according to each of the above examples and comparative examples with capacity reduced to 80% after circles was discharged to 2.0 V of cutoff voltage at a rate of 0.1 C. Then the battery was disassembled, the negative electrode plate was taken out. 30 discs of unit areas (1540.25mm²) were randomly taken from the negative electrode plate. Inductively coupled plasma emission spectrum (ICP) was tested by using Agilent ICP-OES730. The amounts of Fe (if Fe was doped at Mn site of the positive electrode active material) and Mn were calculated on the basis of the ICP results, and then the amount of leached- out Mn (and Fe doped at Mn site) after cycling was calculated. The testing standard was based on EPA-6010D-2014.

### 7. Measurement of manganese and phosphorus in positive electrode active material

5g of the positive electrode active material made above was dissolved in 100mL of inverse aqua regia (concentrated hydrochloric acid: concentrated nitric acid=1:3), the content of each element of the solution was tested by using ICP, and then the content of manganese or phosphorus element (amount of manganese or phosphorus element/amount of the positive electrode active material× 100%) was measured and converted, to obtain the weight percentage thereof.

### 8. Measurement method for initial gram capacity of button battery

A button battery prepared in each of the above examples and comparative examples was charged to 4.3V at 0.1C, then charged at a constant voltage of 4.3V until the current was less than or equal to 0.05 mA, then rested for 5 minutes. Then the button battery was discharged at 0.1C to 2.0V. The discharge capacity measured at this moment was the initial gram capacity, denoted as D0.

### 9. Measurement method for 3C charging constant current ratio

Under a constant temperature environment of 25°C, a fresh full battery rested for 5 minutes and was discharged at a rate of 1/3C to 2.5V, and rested for 5 minutes and was charged at 1/3C to 4.3V, and then charged at a constant voltage at 4.3V until the current was less than or equal to 0.05 mA. The full battery rested for 5 minutes, then the charging capacity at this moment was reported as C0. The full battery was discharged at 1/3C to 2.5V, rested for 5 minutes, then was charged at 3C to 4.3V, rested for 5 minutes. The charging capacity at this moment was reported as C1. The 3C charging constant current ratio was C1/C0 × 100%.

The higher the 3C charging constant current ratio, the better the rate performance of the battery.

### 10. Test of gas expansion after 30-day storage at 60°C of full battery

A full battery prepared according to each of the above examples and comparative examples was stored in 100% state of charge (SOC) at 60°C. Before, during, and after storage, the open circuit voltage (OCV) and AC internal impedance (IMP) of the battery were tested to monitor SOC and the volume of the battery was measured. After every 48 hours of storage, the full battery was taken out and rested for 1 hour, and then the open circuit voltage (OCV) and internal impedance (IMP) were tested. After cooling to room temperature, the volume of the battery was measured using the drainage method. The drainage method included measuring the gravity F₁ of the battery separately with a balance that can automatically perform unit conversion with the dial data, and then placing the battery completely in deionized water (with the density of 1g/cm³), measuring the gravity F₂ of the battery at this moment wherein the buoyant force F_{b} of the battery was F₁-F₂, and then according to the Archimedes principle F_{b} = ρ× g × V, the volume of battery was calculated: V=(F₁-F₂)/(ρ×g).

From the OCV and IMP test results, it can be seen that the battery maintains a SOC of 99% or higher throughout the testing process until the end of storage.

After 30 days of storage, the volume of battery was measured, and the percentage increase in battery volume after storage compared to the previous battery volume was calculated.

### 11. Test of cycling performance at 45 °C of full battery

Under a constant temperature environment of 45°C, a full battery was charged at 1C to 4.3V, and then charged at a constant voltage at 4.3V until the current was less than or equal to 0.05 mA. The full battery rested for 5 minutes, then discharged at 1C to 2.5V. The discharging capacity at this moment was reported as D0. The above charging-discharging cycle was repeated until the discharging capacity was reduced to 80% of D0. The number of cycles the battery had undergone at this moment was reported.

### 12. Test for interplanar spacing and angle

1g of each positive electrode active material powder made above was added into a 50mL test tube, and injected 10mL of alcohol with a mass fraction of 75% into the test tube, stirred and dispersed for 30 minutes, and then a clean disposable plastic pipette was used to take an appropriate amount of the above solution and it was added dropwise on a 300-mesh copper mesh, at this time, some of the powder was left on the mesh, and then the mesh was transferred to a TEM (Talos F200s G2) sample chamber with the sample for testing, and the original pictures of TEM test was obtained.

The original images from the above TEM test were opened in DigitalMicrograph software and Fourier transformed (automatically done by the software after clicking on the operation) to obtain the diffraction pattern, and the distance from the diffracted spot to the center of the diffraction pattern was measured to obtain the interplanar spacing, and the angle was calculated according to the Bragg equation.

By comparing the obtained interplanar spacing and the corresponding angle with their standard values, the different substances in the coating layer can be recognized.

### 13. Measurement for the thickness of coating layer

The thickness of the coating layer was tested via FIB by cutting a thin slice with a thickness of about 100 nm from the center of a single particle of the positive electrode active material produced as described above, and then conducting TEM test on the thin slice to obtain the original picture of the TEM test.

The original pictures from the above TEM test were opened in DigitalMicrograph software, and the interplanar spacing and angle information were used to recognize the coating layer and measure the thickness of the coating layer.

The thickness was measured at three locations for the selected particles and averaged.

### 14. Determination of the molar ratio of SP2 and SP3 forms in the carbon of the third coating layer

This test was performed by Raman spectroscopy. The molar ratio of the two forms was confirmed by splitting the peaks of the energy spectrum of the Raman test to obtain I_{d}/I_{g}, with I_{d} being the peak intensity of the SP3 carbon and Ig being the peak intensity of the SP2 carbon.

### 15. Determination of the chemical formula of the core and the composition of different coating layers

The internal microstructure and surface structure of the positive electrode active material were characterized with high spatial resolution by the spherical Aberration Corrected Scanning Transmission Electron Microscope (ACSTEM). In combination with the three-dimensional reconstruction technology, the chemical formula of the core and the compositions of the coating layers of the positive electrode active material were obtained.

Table 10 shows the powder performance of the positive electrode active material and the performance of the prepared positive electrode plate and battery in Examples 1-42 and the Comparative Examples 1-18.

Table 11 shows the thickness of each coating layer and the weight ratio of manganese and phosphorus elements of the positive electrode active material prepared in Examples 1-14 and Comparative Examples 3-4 and 12.

Table 12 shows the crystal plane spacing and angle between the first and second coating layer materials in Examples 1, 30-42.

**Table 10**

| No. | Lattice change rate (%) | Li/Mn anti-site defect concentration (%) | Compaction density (g/cm³) | Surface oxygen valence | Specific surface area of positive electrode active material (m²/g) | 3C charging constant current ratio (%) | Leaching out of Mn and Fe after cycling (ppm) | Capacity of button battery at 0.1C mAh/g | Expansion of battery after 30-day storage at 60°C (%) | Number of cycles at capacity retention of 80% at 45°C |
|---|---|---|---|---|---|---|---|---|---|---|
| Comparative Example 1 | 11.4 | 5.2 | 1.5 | -1.55 | 15 | 50.1 | 2060 | 125.6 | 48.6 | 185 |
| Comparative Example 2 | 10.6 | 3.3 | 1.67 | -1.51 | 15 | 54.9 | 1810 | 126.4 | 47.3 | 243 |
| Comparative Example 3 | 10.8 | 3.4 | 1.64 | -1.64 | 15 | 52.1 | 1728 | 144.7 | 41.9 | 378 |
| Comparative Example 4 | 4.3 | 2.8 | 1.69 | -1.82 | 15 | 56.3 | 1096 | 151.2 | 8.4 | 551 |
| Comparative Example 5 | 2.8 | 2.5 | 1.65 | -1.85 | 15 | 58.2 | 31 | 148.4 | 7.5 | 668 |
| Comparative Example 6 | 3.4 | 2.4 | 1.61 | -1.86 | 15 | 58.4 | 64 | 149.6 | 8.6 | 673 |
| Comparative Example 7 | 4.5 | 2.4 | 1.73 | -1.83 | 15 | 59.2 | 85 | 148.6 | 8.3 | 669 |
| Comparative Example 8 | 2.3 | 2.4 | 1.68 | -1.89 | 15 | 59.3 | 30 | 152.3 | 7.3 | 653 |
| Comparative Example 9 | 2.3 | 2.4 | 1.75 | -1.89 | 15 | 59.8 | 30 | 152.3 | 7.3 | 672 |
| Comparative Example 10 | 2.3 | 2.2 | 1.81 | -1.9 | 15 | 64.1 | 28 | 154.2 | 7.2 | 685 |
| Comparative Example 11 | 2.3 | 2.2 | 1.92 | -1.92 | 15 | 65.4 | 12 | 154.3 | 5.4 | 985 |
| Comparative Example 12 | 2.3 | 2.1 | 1.95 | -1.95 | 15 | 65.5 | 18 | 154.6 | 4.2 | 795 |
| Comparative Example 13 | 11.4 | 5.2 | 1.63 | -1.96 | 15 | 52.4 | 56 | 130.2 | 5.4 | 562 |
| Comparative Example 14 | 8.1 | 3.8 | 1.76 | -1.96 | 15 | 58.3 | 41 | 135.1 | 5.1 | 631 |
| Comparative Example 15 | 2 | 1.8 | 2.13 | -1.96 | 15 | 61.3 | 8 | 154.3 | 3.7 | 1126 |
| Comparative Example 16 | 2 | 1.9 | 1.95 | -1.96 | 15 | 60.5 | 18 | 152.7 | 4.5 | 1019 |
| Comparative Example 17 | 2 | 1.9 | 1.9 | -1.89 | 15 | 60.4 | 24 | 152.4 | 5.1 | 897 |
| Comparative Example 18 | 2.5 | 1.8 | 2.35 | -1.93 | 15 | 70.3 | 7 | 157.2 | 4.2 | 1128 |
| Example 1 | 2.5 | 1.8 | 2.35 | -1.93 | 15 | 75.9 | 5 | 160.3 | 1.7 | 1523 |
| Example 2 | 2.5 | 1.8 | 2.24 | -1.94 | 15 | 75.8 | 5 | 159.4 | 1.5 | 1692 |
| Example 3 | 2.5 | 1.8 | 2.22 | -1.94 | 15 | 75.7 | 5 | 158.5 | 1.4 | 1855 |
| Example 4 | 2.5 | 1.8 | 2.21 | -1.95 | 15 | 75.8 | 3 | 156.8 | 1.2 | 1898 |
| Example 5 | 2.5 | 1.8 | 2.33 | -1.93 | 15 | 75.7 | 5 | 159.8 | 1.2 | 2026 |
| Example 6 | 2.5 | 1.8 | 2.31 | -1.93 | 15 | 75.3 | 4 | 159.3 | 1.1 | 2128 |
| Example 7 | 2.5 | 1.8 | 2.28 | -1.93 | 15 | 73.9 | 3 | 158.9 | 1.0 | 2223 |
| Example 8 | 2.5 | 1.8 | 2.29 | -1.93 | 15 | 74.6 | 8 | 159.5 | 1.4 | 1428 |
| Example 9 | 2.5 | 1.8 | 2.46 | -1.98 | 15 | 79.3 | 5 | 160.8 | 1.2 | 1736 |
| Example 10 | 2.5 | 1.8 | 2.49 | -1.98 | 15 | 81.4 | 5 | 161.0 | 1.0 | 2006 |
| Example 11 | 2.6 | 1.9 | 2.38 | -1.97 | 15 | 78.2 | 5 | 160.4 | 1.4 | 1385 |
| Example 12 | 2.4 | 1.8 | 2.41 | -1.97 | 15 | 80.5 | 4 | 159.4 | 1.0 | 1534 |
| Example 13 | 2.7 | 1.9 | 2.42 | -1.97 | 15 | 81.3 | 5 | 159.7 | 1.4 | 1629 |
| Example 14 | 2.8 | 1.9 | 2.45 | -1.97 | 15 | 82.6 | 3 | 156.9 | 1.5 | 1766 |
| Example 15 | 2.2 | 1.9 | 2.46 | -1.97 | 15 | 80.2 | 3 | 156.9 | 1.5 | 1497 |
| Example 16 | 2.1 | 1.9 | 2.47 | -1.98 | 15 | 78.9 | 5 | 157.3 | 1.5 | 1528 |
| Example 17 | 2.5 | 1.7 | 2.41 | -1.98 | 15 | 81.3 | 4 | 158.5 | 1.8 | 1698 |
| Example 18 | 2.3 | 1.6 | 2.42 | -1.97 | 15 | 82.2 | 4 | 157.4 | 1.9 | 1860 |
| Example 19 | 2.2 | 1.7 | 2.43 | -1.97 | 15 | 82.9 | 4 | 157.4 | 1.9 | 1793 |
| Example 20 | 2.6 | 1.8 | 2.42 | -1.94 | 15 | 81.4 | 4 | 157.0 | 1.3 | 1968 |
| Example 21 | 2.4 | 1.7 | 2.41 | -1.97 | 15 | 82.2 | 4 | 157.6 | 1.4 | 1791 |
| Example 22 | 2.4 | 1.8 | 2.32 | -1.95 | 15 | 77.9 | 2 | 155.1 | 1.1 | 2101 |
| Example 23 | 2.3 | 1.7 | 2.46 | -1.96 | 15 | 82.5 | 3 | 154.4 | 1.0 | 2221 |
| Example 24 | 2.2 | 1.8 | 2.47 | -1.95 | 15 | 82.4 | 3 | 155.1 | 1.0 | 2090 |
| Example 25 | 2.1 | 1.7 | 2.49 | -1.98 | 15 | 84.7 | 3 | 161.8 | 1.2 | 2076 |
| Example 26 | 3.6 | 2.5 | 2.21 | -1.97 | 15 | 60.9 | 7 | 155.3 | 1.9 | 1373 |
| Example 27 | 2.8 | 2.1 | 2.24 | -1.98 | 15 | 81.7 | 5 | 158.5 | 1.5 | 1520 |
| Example 28 | 2.5 | 1.9 | 1.95 | -1.94 | 15 | 60.2 | 8 | 158.0 | 2.6 | 1331 |
| Example 29 | 2.4 | 1.8 | 1.98 | -1.95 | 15 | 75.2 | 6 | 158.7 | 1.8 | 1413 |
| Example 30 | 2.4 | 1.9 | 2.36 | -1.97 | 15 | 75.6 | 14 | 159.3 | 1.9 | 1374 |
| Example 31 | 2.5 | 1.7 | 2.36 | -1.96 | 15 | 77.1 | 11 | 158.7 | 1.8 | 1467 |
| Example 32 | 2.5 | 1.7 | 2.38 | -1.97 | 15 | 76.0 | 13 | 159.0 | 1.7 | 1423 |
| Example 33 | 2.6 | 1.8 | 2.39 | -1.98 | 15 | 76.3 | 21 | 159.3 | 2.1 | 1346 |
| Example 34 | 2.6 | 1.9 | 2.34 | -1.96 | 15 | 78.4 | 14 | 159.5 | 1.8 | 1355 |
| Example 35 | 2.4 | 1.7 | 2.36 | -1.94 | 15 | 78.0 | 10 | 160.7 | 2.0 | 1488 |
| Example 36 | 2.5 | 1.9 | 2.33 | -1.92 | 15 | 78.8 | 13 | 158.9 | 2.2 | 1382 |
| Example 37 | 2.5 | 1.7 | 2.34 | -1.92 | 15 | 75.2 | 16 | 159.2 | 2.0 | 1423 |
| Example 38 | 2.4 | 1.9 | 2.33 | -1.95 | 15 | 74.3 | 24 | 157.8 | 2.4 | 1288 |
| Example 39 | 2.2 | 1.8 | 2.36 | -1.94 | 15 | 76.3 | 22 | 159.5 | 2.3 | 1373 |
| Example 40 | 2.4 | 1.9 | 2.37 | -1.91 | 15 | 78.8 | 28 | 158.9 | 2.1 | 1338 |
| Example 41 | 2.6 | 1.9 | 2.38 | -1.94 | 15 | 77.9 | 24 | 157.9 | 2.0 | 1316 |
| Example 42 | 2.4 | 1.9 | 2.36 | -1.92 | 15 | 78.7 | 14 | 159.9 | 1.7 | 1558 |

**Table 11**

| No. | Thickness of the first coating layer (nm) | Thickness of the second coating layer (nm) | Thickness of the third coating layer (nm) | Content of Mn (wt% ) | Weight ratio of Mn to P |
|---|---|---|---|---|---|
| Comparative Example 3 | 4 | - | 10 | 26.1 | 1.383 |
| Comparative Example 4 | - | - | 5 | 24.3 | 1.241 |
| Comparative Example 12 | - | 7.5 | 5 | 19.6 | 1.034 |
| Example 1 | 2 | 7.5 | 5 | 19.0 | 1.023 |
| Example 2 | 2 | 7.5 | 15 | 18.3 | 1.023 |
| Example 3 | 2 | 7.5 | 20 | 18.0 | 1.023 |
| Example 4 | 2 | 7.5 | 25 | 17.9 | 1.023 |
| Example 5 | 4 | 7.5 | 5 | 18.7 | 1.011 |
| Example 6 | 6 | 7.5 | 5 | 18.3 | 0.999 |
| Example 7 | 10 | 7.5 | 5 | 17.6 | 0.975 |
| Example 8 | 2 | 2.5 | 5 | 19.8 | 1.043 |
| Example 9 | 2 | 10 | 5 | 18.7 | 1.014 |
| Example 10 | 2 | 12.5 | 5 | 18.4 | 1.004 |
| Example 11 | 2 | 6.3 | 7.5 | 19.0 | 1.026 |
| Example 13 | 4 | 5 | 10 | 18.7 | 1.108 |
| Example 14 | 5 | 8.8 | 12.5 | 17.8 | 1.166 |

**Table 12**

| No. | Interplanar spacing of materials for the first coating layer (nm) | Crystal orientation (111) angle of materials for the first coating layer (°) | Interplanar spacing of materials for the second coating layer (nm) | Crystal orientation (111) angle of materilas for the second coating layer (°) |
|---|---|---|---|---|
| Example 1 | 0.303 | 29.496 | 0.348 | 25.562 |
| Example 30 | 0.451 | 19.668 | 0.348 | 25.562 |
| Example 31 | 0.297 | 30.846 | 0.348 | 25.562 |
| Example 32 | 0.457 | 19.456 | 0.348 | 25.562 |
| Example 33 | 0.437 | 20.257 | 0.348 | 25.562 |
| Example 34 | 0.462 | 19.211 | 0.348 | 25.562 |
| Example 35 | 0.450 | 19.735 | 0.348 | 25.562 |
| Example 36 | 0.372 | 23.893 | 0.348 | 25.562 |
| Example 37 | 0.303 | 29.496 | 0.374 | 23.789 |
| Example 38 | 0.303 | 29.496 | 0.360 | 24.710 |
| Example 39 | 0.303 | 29.496 | 0.350 | 25.428 |
| Example 40 | 0.303 | 29.496 | 0.425 | 20.885 |
| Example 41 | 0.303 | 29.496 | 0.356 | 24.993 |
| Example 42 | 0.303 | 29.496 | 0.244 | 36.808 |

As can be seen from Table 10, by doping and modifying lithium manganese phosphate and multilayer coating layer of lithium manganese phosphate, the positive electrode active material obtained achieved smaller lattice change rate, smaller Li/Mn reverse defect concentration, higher compaction density, surface oxygen valence closer to -2 valence, less Mn and Fe dissolution after cycling, and better battery performance, such as better high-temperature cycling performance and high-temperature storage performance. The presence of the first additive in non-aqueous electrolytic solutions is beneficial for reducing the dissolution of the first and second coating layers, reducing the catalytic oxidation effect of the third coating layer, and further improving the high-temperature cycling performance and high-temperature storage performance of the battery.

As can be seen from Table 11, by doping and three-layaer covering the manganese and phosphorus sites of the lithium manganese iron phosphate (containing 35% manganese and about 20% phosphorus), the content of manganese in the positive electrode active material and the ratio of manganese to phosphorus by weight wre significantly reduced; furthermore, comparing the Examples 1-14 with the corresponding Comparative Examples 3, 4, and 12, and combining with Table 10, it can be seen that the decrease of manganese and phosphorus in the positive electrode active material resulted in a decrease in the leaching out of manganese ions and iron ions as well as an improvement in the performance of the battery prepared therefrom.

Examples 30-42 have the same conditions as Example 1, except that the first or second coating layer material is different from Example 1. In view of Examples 30-42, it can be seen that using the first and second coating layers containing other elements within the scope of the present application also obtained positive electrode active materials with good performance and achieved good battery performance results. From Table 12, it can be seen that the crystal plane spacing and angle between the first and second coating layers of the present application are within the range described in the present application.

Examples 43-76 have the same conditions as Example 1, unless the preparation proce ss of the water electrolyte is different from Example 1. Table 13 shows the performance of the battery prepared in Examples 43-62. Table 14 shows the performance of the battery prepared in Examples 63-76.

**Table 13**

| No. | First additive | | Second additive | | Third additive | | 3C charging constant current ratio (%) | Leaching out of Mn and Fe after cycling (ppm) | Capacity of button battery at 0.1C mAh/g | Expansion of battery after 30-day storage at 60°C (%) | Number of cycles at capacity retention of 80% at 45°C |
|---|---|---|---|---|---|---|---|---|---|---|---|
| | Type | W1 (wt %) | Type | W2 (wt %) | Type | W3 (wt %) | | | | | |
| Example 43 | H1 | 1 | / | / | / | / | 74.1 | 5 | 159.3 | 2.3 | 1454 |
| Example 44 | H2 | 1 | / | / | / | / | 74.5 | 5 | 159.6 | 2.1 | 1475 |
| Example 45 | H5 | 1 | / | / | / | / | 75.3 | 5 | 160.1 | 1.8 | 1502 |
| Example 46 | H9 | 1 | / | / | / | / | 73.8 | 5 | 159.1 | 2.5 | 1432 |
| Example 47 | H11 | 1 | / | / | / | / | 70.9 | 6 | 157.6 | 3.8 | 1203 |
| Example 48 | H19 | 1 | / | / | / | / | 70.4 | 6 | 157.3 | 4.0 | 1178 |
| Example 49 | H23 | 1 | / | / | / | / | 73.4 | 5 | 158.5 | 2.8 | 1345 |
| Example 50 | H28 | 1 | / | / | / | / | 72.3 | 6 | 158.3 | 3.2 | 1311 |
| Example 51 | H32 | 1 | / | / | / | / | 74.9 | 5 | 160.1 | 1.9 | 1497 |
| Example 52 | H36 | 1 | / | / | / | / | 71.2 | 6 | 157.9 | 3.6 | 1245 |
| Example 53 | H3 | 1 | M16 | 1 | / | / | 85.1 | 5 | 162.9 | 0.5 | 1867 |
| Example 54 | H3 | 1 | M24 | 1 | / | / | 84.3 | 5 | 162.5 | 0.6 | 1801 |
| Example 55 | H3 | 1 | M1 | 1 | / | / | 83.1 | 5 | 161.4 | 0.8 | 1743 |
| Example 56 | H3 | 1 | M15 | 1 | / | / | 81.9 | 5 | 160.1 | 1.2 | 1701 |
| Example 57 | H3 | 1 | Lithium difluorophosphate | 1 | / | / | 84.9 | 5 | 162.7 | 0.6 | 1823 |
| Example 58 | H3 | 1 | Lithium difluorodioxalate phosphate | 1 | / | / | 80.3 | 5 | 160.9 | 0.9 | 1723 |
| Example 59 | H3 | 1 | Lithium difluorooxalate borate | 1 | / | / | 78.1 | 5 | 160.6 | 1.5 | 1598 |
| Example 60 | H3 | 1 | M16 | 1 | VC | 1 | 88.2 | 3 | 163.1 | 0.4 | 2134 |
| Example 61 | H3 | 1 | M16 | 1 | VEC | 1 | 86.6 | 4 | 162.9 | 0.5 | 2065 |
| Example 62 | H3 | 1 | M16 | 1 | FEC | 1 | 87.3 | 3 | 163.0 | 0.4 | 2103 |

**Table 14**

| No. | First additive | | Second additive | | W1/W2 | (W1+W2)/(C1+C2+C3) | 3C charging constant current ratio (%) | Leaching out of Mn and Fe after cycling (ppm) | Capacity of button battery at 0.1C mAh/g | Expansion of battery after 30-day storage at 60°C (%) | Number of cycles at capacity retention of 80% at 45 |
|---|---|---|---|---|---|---|---|---|---|---|---|
| | Type | W1 (wt %) | Type | W2 (wt %) | | | | | | | |
| 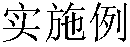 53 | H3 | 1 | M16 | 1 | 1 | 0.40 | 85.1 | 5 | 162.9 | 0.5 | 1867 |
| 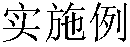 63 | H3 | 0.01 | M16 | 1 | 0.01 | 0.20 | 76.1 | 5 | 160.4 | 1.5 | 1567 |
| 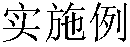 64 | H3 | 0.1 | M16 | 1 | 0.10 | 0.22 | 81.5 | 5 | 160.9 | 1.2 | 1611 |
| 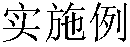 65 | H3 | 0.3 | M16 | 1 | 0.30 | 0.26 | 83.7 | 5 | 161.4 | 0.7 | 1723 |
| 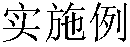 66 | H3 | 5 | M16 | 1 | 5 | 1.20 | 83.2 | 4 | 162.1 | 0.4 | 1756 |
| 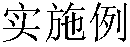 67 | H3 | 8 | M16 | 1 | 8 | 1.80 | 81.7 | 4 | 161.6 | 0.4 | 1634 |
| 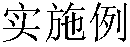 68 | H3 | 10 | M16 | 1 | 10 | 2.20 | 80.0 | 3 | 160.9 | 0.3 | 1598 |
| 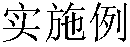 69 | H3 | 20 | M16 | 1 | 20 | 4.20 | 76.0 | 3 | 160.5 | 0.3 | 1545 |
| 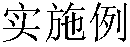 70 | H3 | 1 | M16 | 0.01 | 100 | 0.20 | 76.2 | 5 | 160.6 | 1.5 | 1556 |
| 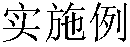 71 | H3 | 1 | M16 | 0.1 | 10 | 0.22 | 80.5 | 5 | 161.4 | 1.2 | 1689 |
| 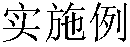 72 | H3 | 1 | M16 | 0.3 | 3.33 | 0.26 | 83.2 | 5 | 162.0 | 0.8 | 1721 |
| 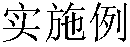 73 | H3 | 1 | M16 | 5 | 0.20 | 1.20 | 83.5 | 4 | 162.3 | 0.5 | 1745 |
| 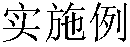 74 | H3 | 1 | M16 | 8 | 0.13 | 1.80 | 81.5 | 4 | 161.9 | 0.4 | 1701 |
| 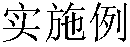 75 | H3 | 1 | M16 | 10 | 0.10 | 2.20 | 80.1 | 3 | 161.1 | 0.4 | 1656 |
| 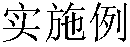 76 | H3 | 1 | M16 | 20 | 0.05 | 4.20 | 76.1 | 3 | 160.5 | 0.3 | 1547 |

In view of Examples 1 and 43-52, it can be seen that the different types of the first additive have slightly different effects on improving battery performance.

In view of Examples 1 and 53-62, it can be seen that when the non-aqueous electrolytic solution also contains an appropriate amount of second and/or third additives, it helps to further improve the battery's capacity, rate performance, high-temperature cycling performance, and high-temperature storage performance.

In view of Examples 53 and 63-76, it can be seen that the coating amount C1 weight% of the first coating layer, the coating amount C2 weight% of the second coating layer, the coating amount C3 weight% of the third coating layer, W1 weight% of the first additive, and W2 weight% of the second additive meet the following requirements: W1/W2 is 0.01 to 20, and can be selected as 0.01 to 10; and/or, when (W1+W2)/(C1+C2+C3) is 0.001 to 2 and can be selected as 0.01 to 1, it helps to further improve the battery's capacity, rate performance, high-temperature cycling performance, and high-temperature storage performance.

It should be noted that this application is not limited to the above embodiments. The above embodiments are only provided as examples, and within the technical solution of the present application, embodiments having substantially the same configuration as the technical idea and exerting the same effects are all included within the technical scope of the present application. In addition, various modifications to the embodiments that can be conceived by those skilled in the art without departing from the scope of the spirit of the present application and other embodiments constructed by combining some constituent elements in the embodiments are also included in the scope of the present application.

## Claims

1. A secondary battery, comprising a positive electrode plate and a non-aqueous electrolytic solution, wherein
the positive electrode plate comprises a positive electrode active material having a core-shell structure, said positive electrode active material comprising a core and a shell covering the core,
said core has a chemical formula of Li₁₊ₓMn_{1-y}A_{y}P_{1-z}R_{z}O₄, in which
x is any value in the range of from -0.100 to 0.100,
y is any value in the range of from 0.001 to 0.500,
z is any value in the range of from 0.001 to 0.100,
A is one or more element(s) selected from the group consisting of Zn, Al, Na, K, Mg, Mo, W, Ti, V, Zr, Fe, Ni, Co, Ga, Sn, Sb, Nb, and Ge, and optionally is one or more element(s) selected from the group consisting of Fe, Ti, V, Ni, Co, and Mg,
R is one or more element(s) selected from the group consisting of B, Si, N, and S, and optionally is one or more element(s) selected from the group consisting of B, Si, N and S, and
x, y and z satisfy the condition that the core as a whole is electrically neutral;
said shell comprises a first coating layer covering said core, a second coating layer covering
said first coating layer, and a third coating layer covering said second coating layer, wherein
said first coating layer comprises a crystalline pyrophosphate LiₐMP₂O₇ and/or M_{b}(P₂O₇)_{c}, in which
0 ≤ a ≤ 2, 1 ≤ b ≤ 4, 1 ≤ c ≤ 6, and a, b and c satisfy the condition that the crystalline pyrophosphate LiₐMP₂O₇ or M_{b}(P₂O₇)_{c} iselectrically neutral,
M, at each occurrence in said crystalline pyrophosphate LiₐMP₂O₇ and M_{b}(P₂O₇)_{c}, each independently is one or more element(s) selected from the group consisting of Fe, Ni, Mg, Co, Cu, Zn, Ti, Ag, Zr, Nb and Al,
said second coating layer comprises crystalline phosphate XPO₄, in which X is one or more element(s) selected from the group consisting of Li, Fe, Ni, Mg, Co, Cu, Zn, Ti, Ag, Zr, Nb and Al; and
said third coating layer is carbon; and
said non-aqueous electrolytic solution comprises a first additive including one or more of the compounds shown in formulae 1-A to 1-D, 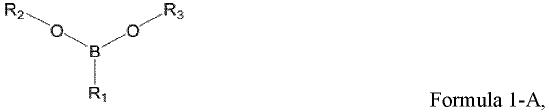 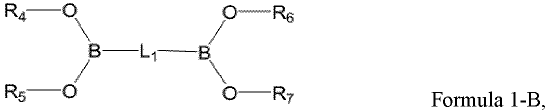 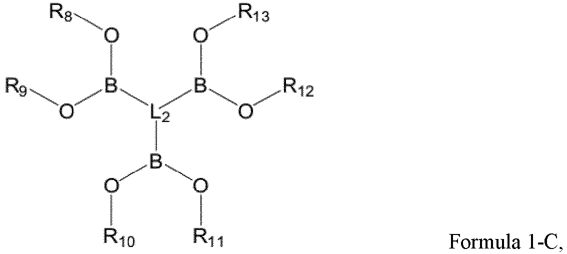 and 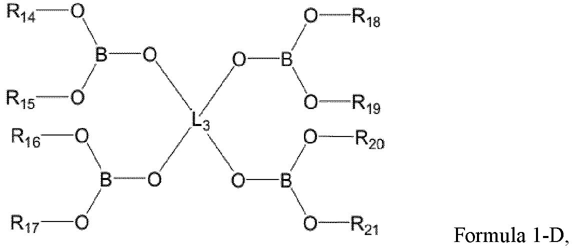 in which
R₁ represents a hydrogen atom or at least one selected from the group consisting of hydroxyl, C1-C18 monovalent alkyl, C1-C18 monovalent alkoxy, C2-C18 monovalent alkoxy alkyl, C3-C18 monovalent cycloalkyl, C2-C18 monovalent heterocyclic alkyl, C6-C18 monovalent aryl, C7-C18 monovalent aryl alkyl, C7-C18 monovalent alkylaryl, C6-C18 monovalent aryloxy, C7-C18 monovalent aryloxy alkyl, C12-C18 monovalent aryl ether group, C2-C18 monovalent heteroaryl, C3-C18 monovalent heteroaryl alkyl, C3-C18 monovalent alkyl heteroaryl, and C1-C18 monovalent silyl;
R₂ to R₂₁ each independently represent a hydrogen atom or at least one selected from the group consisting of C1-C18 monovalent alkyl, C2-C18 monovalent alkoxyalkyl, C3-C18 monovalent cycloalkyl, C2-C18 monovalent oxocycloalkyl, C6-C18 monovalent aryl, C7-C18 monovalent aryl alkyl, C7-C18 monovalent alkylaryl, C7-C18 monovalent aryloxyalkyl, C12-C18 monovalent aryl ether group, C2-C18 monovalent heteroaryl, C3-C18 monovalent heteroaryl alkyl, C3-C18 monovalent alkyl heteroaryl, and C1-C18 monovalent silyl, and when R₂ and R₃ both are hydrogen atoms, R₁ is not hydroxyl;
optionally, R₂ and R₃ can further bond with each other to form a ring structure, R₄ and R₅ can further bond with each other to form a ring structure, R₆ and R₇ can further bond with each other to form a ring structure, R₈ and R₉ can further bond with each other to form a ring structure, R₁₀ and R₁₁ can further bond with each other to form a ring structure, R₁₂ and R₁₃ can further bond with each other to form a ring structure, R₁₄ and R₁₅ can further bond with each other to form a ring structure, R₁₆ and R₁₇ can further bond with each other to form a ring structure, R₁₈ and R₁₉ can further bond with each other to form a ring structure, and R₂₀ and R₂₁ can further bond with each other to form a ring structure;
L₁ represents an oxygen atom or at least one selected from the group consisting of C1-C18 divalent alkyl, C1-C18 oxodialkyl, C6-C18 divalent cycloalkyl, C6-C18 divalent oxo cycloalkyl, C6-C18 divalent aryl, C7-C18 divalent arylalkyl, C7-C18 divalent alkyl aryl, C6-C18 divalent aryloxy, C7-C18 divalent aryloxyalkyl, C12-C18 divalent aryl ether group, C2-C18 divalent heteroaryl, C3-C18 divalent heteroaryl alkyl, and C3-C18 divalent alkyl heteroaryl;
L₂ represents at least one selected from the group consisting of C1-C18 trivalent alkyl, C1-C18 oxo trivalent alkyl, C6-C18 trivalent cycloalkyl, C6-C18 trivalent oxocycloalkyl, C6-C18 trivalent aryl, C7-C18 trivalent arylalkyl, C7-C18 trivalent alkylaryl, C6-C18 trivalent aryloxy, C7-C18 trivalent aryloxyalkyl, C12-C18 trivalent aryl ether group, C3-C18 trivalent heteroaryl, C3-C18 trivalent heteroaryl alkyl, and C3-C18 trivalent alkyl heteroaryl; and
L₃ represents at least one selected from the group consisting of C1-C18 tetravalent alkyl, C1-C18 oxo tetravalent alkyl, C6-C18 tetravalent cycloalkyl, C6-C18 tetravalent oxo cycloalkyl, C6-C18 tetravalent aryl, C7-C18 tetravalent arylalkyl, C7-C18 tetravalent alkylaryl, C7-C18 tetravalent aryloxyalkyl, C12-C18 tetravalent aryl ether group, C4-C18 tetravalent heteroaryl, C4-C18 tetravalent heteroaryl, and C4-C18 tetravalent alkyl heteroaryl.

2. The secondary battery according to claim 1, wherein the first additive satisfies at least one of the following conditions from (1) to (9):
(1) R₂ and R₃ bond with each other to form a ring structure;
(2) at least one of R₁ to R₃ represents C3-C18 monovalent cycloalkyl, C2-C18 monovalent oxocycloalkyl, C6-C18 monovalent aryl, C7-C18 monovalent arylalkyl, C7-C18 monovalent alkylaryl, C7-C18 monovalent aryloxyalkyl, C12-C18 monovalent aryl ether group, C2-C18 monovalent heteroaryl, C3-C18 monovalent heteroarylalkyl, or C3-C18 monovalent alkyl heteroaryl;
(3) R₁ to R3 independently represent C6-C18 monovalent aryl, C7-C18 monovalent arylalkyl, C7-C18 monovalent alkylaryl, C7-C18 monovalent aryloxyalkyl, C12-C18 monovalent aryl ether group, C2-C18 monovalent heteroaryl group, C3-C18 monovalent heteroaryl group, or C3-C18 monovalent alkyl heteroaryl group;
(4) R₄ and R₅, and R₆ and R₇, at least one pair of them, bond with each other to form a ring structure;
(5) L₁ represents an oxygen atom, and R₄ to R₇ independently represent C6-C18 monovalent aryl, C7-C18 monovalent arylalkyl, C7-C18 monovalent alkylaryl, C7-C18 monovalent aryloxyalkyl, C12-C18 monovalent aryl ether group, C2-C18 monovalent heteroaryl, C3-C18 monovalent heteroarylalkyl, or C3-C18 monovalent alkyl heteroaryl;
(6) R₈ and R₉, R₁₀ and R₁₁, and R₁₂ and R₁₃, at least one pair of them, bond to form a ring structure;
(7) L₂ represents C6-C18 trivalent aryl, C7-C18 trivalent arylalkyl, C7-C18 trivalent alkylaryl, C6-C18 trivalent aryloxy, C7-C18 trivalent aryloxyalkyl, C12-C18 trivalent aryl ether group, C3-C18 trivalent heteroaryl group, C3-C18 trivalent heteroaryl alkyl, or C3-C18 trivalent alkyl heteroaryl;
(8) R₁₄ and R₁₅, R₁₆ and R₁₇, R₁₈ and R₁₉, R₂₀ and R₂₁, at least on pair of them, bond to form a ring structure; and
(9) L₃ represents C6-C18 tetravalent aryl, C7-C18 tetravalent arylalkyl, C7-C18 tetravalent alkylaryl, C7-C18 tetravalent aryloxyalkyl, C12-C18 tetravalent aryl ether group, C4-C18 tetravalent heteroaryl group, C4-C18 tetravalent heteroaryl, or C4-C18 tetravalent alkyl heteroaryl.

3. The secondary battery according to claim 1 or 2, wherein the first additive comprises at least one of the following compounds: 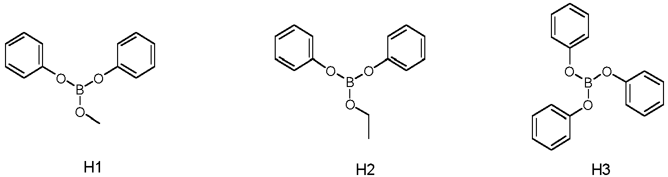 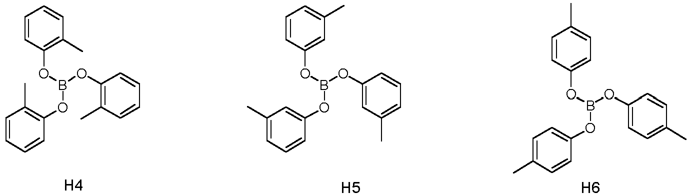 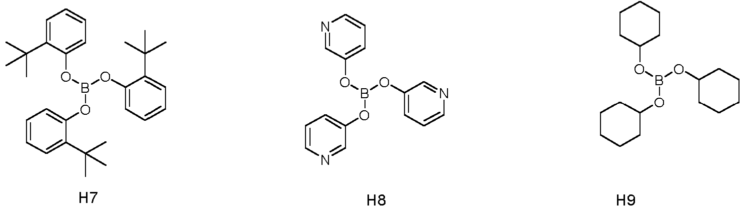 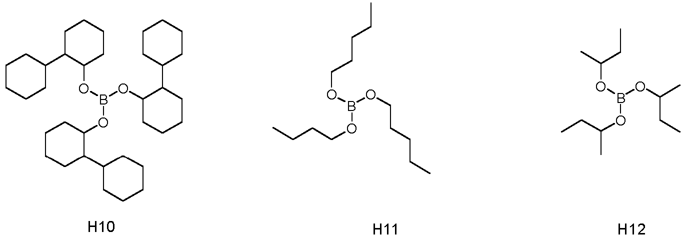 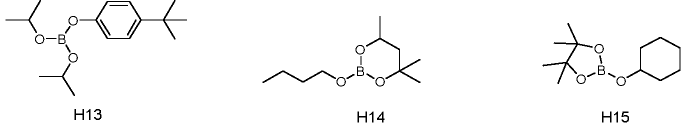 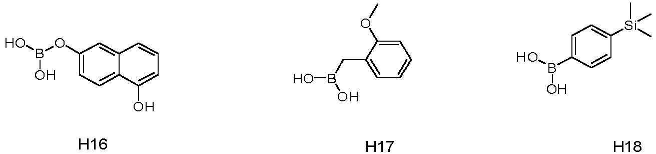 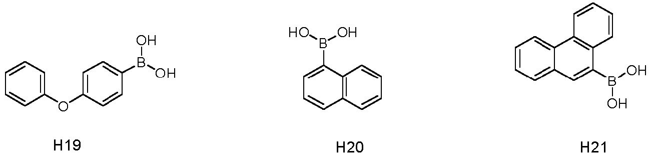 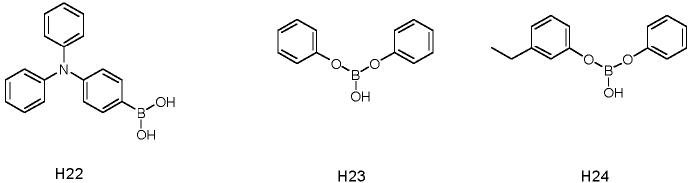 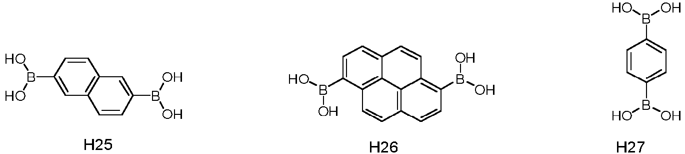 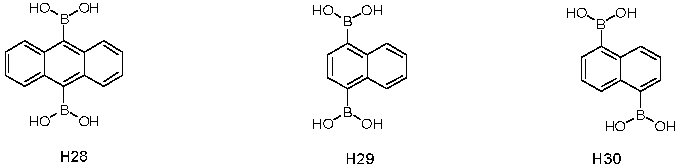 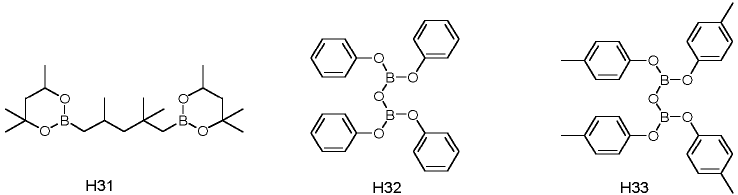 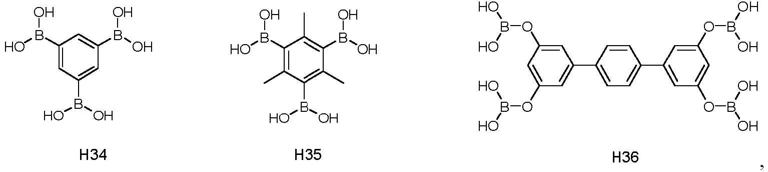
optionally, the first additive comprises at least one selected from the group consisting of H1 to H10, H13 to H15, H31 to H33, and
more optionally, the first additive comprises at least one selected from the group consisting of H1 to H8 and H32 to H33.

4. The secondary battery according to any one of claims 1-3, wherein the non-aqueous electrolytic solution further comprises a second additive comprising one or more selected from the group consisting of sulfonic acid lactones, cyclic sulfate, lithium difluorophosphate, lithium difluorooxalate phosphate, and lithium difluorooxalate borate.

5. The secondary battery according to claim 4, wherein
the sulfonic acid lactones comprise at least one of the compounds as represented by Formula 2-A, 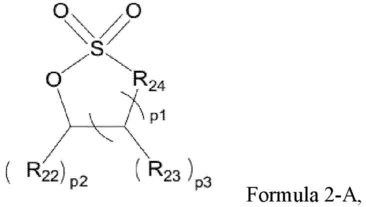 in which
p1 represents 1, 2, or 3, p2 represents 1 or 2, and p3 represents 1 or 2,
R₂₂, at each occurrence, independently represents a hydrogen atom, halogen atom, carboxylic ester group, sulfonic ester group, C1-C6 monovalent alkyl, C1-C6 monovalent haloalkyl, C1-C6 monovalent alkoxy, C1-C6 monovalent haloalkoxy, C2-C6 monovalent alkenyl, or a chain structure or a ring structure formed from more than one of the aforementioned groups linked together with single bonds, and when R₂₂ represents the ring structure, it is bonded to the ring of Formula 2-A via a single bond or shares a carbon atom with the ring of Formula 2-A to form a spiral-ring compound,
R₂₃, at each occurrence, independently represents a hydrogen atom, halogen atom, carboxylic ester group, sulfonic ester group, C1-C6 monovalent alkyl, C1-C6 monovalent haloalkyl, C1-C6 monovalent alkoxy, C1-C6 monovalent haloalkoxy, C2-C6 monovalent alkenyl, or a chain structure or a ring structure formed from more than one of the aforementioned groups linked together with single bonds, and when R₂₃ represents the ring structure, it is bonded to the ring of Formula 2-A via a single bond or shares a carbon atom with the ring of Formula 2-A to form a spiral-ring compound,
R₂₄ represents carbonyl or C(Y¹)₂, wherein Y₁ at each occurrence independently represents a hydrogen atom, halogen atom, carboxylic ester group, sulfonic ester group, C1-C6 monovalent alkyl group, C1-C6 monovalent haloalkyl group, C1-C6 monovalent alkoxy group, C1-C6 monovalent haloalkoxy group, C2-C6 monovalent alkenyl group, C6-C12 monovalent aryl group, or a combination thereof, and
optionally, R₂₂ and R₂₃ can further bond with each other to form a ring structure,
optionally, the sulfonic acid lactone comprises at least one of the following compounds: 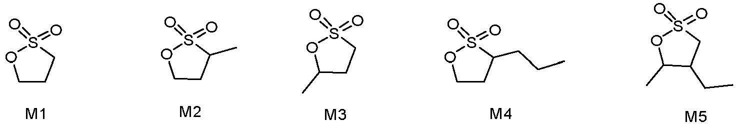 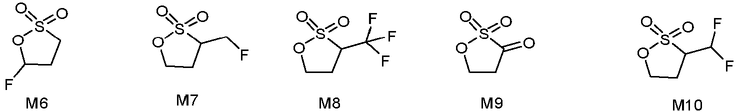 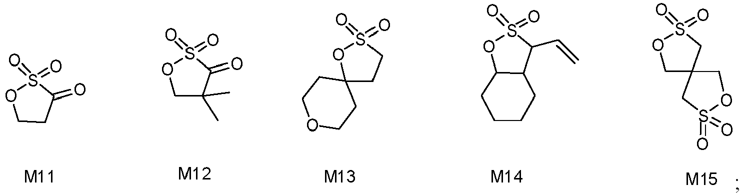 and/or,
the cyclic sulfate comprises at least one of the compounds represented by Formula 2-B, 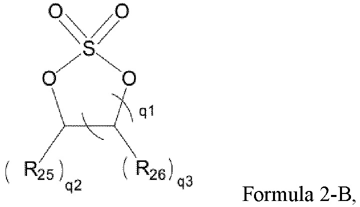
in which
q1 represents 1, 2, or 3, q2 represents 1 or 2, q3 represents 1 or 2,
Rzs, at each occurrence, independently represents a hydrogen atom, halogen atom, carbonyl oxygen atom, carboxylate ester group, sulfate ester group, C1-C6 monovalent alkyl, C1-C6 monovalent haloalkyl, C1-C6 monovalent alkoxy, C1-C6 monovalent haloalkoxy, C2-C6 monovalent alkenyl, or a chain structure or a ring structure formed from more than one of the aforementioned groups linked together with single bonds, and when R₂₅ represents the ring structure, it is bonded to the ring of Formula 2-B via a single bond or shares a carbon atom with the ring of Formula 2-B to form a spiral-ring compound,
R₂₆, at each occurrence, independently represents a hydrogen atom, halogen atom, carboxylic ester group, sulfate group, C1-C6 monovalent alkyl group, C1-C6 monovalent haloalkyl, C1-C6 monovalent alkoxy, C1-C6 monovalent haloalkoxy, C2-C6 monovalent alkenyl, or a chain structure or a ring structure formed from more than one of the aforementioned groups linked together with single bonds, and when R₂₆ represents the ring structure, it is bonded to the ring of Formula 2-B via a single bond or shares a carbon atom with the ring of Formula 2-B to form a spiral-ring compound,
optionally, R₂₅ and R₂₆ can further bond with each other to form a ring structure,
optionally, the cyclic sulfate comprises at least one of the following compounds:

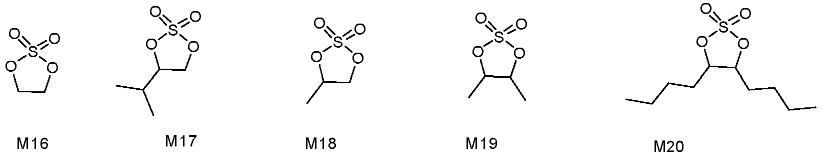

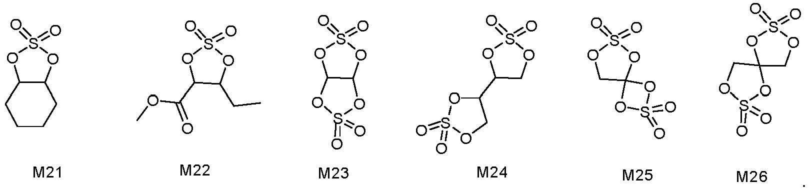

6. The secondary battery according to any one of claims 1-5, wherein,
the first additive has an amount of W1 % by weight of from 0.01 to 20, optionally from 0.1 to 10, and more optionally from 0.3 to 5, based on the total weight of the non-aqueous electrolytic solution; and/or,
the second additive an amount of W2 % by weight of from 0.01 to 20, optionally from 0.1 to 10, and more optionally from 0.3 to 5, based on the total weight of the non-aqueous electrolytic solution; and/or,
the first coating layer has a coating amount of C1 % by weight of from greater than 0 to less than or equal to 6, optionally from greater than 0 to less than or equal to 5.5, and more optionally from greater than 0 to less than or equal to 2, based on the weight of the core; and/or
the second coating layer has a coating amount of C2 % by weight of from greater than 0 to less than or equal to 6, optionally from greater than 0 to less than or equal to 5.5, and more optionally from 2 to 4, based on the weight of the core; and/or
the third coating layer has a coating amount of C3 % by weight of from greater than 0 to less than or equal to 6, optionally from greater than 0 to less than or equal to 5.5, and more optionally from greater than 0 to less than or equal to 2, based on the weight of the core.

7. The secondary battery according to claim 6, wherein
W1/W2 is from 0.01 to 20, and optionally from 0.01 to 10; and/or,
(W1+W2)/(C1+C2+C3) is from 0.001 to 2, and optionally from 0.01 to 1.

8. The secondary battery according to any one of claims 1-7, wherein the non-aqueous electrolytic solution further comprises a third additive comprising one or more selected from the group consisting of cyclic carbonate compounds having unsaturated bond(s), halogenated cyclic carbonate compounds, nitrile compounds, phosphoronitrile compounds, aromatic and halogenated aromatic compounds, isocyanate compounds, anhydride compounds, phosphite compounds, phosphate ester compounds, sulfite compounds or dimethyl disulfonate compounds.

9. The secondary battery according to any one of claims 1-8, wherein,
the first coating layer has a thickness of from 1 nm to 10 nm; and/or
the second coating layer has a thickness of from 2 nm to 15nm; and/or
the third coating layer has a thickness of from 2 nm to 25nm.

10. The secondary battery according to any one of claims 1-9, wherein, in the core,
y and 1-y has a ratio of from 1:10 to 1:1, and optionally from 1:4 to 1:1; and/or,
z and 1-z has a ratio of from 1:9 to 1:999, and optionally from 1:499 to 1:249.

11. The secondary battery according to any one of claims 1-10, wherein,
in the first coating layer, the crystalline pyrophosphate has a crystal plane spacing of from 0.293 nm to 0.470 nm, and has a crystal orientation (111) angle of from 18.00° to 32.00°;
in the second coating layer, the crystalline phosphate has a crystal plane spacing of from 0.244 nm to 0.425 nm, and has a crystal orientation (111) angle of from 20.00° to 37.00°.

12. The secondary battery according to any one of claims 1-11, wherein the carbon in the third coating layer is a mixture of SP2 form carbon and SP3 form carbon, and optionally, SP2 form carbon and SP3 form carbon has a molar ratio of any value in the range of from 0.1 to 10, and optionally any value in the range of from 2.0 to 3.0.

13. The secondary battery according to any one of claims 1-12, wherein, based on the weight of the positive electrode active material,
manganese element has a content of from 10% by weight to 35% by weight, and optionaly from 15% by weight to 30% by weight, and more optionally from 17% by weight to 20% by weight;
phosphorus element has a content of from 12% by weight to 25% by weight, and optionally from 15% by weight to 20% by weight;
optionally, manganese element and phosphorus element has a weight ratio of from 0.90 to 1.25, and optionally from 0.95 to 1.20.

14. The secondary battery according to any one of claims 1-13, wherein the positive electrode active material satisfies at least one of the following conditions from (1) to (5):
(1) the positive electrode active material, the positive electrode active material with a core-shell structure has a lattice change rate of 4% or less, optionally 3.8% or less, and more optionally from 2.0% to 3.8% before and after complete deintercalation and intercalation of lithium;
(2) the positive electrode active material with a core-shell structure has a Li/Mn anti-site defect concentration of 4% or less, optionally 2.2% or less, more optionally 1.5% to 2.2%;
(3) the positive electrode active material has a compaction density of 2.2 g/cm³ or higher, and optionally 2.2 g/cm³ or higher and 2.8 g/cm³ or less;
(4) the positive electrode active material has a surface oxygen valence of -1.90 or less, and optionally from -1.90 to -1.98;
(5) the positive electrode active material has a specific surface area of B m²/g, with B being from 7 to 18, and optionally from 10 to 15.

15. A battery module, comprising a secondary battery according to any one of claims 1-14.

16. A battery pack, comprising the battery module according to claim 15.

17. A powder device, comprising at least one of the secondary battery according to any one of claims 1-14, the battery module according to claim 15, or the battery pack according to claim 16.
